# EUROPEAN PATENT APPLICATION

(11) **EP 3 973 773 A1**
(43) Date of publication of application: **30.03.2022**
(21) Application number: 20198461.4
(22) Date of filing: 28.09.2020
(51) Int. Cl.: A01M 1/20, A01N 27/00

(54) **USE OF DISPENSING DEVICES IN AGRICULTURAL APPLICATIONS**

(71) Applicant: BASF SE, 67056 Ludwigshafen am Rhein (DE)
(72) Inventor: JOHNSON, Joel, SK1 3GG Stockport (GB); NEETHLING, Kenneth Edward, 67059 Ludwigshafen (DE); HILSINGER, Ulla, 67117 Limburgerhof (DE); RESWEBER, Anne, 69130 Ecully Cedex (FR); SANZ-GOMEZ, Jorge, 67117 Limburgerhof (DE)
(74) Representative: BASF IP Association

(57) **Abstract**

Use of a device D in agricultural applications, forestry or home and garden applications, wherein said device D is used for dispensing in the air, as a vapor, an active ingredient that is liquid at ambient temperature,
wherein device D contains:
- an aeration system that contains a pipe (2, 4, 510) opening into the open air and is configured to allow an airflow to pass through the pipe;
- at least one distributor member (8, 208) that is in fluid connection with a storage container and is intended to be supplied with a liquid active ingredient from said storage container, said distributor member containing a porous body (8, 208) that contains micro-channels forming an outlet arranged in said pipe in order to constitute an evaporation zone for the active ingredient therein, wherein the pores present in said porous body are at least a part of the micro-pipes of the distributor member;
- a heating member (11, 211, 132) arranged on or in the distributor member so as to control a flow of the active ingredient through the distributor member.

## Description

The present invention is directed to the use of a device D in agricultural applications, forestry or home and garden applications, wherein said device D is used for dispensing in the air, as a vapor, an active ingredient that is liquid at ambient temperature,
wherein device D contains:
- an aeration system that contains a pipe (2, 4, 510) opening into the open air and is configured to allow an airflow to pass through the pipe;
- at least one distributor member (8, 208) that is in fluid connection with a storage container and is intended to be supplied with a liquid active ingredient from said storage container, said distributor member containing a porous body (8, 208) that contains micro-channels forming an outlet arranged in said pipe in order to constitute an evaporation zone for the active ingredient therein, wherein the pores present in said porous body are at least a part of the micro-pipes of the distributor member;
- a heating member (11, 211, 132) arranged on or in the distributor member so as to control a flow of the active ingredient through the distributor member.

In agricultural applications, a plurality of types of active ingredients can be used to achieve certain effects. For some types of active ingredients it is important that small amounts of such active ingredient are dispensed over longer periods of time.

For example, semiochemicals substances, such as pheromones, are widely used as a mild way of controlling certain insects. Known methods of applying such semiochemicals involve providing containers containing such semiochemicals, where such containers are often made of polymeric material and contain a membrane that allow for constant release of the semiochemicals over time. The drawback of this method is that a high number of these containers need to be distributed in the field to achieve sufficient distribution of the semiochemicals in the field. For example, for the application in vineyards, up to 500 of such containers are typically distributed in the vineyard per hectare in the beginning of the growing season and collected again after the season. Besides the amount of plastics that is being used therefore, this results in significant for labor and other resources.

It remains a challenge to dispense active ingredients in small amounts such that the amount dispensed is sufficiently constant over time and can be adjusted to the active ingredient, the environmental conditions (such as the weather), the crop and the pest.

It was therefore the objective of the present invention to provide a method for applying active ingredients in agricultural applications that address these challenges.

The objective has been achieved by the use of a device D in agricultural applications, forestry or home and garden applications, wherein said device D is used for dispensing in the air, as a vapor, an active ingredient that is liquid at ambient temperature,
wherein device D contains:
- an aeration system that contains a pipe (2, 4, 510) opening into the open air and is configured to allow an airflow to pass through the pipe;
- at least one distributor member (8, 208) that is in fluid connection with a storage container and is intended to be supplied with a liquid active ingredient from said storage container, said distributor member containing a porous body (8, 208) that contains micro-channels forming an outlet arranged in said pipe in order to constitute an evaporation zone for the active ingredient therein, wherein the pores present in said porous body are at least a part of the micro-pipes of the distributor member;
- a heating member (11, 211, 132) arranged on or in the distributor member so as to control a flow of the active ingredient through the distributor member.

Said active ingredient typically has a boiling point of between 30°C and 400°C at atmospheric pressure. Preferably, said active ingredient has a boiling point of between 140°C and 350°C at atmospheric pressure.

In one embodiment, said active ingredient has a viscosity greater than 1 cPa.s at 25°C and less than 1 cPa.s at 60°C. Preferably, said active ingredient has a viscosity greater than 1 cPa.s at 25°C and less than 1 cPa.s at 60°C. Viscosities herein are determined according to CIPAC MT 192 by using a rotational viscometer (apparent viscosity determined at shear rate of 100 s⁻¹).

Said active ingredient can for example be a repellent or a semiochemical substance (such as a pheromone, an allomone or a kairomone, in each case of natural or synthetic origin).

In one preferred embodiment, said active ingredient is a semiochemicals substance. In one especially preferred embodiment, said active ingredient is a pheromone.

In one preferred embodiment, said active ingredient is selected from

| Name | CAS # |
|---|---|
| Bicyclo[3.1.1]hept-3-en-2-one, 4,6,6-trimethyl-, (1S)- | 1196-01-6 |
| Bicyclo[3.1.1]hept-3-en-2-ol, 4,6,6-trimethyl-, [1S-(1a,2b,5a)]- | 18881-04-4 |
| 2,6-Octadienal, 3,7-dimethyl- | 5392-40-5 |
| MIXTURE/ Acetaldehyde, (3,3-dimethylcyclohexylidene)-, (2Z)-and Acetaldehyde, (3,3-dimethylcyclohexylidene)-, (2E)- | |
| 2,7-Octadien-4-ol, 2-methyl-6-methylene- | 14434-41-4 |
| Ethanol, 2-(3,3-dimethylcyclohexylidene)-, (2E)- | 30346-27-1 |
| Cyclobutaneethanol, 1-methyl-2-(1-methylethenyl)-, cis- | 30820-22-5 |
| Ethanol, 2-(3,3-dimethylcyclohexylidene)-, (2Z)- | 26532-23-0 |
| 7-Octen-4-ol, 2-methyl-6-methylene- | 60894-96-4 |
| 5-Nonanone, 4-methyl- | 35900-26-6 |
| 5-Decen-1-ol, (5E)- | 56578-18-8 |
| 5-Decen-1-ol, (5Z)- | 51652-47-2 |
| 5-Nonanol, 4-methyl- | 154170-44-2 |
| 5-Nonanol, 4-methyl- | 154170-44-2 |
| 2,4,6-Decatrienoic acid, methyl ester (2E,4E,6Z)- | 51544-64-0 |
| 2,4-Decadienoic acid, methyl ester, (2E,4Z)- | 4493-42-9 |
| MIXTURE/ Nonan-3-one, 4-6-dimethyl-7-hydroxy-: (4R,6S,7S)-(.+-.)-; (4R,6R,7R)-(.+-.)- | [99945-27-4] and [92999-14-9] |
| 8,10-Dodecadien-1-ol, (8E,10E)- | 33956-49-9 |
| 5-Decen-1-ol, acetate, (5E)- | 38421-90-8 |
| 3-Decen-1-ol, acetate, (3Z)- | 81634-99-3 |
| 5-Decen-1-ol, acetate, (5Z)- | 67446-07-5 |
| 7-Decen-1-ol, acetate, (7Z)- | 13857-03-9 |
| 8-Dodecen-1-ol, (8Z)- | 40642-40-8 |
| 8-Dodecen-1-ol, (8Z)- | 40642-40-8 |
| 9-Dodecen-1-ol, (9Z)- | 35148-18-6 |
| 8,10-Dodecadien-1-ol, acetate, (8E,10E)- | 53880-51-6 |
| 7,9-Dodecadien-1-ol, acetate, (7E,9Z)- | 54364-62-4 |
| MIXTURE/ 11-Tetradecenal, (11E)- and 11-Tetradecenal, (11Z)- | [35746-21-5] and [35237-64-0] |
| 11-Tetradecenal, (11Z)- | 35237-64-0 |
| 9-Tetradecenal, (9Z)- | 53939-27-8 |
| 9,12-Tetradecadien-1-ol, (9Z,12E)- | 51937-00-9 |
| 7-Tetradecen-2-one, (7Z)- | 146955-45-5 |
| 11-Dodecen-1-ol, acetate | 35153-10-7 |
| 7-Dodecen-1-ol, acetate, (7E)- | 16695-41-3 |
| 8-Dodecen-1-ol, acetate, (8E)- | 38363-29-0 |
| 9-Dodecen-1-ol, acetate, (9E)- | 35148-19-7 |
| MIXTURE/ 8-Dodecen-1-ol, 1-acetate, (8E)- and 8-Dodecen-1-ol, 1-acetate, (8Z)- | [38363-29-0] and [28079-04-1] |
| 5-Dodecen-1-ol, acetate, (5Z)- | 16676-96-3 |
| 7-Dodecen-1-ol, acetate, (7Z)- | 14959-86-5 |
| 8-Dodecen-1-ol, acetate, (8Z)- | 28079-04-1 |
| 9-Dodecen-1-ol, acetate, (9Z)- | 16974-11-1 |
| 11-Tetradecen-1-ol, (11 E)- | 35153-18-5 |
| 11-Tetradecen-1-ol, (11Z)- | 34010-15-6 |
| 9-Tetradecen-1-ol, (9Z)- | 35153-15-2 |
| 1,6,10-Dodecatriene, 7,11-dimethyl-3-methylene-, (6E)- | 18794-84-8 |
| MIXTURE/ 4-Tridecen-1-ol, acetate, (4E)- and 4-Tridecen-1-ol, acetate, (4Z)- | [72269-48-8] and [65954-19-0] |
| 4-Tridecen-1-ol, acetate, (4Z)- | 65954-19-0 |
| 11,13-Hexadecadienal, (11Z,13Z)- | 71317-73-2 |
| 9,11-Tetradecadien-1-ol, acetate, (9E,11E)- | 54664-98-1 |
| 9,12-Tetradecadien-1-ol, acetate, (9Z,12E)- | 30507-70-1 |
| 9,11-Tetradecadien-1-ol, acetate, (9Z,11E)- | 50767-79-8 |
| 11-Hexadecenal, (11Z)- | 53939-28-9 |
| 9-Hexadecenal, (9Z)- | 56219-04-6 |
| 9-Hexadecenal, (9Z)- | 56219-04-6 |
| 11-Tetradecen-1-ol, acetate, (11Z)- | 20711-10-8 |
| 11-Tetradecen-1-ol, acetate, (11E)- | 33189-72-9 |
| 9-Tetradecen-1-ol, acetate, (9E)- | 23192-82-7 |
| 7-Tetradecen-1-ol, acetate, (7Z)- | 16974-10-0 |
| 8-Tetradecen-1-ol, acetate, (8Z)- | 35835-80-4 |
| 9-Tetradecen-1-ol, acetate, (9Z)- | 16725-53-4 |
| 11-Hexadecen-1-ol, (11 E)- | 61301-56-2 |
| 11-Hexadecen-1-ol, (11Z)- | 56683-54-6 |
| 8-Hexadecenal, 14-methyl-, (8Z)- | 60609-53-2 |
| 6-acetoxy-5-Hexadecanolide | 81792-36-1 |
| 13-Octadecenal, (13Z)- | 58594-45-9 |
| 11-Hexadecen-1-ol, acetate, (11Z)- | 34010-21-4 |
| 11-Hexadecen-1-ol, acetate, (11E)- | 56218-72-5 |
| MIXTURE/ 2,13-Octadecadien-1-ol, acetate, (2E,13Z)- [and 3,13-Octadecadien-1-ol, acetate, (3E,13Z)- | MIXTURE/ [86252-65-5] and [53120-26-6] |
| 7-Eicosen-11-one, (7Z)- | 63408-44-6 |
| 13-Octadecen-1-ol, acetate, (13Z)- | 60037-58-3 |
| 6-Heneicosen-11-one, (6Z)- | 54844-65-4 |
| 9-Tricosene, (9Z)- | 27519-02-4 |
| 2-Cyclohexen-1-one, 3-methyl- | 1193-18-6 |
| 1-Octen-3-ol | 3391-86-4 |
| 1-Octen-3-ol, (3R)- | 3687-48-7 |
| MIXTURE/: 8-Dodecen-1-ol, acetate, (8Z)-; 8-Dodecen-1-ol, acetate, (8E)-; 8-Dodecen-1-ol, (8Z)- | MIXTURE |
| MIXTURE/ 5-Decen-1-ol, acetate, (5E)- and 5-Decen-1-ol, (5E)- | MIXTURE/ [38421-90-8] and [56578-18-8] |
| MIXTURE/ 11-Tetradecen-1-ol, acetate, (11E)- and 9,11-Tetradecadien-1-ol, acetate, (9E,11E) | MIXTURE/ [33189-72-9] and [54664-98-1] |
| MIXTURE/ cis-2-Isopropenyl-1-methylcyclobutaneethanol, (Z)-2-(3, 3-Dimethyl)-cyclohexylideneethanol, (Z)-(3, 3-Dimethyl)-cyclohexylideneacetaldehyde, (E)-(3,3-Dimethyl)-cyclohexylideneacetaldehyde | M IXTU RE[30820-22-5],[26532-23-0],[26532-24-1], [26532-25-2] |

In one preferred embodiment, said active ingredient is selected from the following list
(1S)-4,6,6-trimethylbicyclo[3.1.1]hept-3-en-2-one;
3,7-dimethyl-bicyclo[3.1.1]hept-3-en-2-ol;
4,6,6-trimethyl-, [1S-(1a,2b,5a)]-2,6-octadienal;
(3,3-dimethylcyclohexylidene)-acetaldehyde;
mixture of (2Z) (3,3-dimethylcyclohexylidene)-acetaldehyde and (2E) (3,3-dimethylcyclohexylidene)-acetaldehyde;
2-methyl-6-methylene-2,7-octadien-4-ol;
(2E) 2-(3,3-dimethylcyclohexylidene)-ethanol;
cis-1-methyl-2-(1-methylethenyl)-cyclobutaneethanol;
(2Z)- 2-(3,3-dimethylcyclohexylidene)-ethanol;
2-methyl-6-methylene-7-Octen-4-ol;
4-methyl-5-Nonanone;
(5E)-5-Decen-1-ol;
(5Z)-5-Decen-1-ol;
4-methyl-5-Nonanol;
(2E,4E,6Z)-2,4,6-Decatrienoic acid methyl ester;
(2E,4Z)-2,4-Decadienoic acid methyl ester;
4,6-dimethyl-7-hydroxy-nonan-3-one;
mixture of (4R,6S,7S)-(.+-.)- 4,6-dimethyl-7-hydroxy-nonan-3-one and (4R,6R,7R)-(.+-.)-4,6-dimethyl-7-hydroxy-nonan-3-one;
(8E,10E)-8,10-Dodecadien-1-ol;
(5E)- 5-Decen-1-ol, acetate;
(3Z)- 3-Decen-1-ol, acetate;
(5Z)- 5-Decen-1-ol, acetate;
(7Z)- 7-Decen-1-ol, acetate;
(8Z)- 8-Dodecen-1-ol;
(9Z)- 9-Dodecen-1-ol;
(8E,10E)-8,10-Dodecadien-1-ol acetate;
(7E,9Z)-7,9-Dodecadien-1-ol acetate;
11-tetradecenal;
Mixture of (11E)- 11-Tetradecenal, and (11Z)-11-Tetradecenal;
(11Z)- 11-Tetradecenal;
(9Z)- 9-Tetradecenal;
(9Z,12E)-9,12-Tetradecadien-1-ol;
(7Z)- 7-Tetradecen-2-one;
11-Dodecen-1-ol acetate;
(7E)-7-Dodecen-1-ol acetate;
(8E)- 8-Dodecen-1-ol acetate;
(9E)-9-Dodecen-1-ol acetate;
8-Dodecen-1-ol -1-acetate;
Mixture of (8E)- 8-Dodecen-1-ol -1-acetate and (8Z)-8-Dodecen-1-ol -1-acetate;
(5Z)- 5-Dodecen-1-ol acetate;
(7Z)- 7-Dodecen-1-ol acetate;
(8Z)- 8-Dodecen-1-ol acetate;
(9Z)- 9-Dodecen-1-ol acetate;
(11E)-11-Tetradecen-1-ol;
(11Z)-11-Tetradecen-1-ol;
(6E)-7,11-dimethyl-3-methylene-1,6,10-Dodecatriene; 4-tridecen-1-ol acetate;
Mixture of (4E)- 4-tridecen-1-ol acetate and (4Z)- 4-tridecen-1-ol acetate; (4Z)-4-Tridecen-1-ol acetate;
(11Z,13Z)-11,13-Hexadecadienal;
(9E,11E)-9,11-Tetradecadien-1-ol acetate;
(9Z,12E)-9,12-Tetradecadien-1-ol acetate;
(9Z,11E)-9,11-Tetradecadien-1-ol acetate;
(11Z)-11-Hexadecenal;
(9Z)-9-Hexadecenal;
(11Z)-11-Tetradecen-1-ol acetate;
(11E)-11-Tetradecen-1-ol acetate;
(9E)-9-Tetradecen-1-ol acetate;
(7Z)-7-Tetradecen-1-ol acetate;
(8Z)-8-Tetradecen-1-ol acetate;
(9Z)-9-Tetradecen-1-ol acetate;
(11E)-11-Hexadecen-1-ol;
(11Z)-11-Hexadecen-1-ol;
(8Z)-14-methyl-8-Hexadecenal;
6-acetoxy-5-Hexadecanolide;
(13Z)-13-Octadecenal;
(11Z)-11-Hexadecen-1-ol acetate;
(11E)-11-Hexadecen-1-ol acetate;
2,13-Octadecadien-1-ol acetate;
Mixture of (2E,13Z)-2,13-Octadecadien-1-ol acetate and (3E,13Z)-2,13-Octadecadien-1-ol acetate;
(7Z)-7-Eicosen-11-one;
(13Z)-13-Octadecen-1-ol acetate;
(6Z)-6-Heneicosen-11-one;
(9Z)-9-Tricosene;
3-methyl-2-Cyclohexen-1-one;
1-Octen-3-ol;
(3R)-1-Octen-3-ol;
Mixture of 8-Dodecen-1-ol acetate and -(8Z)-Dodecen-1-ol;
Mixture of (8Z)-8-Dodecen-1-ol acetate, (8E)-8-Dodecen-1-ol acetate and (8Z)-8-Dodecen-1-ol;
5-Decen-1-ol acetate;
Mixture of (5E)-5-Decen-1-ol acetate and, and (5E)-5-Decen-1-ol; Mixture of (11E)-11-Tetradecen-1-ol acetate, and (9E,11E)-9,11-Tetradecadien-1-ol acetate;
Mixture of Compounds with the CAS numbers [30820-22-5],[26532-23-0],[26532-24-1] and[26532-25-2]; ,
L-carvone; citral; (*E*,*Z*)-7,9-dodecadien-1-yl acetate; ethyl formate; (*E,Z*)-2,4-ethyl decadienoate (pear ester); (*Z,Z,E*)-7,11,13-hexadecatrienal; heptyl butyrate; isopropyl myristate; lavanulyl senecioate; cis-jasmone; 2-methyl 1-butanol; methyl eugenol; methyl jasmonate; (*E,Z*)-2,13-octadecadien-1-ol; (*E,Z*)-2,13-octadecadien-1-ol acetate; (*E,Z*)-3,13-octadecadien-1-ol; (*R*)-1-octen-3-ol; pentatermanone; (*E,Z,Z*)-3,8,11-tetradecatrienyl acetate; (*Z,E*)-9,12-tetradecadien-1-yl acetate; (*Z*)-7-tetradecen-2-one; (*Z*)-9-tetradecen-1-yl acetate; (*Z*)-11-tetradecenal; (*Z*)-11-tetradecen-1-ol; extract of *Chenopodium ambrosiodes;* Neem oil; Quillay extract or mixtures thereof.

In one embodiment, said active ingredient is selected from the preceding list from which extract of *Chenopodium ambrosiodes;* Neem oil; and Quillay extract are excluded.

When mixtures of different isomers or of different pheromones are used, these are typically used in a mass ratio of 1:100 to 100:1, preferably 1:10 to 10:1.

In case of ternary or higher mixtures such ration shall apply with respect to each combination of the mixing partners.

In one embodiment, said active ingredient is selected from
L-carvone, citral, (*E*,*Z*)-7,9-dodecadien-1-yl acetate, ethyl formate, (*E,Z*)-2,4-ethyl decadienoate (pear ester), (*Z,Z,E*)-7,11,13-hexadecatrienal, heptyl butyrate, isopropyl myristate, lavanulyl senecioate, cis-jasmone, 2-methyl 1-butanol, methyl eugenol, methyl jasmonate, (*E,Z*)-2,13-octadecadien-1-ol, (*E,Z*)-2,13-octadecadien-1-ol acetate, (*E,Z*)-3,13-octadecadien-1-ol, (*R*)-1-octen-3-ol, pentatermanone, (*E,Z,Z*)-3,8,11-tetradecatrienyl acetate, (*Z,E*)-9,12-tetradecadien-1-yl acetate, (*Z*)-7-tetradecen-2-one, (*Z*)-9-tetradecen-1-yl acetate, (*Z*)-11-tetradecenal, (*Z*)-11-tetradecen-1-ol, extract of *Chenopodium ambrosiodes,* Neem oil, Quillay extract or mixtures thereof.

In one embodiment, said active ingredient is selected from
L-carvone, citral, (*E*,*Z*)-7,9-dodecadien-1-yl acetate, ethyl formate, (*E,Z*)-2,4-ethyl decadienoate (pear ester), (*Z,Z,E*)-7,11,13-hexadecatrienal, heptyl butyrate, isopropyl myristate, lavanulyl senecioate, cis-jasmone, 2-methyl 1-butanol, methyl eugenol, methyl jasmonate, (*E,Z*)-2,13-octadecadien-1-ol, (*E,Z*)-2,13-octadecadien-1-ol acetate, (*E,Z*)-3,13-octadecadien-1-ol, (*R*)-1-octen-3-ol, pentatermanone, (*E,Z,Z*)-3,8,11-tetradecatrienyl acetate, (*Z,E*)-9,12-tetradecadien-1-yl acetate, (*Z*)-7-tetradecen-2-one, (*Z*)-9-tetradecen-1-yl acetate, (2)-11-tetradecenal, (*Z*)-11-tetradecen-1-olor mixtures thereof.

In one preferred embodiment, said active ingredient is selected from
(E,Z)-7,9-Dodecadienyl acetate;
11-Dodecenyl acetate;
(E)-7-Dodecenyl acetate;
(E)-11-Tetradecenyl acetate;
(E)-9-Tetradecenyl acetate;
(E)-11-Hexadecenyl acetate;
(Z,Z)-7,11-Hexadecadienyl acetate;
(E,Z)-4,7-Tridecadienyl acetate;
(E,Z,Z)-4,7,10-Tridecatrienyl acetate;
(Z,Z,E)-7,11,13-Hexadecatrienal;
(Z,Z)-7,11-Hexadecadienal;
(Z)-11-Hexadecenal;
(Z)-11-Hexadecen-1-ol;
(Z)-11-Hexadecenyl acetate;
(Z)-7-Tetradecenal;
(Z,E)-7,11-Hexadecadienyl acetate;
(Z,E)-7,11-Hexadecadienal;
(Z,E)-9,12-Tetradecadien-1-ol;
(Z)-9-Tetradecen-1-ol;
(Z,E)-9,12-Tetradecadienyl acetate;
(E)-9-Tetradecenyl acetate;
(Z)-7-Dodecenyl acetate;
(E)-9-Tetradecenyl acetate;
(Z,E)-9,11-Tetradecadienyl acetate;
(E,Z)-10,12-Hexadecadienal;
(E,E)-10,12-Hexadecadienal;
(E)-7-Dodecenyl acetate;
(E)-8-Dodecenyl acetate;
(Z)-8-Dodecenyl acetate;
(Z)-7-Dodecenyl acetate;
(E,Z,Z)-3,8,11-Tetradecatrienyl acetate;
(E,Z)-3,8-Tetradecadienyl acetate;
(E,Z)-3,7,11-Trimethyl-2,6,10-dodecatrien-1-ol;
(Z)-3,7,11-Trimethyl-1,6,10-dodecatrien-3-ol;
(E)-3,7-Dimethyl-2,6-octadien-1-ol;
3,7-Dimethyl-6-octen-1-ol;
2-(3,3-dimethylcyclohexylidene)-(2E)-Ethanol;
Cyclobutaneethanol, 1-methyl-2-(1-methylethenyl)-, cis-;
Ethanol, 2-(3,3-dimethylcyclohexylidene)-, (2Z)-;
cis-2-Isopropenyl-1-methylcyclobutaneethanol;
10-Methyltridecan-2-one;
8-Methyldecan-2-yl propionate;
Butyl butyrate;
(E)-2-Butenyl butyrate;
(Z,E)-4,4-(1,5-Dimethyl-4-heptenylidene)-1-methylcyclohexene;
Ethyl 2-propenoate;
4-Hydroxy-3-methoxybenzaldehyde;
(E)-2-Decenal;
1-Methyl-4-(1,5-dimethyl-(Z)-1,4-hexadienyl)-cyclohexene;
(1S,2R,4S)-4-(1,5-Dimethyl-(Z)-1,4-hexadienyl)-1,2-epoxy-1-methylcyclohexane;
(1R,2S,4S)-4-(1,5-Dimethyl-(Z)-1,4-hexadienyl)-1,2-epoxy-1-methylcyclohexane;
Hexyl hexanoate;
(E)-2-Hexenyl hexanoate;
Octyl butyrate;
3-Methyl-6-isopropenyl-9-decenyl acetate;
(Z)-3-Methyl-6-isopropenyl-3,9-decadienyl acetate;
(E)-7,11-Dimethyl-3-methylene-1,6,10-dodecatriene;
(1S,2R,3S)-2-(1-Formylvinyl)-5-methylcyclopentanecarbaldehyde;
(1R,4aS,7S,7aR)-Hexahydro-4,7-dimethylcyclopenta[c]pyran-1-ol;
(4aS,7S,7aR)-Tetrahydro-4,7-dimethylcyclopenta[c]pyranone;
2-Phenylacetonitrile;
(S)-5-Methyl-2-(prop-1-en-2-yl)-hex-4-enyl 3-methyl-2-butenoate;
(S)-5-Methyl-2-(prop-1-en-2-yl)-hex-4-enyl 3-methylbutanoate;
(S)-5-Methyl-2-(prop-1-en-2-yl)-hex-4-en-1-ol;
(Z)-3,7-Dimethyl-2,7-octadienyl propionate;
(E)-3,7-Dimethyl-2,7-octadienyl propionate;
3-Methylene-7-methyl-7-octenyl propionate
or mixtures thereof.

In one preferred embodiment, said active ingredient is selected from
(E,Z)-7,9-Dodecadienyl acetate;
11-Dodecenyl acetate;
(E)-7-Dodecenyl acetate;
(E)-11-Tetradecenyl acetate;
(E)-9-Tetradecenyl acetate;
(E)-11-Hexadecenyl acetate;
(Z,Z)-7,11-Hexadecadienyl acetate;
(E,Z)-4,7-Tridecadienyl acetate;
(E,Z,Z)-4,7,10-Tridecatrienyl acetate;
(Z,Z,E)-7,11,13-Hexadecatrienal;
(Z,Z)-7,11-Hexadecadienal;
(Z)-11-Hexadecenal;
(Z)-11-Hexadecen-1-ol;
(Z)-11-Hexadecenyl acetate;
(Z)-7-Tetradecenal;
(Z,E)-7,11-Hexadecadienyl acetate;
(Z,E)-7,11-Hexadecadienal;
(Z,E)-9,12-Tetradecadien-1-ol;
(Z)-9-Tetradecen-1-ol;
(Z, E)-9,12-Tetradecadienyl acetate;
(E)-9-Tetradecenyl acetate;
(Z)-7-Dodecenyl acetate;
(E)-9-Tetradecenyl acetate;
(Z,E)-9,11-Tetradecadienyl acetate;
(E,Z)-10,12-Hexadecadienal;
(E,E)-10,12-Hexadecadienal;
(E)-7-Dodecenyl acetate;
(E)-8-Dodecenyl acetate;
(Z)-8-Dodecenyl acetate;
(Z)-7-Dodecenyl acetate;
(E,Z,Z)-3,8,11-Tetradecatrienyl acetate;
(E,Z)-3,8-Tetradecadienyl acetate
or mixtures thereof.

In one embodiment, said active ingredients are applied as pure substances. In one embodiment, said active ingredients are used as formulations containing auxiliary components. For examples, said active ingredients, especially pheromones, may contain one or more stabilizers such as BHT (also known as Butylhydroxytoluol, or 2,6-Di-*tert*-butyl-*p*-kresol).

In one embodiment, device D is used according to the invention for controlling insects.

In one embodiment, device D is used according to the invention to disrupt the mating of insects.

In one embodiment, device D is used according to the invention for efficiently combating animal pests e.g. arthropods, gastropods and nematodes including:
insects from the order of Lepidoptera, e.g. *Achroia grisella, Acleris* spp. e.g. *A. fimbriana, A. gloverana, A. variana; Acrolepiopsis assectella, Acronicta major, Adoxophyes* spp. e.g. *A. cyrtosema, A. orana; Aedia leucomelas, Agrotis* spp. e.g. *A. exclamationis, A. fucosa, A. ipsilon, A. orthogoma, A. segetum, A. subterranea; Alabama argillacea, Aleurodicus dispersus, Alsophila pometaria, Ampelophaga rubiginosa, Amyelois transitella, Anacampsis sarcitella, Anagasta kuehniella, Anarsia lineatella, Anisota senatoria, Antheraea pernyi, Anticarsia (=Thermesia)* spp. e.g. *A. gemmatalis; Apamea* spp., *Aproaerema modicella, Archips* spp. e.g. *A. argyrospila, A. fuscocupreanus, A. rosana, A. xyloseanus; Argyresthia conjugella, Argyroploce* spp., *Argyrotaenia spp.* e.g. *A. velutinana; Athetis mindara, Austroasca viridigrisea, Autographa gamma, Autographa nigrisigna, Barathra brassicae, Bedellia* spp., *Bonagota salubricola, Borbo cinnara, Bucculatrix thurberiella, Bupalus piniarius, Busseola* spp., *Cacoecia* spp. e.g. *C. murinana, C. podana; Cactoblastis cactorum, Cadra cautella, Calingo braziliensis, Caloptilis theivora, Capua reticulana, Carposina* spp. e.g. *C. niponensis, C. sasakii; Cephus* spp., *Chaetocnema aridula, Cheimatobia brumata, Chilo* spp. e.g. *C. Indicus, C. suppressalis, C. partellus; Choreutis pariana, Choristoneura spp.* e.g. *C. conflictana, C. fumiferana, C. longicellana, C. murinana, C. occidentalis, C. rosaceana; Chrysodeixis (=Pseudopiusia)* spp. *e.g. C. eriosoma, C. includens; Cirphis unipuncta, Clysia ambiguella, Cnaphalocerus* spp., *Cnaphalocrocis medinalis, Cnephasiaspp., Cochylis hospes, Coleophora* spp., *Colias eurytheme, Conopomorpha* spp., *Conotrachelus* spp., *Copitarsia* spp., *Corcyra cephalonica, Crambus caliginosellus, Crambus teterrellus, Crocidosema (=Epinotia) aporema, Cydalima (=Diaphania) perspectalis, Cydia (=Carpocapsa)* spp. e.g. *C. pomonella, C. latiferreana; Dalaca noctuides, Datana integerrima, Dasychira pinicola, Dendrolimus* spp. e.g. *D. pini, D. spectabilis, D. sibiricus; Desmia funeralis, Diaphania* spp. e.g. *D. nitidalis, D. hyalinata; Diatraea grandiosella, Diatraea saccharalis, Diphthera festiva, Earias* spp. e.g. *E. insulana, E. vittella; Ecdytolopha aurantianu, Egira (=Xylomyges) curialis, Elasmopalpus lignosellus, Eldana saccharina, Endopiza viteana, Ennomos subsignaria, Eoreuma loftini, Ephestia* spp. e.g. *E. cautella, E. elutella, E. kuehniella; Epinotia aporema, Epiphyas postvittana, Erannis tiliaria, Erionota thrax, Etiella* spp., *Eulia* spp., *Eupoecilia ambiguella, Euproctis chrysorrhoea, Euxoa* spp., *Evetria bouliana, Faronta albilinea, Feltia* spp. e.g. *F. subterranean; Galleria mellonella, Gracillaria* spp., *Grapholita* spp. e.g. *G. funebrana, G. molesta, G. inopinata; Halysidota* spp., *Harrisina americana, Hedylepta* spp., *Helicoverpa* spp. e.g. *H. armigera (=Heliothis armigera), H. zea (=Heliothis zea); Heliothis* spp. e.g. *H. assulta, H. subflexa, H. virescens; Hellula* spp. e.g. *H. undalis, H. rogatalis; Helocoverpa gelotopoeon, Hemileuca oliviae, Herpetogramma licarsisalis, Hibernia defoliaria, Hofmannophila pseudospretella, Homoeosoma electellum, Homona magnanima, Hypena scabra, Hyphantria cunea, Hyponomeuta padella, Hyponomeuta malinellus, Kakivoria flavofasciata, Keiferia lycopersicella, Lambdina fiscellaria fiscellaria, Lambdina fiscellaria lugubrosa, Lamprosema indicata, Laspeyresia molesta, Leguminivora glycinivorella, Lerodea eufala, Leucinodes orbonalis, Leucoma salicis, Leucoptera* spp. e.g. *L. coffeella, L. scitella; Leuminivora lycinivorella, Lithocolletis blancardella, Lithophane antennata, Llattia octo (=Amyna axis), Lobesia botrana, Lophocampa* spp., *Loxagrotis albicosta, Loxostege* spp. e.g. *L. sticticalis, L. cereralis; Lymantria* spp. e.g. *L. dispar, L. monacha; Lyonetia clerkella, Lyonetia prunifoliella, Malacosoma* spp. e.g. *M. americanum, M. californicum, M. constrictum, M. neustria; Mamestra* spp. e.g. *M. brassicae, M. configurata; Mamstra brassicae, Manduca* spp. e.g. *M. quinquemaculata, M. sexta; Marasmia spp, Marmara* spp., *Maruca testulalis, Megalopyge lanata, Melanchra picta, Melanitis leda, Mocis* spp. e.g. *M. lapites, M. repanda; Mods latipes, Monochroa fragariae, Mythimna separata, Nemapogon cloacella, Neoleucinodes elegantalis, Nepytia* spp., *Nymphula* spp., *Oiketicus* spp., *Omiodes indicata, Omphisa anastomosalis, Operophtera brumata, Orgyia pseudotsugata, Oria* spp., *Orthaga thyrisalis, Ostrinia* spp. e.g. *O. nubilalis; Oulema oryzae, Paleacrita vernata, Panolis flammea, Parnara* spp., *Papaipema nebris, Papilio cresphontes, Paramyelois transitella, Paranthrene regalis, Paysandisia archon, Pectinophora* spp. e.g. *P. gossypiella; Peridroma saucia, Perileucoptera* spp., e.g. *P. coffeella; Phalera bucephala, Phryganidia californica, Phthorimaea* spp. e.g. *P. operculella; Phyllocnistis citrella, Phyllonorycter* spp. e.g. *P. blancardella, P. crataegella, P. issikii, P. ringoniella; Pieris* spp. e.g. *P. brassicae, P. rapae, P. napi; Pilocrocis tripunctata, Plathypena scabra, Platynota* spp. e.g. *P. flavedana, P. idaeusalis, P. stultana; Platyptilia carduidactyla, Plebejus argus, Plodia interpunctella, Plusia spp, Plutella maculipennis, Plutella xylostella, Pontia protodica, Prays* spp., *Prodenia* spp., *Proxenus lepigone, Pseudaletia* spp. e.g. *P. sequax, P. unipuncta; Pyrausta nubilalis, Rachiplusia nu, Richia albicosta, Rhizobius ventralis, Rhyacionia frustrana, Sabulodes aegrotata, Schizura concinna, Schoenobius* spp., *Schreckensteinia festaliella, Scirpophaga* spp. e.g. *S. incertulas, S. innotata; Scotia segetum, Sesamia* spp. e.g. *S. inferens, Seudyra subflava, Sitotroga cerealella, Sparganothis pilleriana, Spilonota lechriaspis, S. ocellina, Spodoptera (=Lamphygma)* spp. e.g. *S. cosmoides, S. eridania, S. exigua, S. frugiperda, S. latisfascia, S. littoralis, S. litura, S. omithogalli; Stigmella* spp., *Stomopteryx subsecivella, Strymon bazochii, Sylepta derogata, Synanthedon* spp. e.g. S. exitiosa, *Tecia solanivora, Telehin licus, Thaumatopoea pityocampa, Thaumatotibia (=Cryptophiebia) leucotreta, Thaumetopoea pityocampa, Thecla* spp., *Theresimima ampelophaga, Thyrinteina* spp, *Tildenia inconspicuella, Tinea* spp. e.g. *T. cloacella, T. pellionella; Tineolabisselliella, Tortrix* spp. e.g. *T. viridana; Trichophaga tapetzella, Trichoplusia* spp. e.g. *T. ni; Tuta (=Scrobipaipula) absoluta, Udea* spp. e.g. *U. rubigalis, U. rubigalis; Virachola* spp., *Yponomeuta padella, and Zeiraphera canadensis;* insects from the order of **Coleoptera,** e.g. *Acalymma vittatum, Acanthoscehdes obtectus, Adoretus* spp., *Agelastica alni, Agrilus* spp. e.g. *A. anxius, A. planipennis, A. sinuatus; Agriotes* spp. e.g. *A. fuscicollis, A. lineatus, A. obscurus; Alphitobius diaperinus, Amphimallus solstitialis, Anisandrus dispar, Anisoplia austriaca, Anobium punctatum, Anomala corpulenta, Anomala rufocuprea, Anoplophora* spp. e.g. *A. glabripennis; Anthonomus* spp. e.g. *A. eugenii, A. grandis, A. pomorum; Anthrenus* spp., *Aphthona euphoridae, Apion* spp., *Apogonia* spp., *Athous haemorrhoidalis, Atomaria* spp. e.g. *A. linearis; Attagenus* spp., *Aulacophora femoralis, Blastophagus piniperda, Blitophaga undata, Bruchidius obtectus, Bruchus* spp. e.g. *B. lentis, B. pisorum, B. rufimanus; Byctiscus betulae, Callidiellum rufipenne, Callopistria floridensis, Callosobruchus chinensis, Cameraria ohridella, Cassida nebulosa, Cerotoma trifurcata, Cetonia aurata, Ceuthorhynchus* spp. e.g. *C. assimilis, C. napi; Chaetocnema tibialis, Cleonus mendicus, Conoderus* spp. e.g. C. *vespertinus; Conotrachelus nenuphar, Cosmopolites* spp., *Costelytra zealandica, Crioceris asparagi, Cryptolestes ferrugineus, Cryptorhynchus lapathi, Ctenicera* spp. e.g. *C. destructor; Curculio* spp., *Cylindrocopturus* spp., *Cyclocephala* spp., *Dactylispa balyi, Dectes texanus, Dermestes* spp., *Diabrotica* spp. e.g. *D. undecimpunctata, D. speciosa, D. longicornis, D. semipunctata, D. virgifera; Diaprepes abbreviates, Dichocrocis* spp., *Dicladispa armigera, Diloboderus abderus, Diocalandra frumenti (Diocalandra stigmaticollis), Enaphalodes rufulus, Epilachna* spp. e.g. *E. varivestis, E. vigintioctomaculata; Epitrixspp.* e.g. *E. hirtipennis, E. similaris; Eutheola humilis, Eutinobothrus brasiliensis, Faustinus cubae, Gibbium psylloides, Gnathocerus cornutus, Hellula undalis, Heteronychus arator, Hylamorpha elegans, Hylobius abietis, Hylotrupes bajulus, Hypera* spp. e.g. *H. brunneipennis, H. postica; Hypomeces squamosus, Hypothenemus* spp., *lps typographus, Lachnosterna consanguinea, Lasioderma serricorne, Latheticus oryzae, Lathridius* spp., *Lema* spp. e.g. *L. bilineata, L. melanopus; Leptinotarsa* spp. e.g. *L. decemlineata; Leptispa pygmaea, Limonius californicus, Lissorhoptrus oryzophilus, Lixus* spp., *Luperodes* spp., *Lyctus* spp. e.g. *L. bruneus; Liogenys fuscus, Macrodactylus* spp. e.g. *M. subspinosus; Maladera matrida, Megaplatypus mutates, Megascelis* spp., *Melanotus communis, Meligethes* spp. e.g. *M. aeneus; Melolontha* spp. e.g. *M. hippocastani, M. melolontha; Metamasius hemipterus, Microtheca* spp., *Migdolus* spp. e.g. *M. fryanus, Monochamus* spp. e.g. *M. alternatus; Naupactus xanthographus, Niptus hololeucus, Oberia brevis, Oemona hirta, Oryctes rhinoceros, Oryzaephilus surinamensis, Oryzaphagus oryzae, Otiorrhynchus sulcatus, Otiorrhynchus ovatus, Otiorrhynchus sulcatus, Outema melanopus, Oulema oryzae, Oxycetonia jucunda, Phaedon* spp. e.g. *P. brassicae, P. cochleariae; Phoracantha recurva, Phyllobius pyri, Phyllopertha horticola, Phyllophaga* spp. e.g. *P. helleri; Phyllotreta* spp. e.g. *P. chrysocephala, P. nemorum, P. striolata, P. vittula; Phyllopertha horticola, Popillia japonica, Premnotrypes* spp., *Psacothea hilaris, Psylliodes chrysocephala, Prostephanus truncates, Psylliodes* spp., *Ptinus* spp., *Pulga saltona, Rhizopertha dominica, Rhynchophorus* spp. e.g. *R. billineatus, R. ferrugineus, R. palmarum, R. phoenicis, R. vulneratus; Saperda candida, Scolytus schevyrewi, Scyphophorus acupunctatus, Sitona lineatus, Sitophilus* spp. e.g. *S. granaria, S. oryzae, S. zeamais; Sphenophorus* spp. e.g. *S. levis; Stegobium paniceum, Sternechus* spp. e.g. *S. subsignatus; Strophomorphus ctenotus, Symphyletes* spp., *Tanymecus* spp., *Tenebrio molitor, Tenebrioides mauretanicus, Tribolium* spp. e.g. *T. castaneum; Trogoderma* spp., *Tychius* spp., *Xylotrechus* spp. e.g. *X. pyrrhoderus; and, Zabrus* spp. *e.g. Z. tenebrioides;*
insects from the order of Diptera e.g. *Aedes* spp. e.g. *A. aegypti, A. albopictus, A. vexans; Anastrepha ludens, Anopheles* spp. e.g. *A. albimanus, A. crucians, A. freeborni, A. gambiae, A. leucosphyrus, A. maculipennis, A. minimus, A. quadrimaculatus, A. sinensis; Bactrocera invadens, Bibio hortulanus, Calliphora erythrocephala, Calliphora vicina, Ceratitis capitata, Chrysomyia* spp. e.g. *C. bezziana, C. hominivorax, C. macellaria; Chrysops atlanticus, Chrysops discalis, Chrysops silacea, Cochliomyia* spp. e.g. *C. hominivorax; Contarinia* spp. e.g. *C. sorghicola; Cordylobia anthropophaga, Culex* spp. e.g. *C. nigripalpus, C. pipiens, C. quinquefasciatus, C. tarsalis, C. tritaeniorhynchus; Culicoides furens, Culiseta inornata, Culiseta melanura, Cuterebra* spp., *Dacus cucurbitae, Dacus oleae, Dasineura brassicae, Dasineura oxycoccana, Delia* spp. e.g. *D. antique, D. coarctata, D. platura, D. radicum; Dermatobia hominis, Drosophila* spp. e.g. *D. suzukii, Fannia* spp. e.g. *F. canicularis; Gastraphilus* spp. e.g. *G. intestinalis; Geomyza tipunctata, Glossina* spp. e.g. *G. fuscipes, G. morsitans, G. palpalis, G. tachinoides; Haematobia irritans, Haplodiplosis equestris, Hippelates* spp., Hylemyia spp. e.g. *H. platura; Hypoderma* spp. e.g. *H. lineata; Hyppobosca* spp., *Hydrellia philippina, Leptoconops torrens, Liriomyza* spp. e.g. *L. sativae, L. trifoiii; Lucilia* spp. e.g. *L. caprina, L. cuprina, L. sericata; Lycoria pectoralis, Mansonia titillanus, Mayetiola* spp. e.g. *M. destructor; Musca* spp. e.g. *M. autumnalis, M. domestica; Muscina stabulans, Oestrus* spp. e.g. *O. ovis; Opomyza florum, Oscinella* spp. e.g. *O. frit; Orseolia oryzae, Pegomya hysocyami, Phlebotomus argentipes, Phorbia* spp. e.g. *P. antiqua, P. brassicae, P. coarctata; Phytomyza gymnostoma, Prosimulium mixtum, Psila rosae, Psorophora columbiae, Psorophora discolor, Rhagoletis* spp. e.g. *R. cerasi, R. cingulate, R. indifferens, R. mendax, R. pomonella; Rivellia quadrifasciata, Sarcophaga* spp. e.g. *S. haemorrhoidalis; Simulium vittatum, Sitodiplosis mosellana, Stomoxys* spp. e.g. *S. calcitrans; Tabanus* spp. e.g. *T. atratus, T. bovinus, T. lineola, T. similis; Tannia spp., Thecodiplosis japonensis, Tipula oleracea, Tipula paludosa,* and *Wohlfahrtia* spp;
insects from the order of Thysanoptera e.g., *Baliothrips biformis, Dichromothrips corbetti, Dichromothrips* ssp., *Echinothrips americanus, Enneothrips flavens, Frankliniella* spp. e.g. *F. fusca, F. occidentalis, F. tritici; Heliothrips* spp., *Hercinothrips femoralis, Kakothrips* spp., *Microcephalothrips abdominalis, Neohydatothrips samayunkur, Pezothrips kellyanus, Rhipiphorothrips cruentatus, Scirtothrips* spp. e.g. *S. citri, S. dorsalis, S. perseae; Stenchaetothrips spp, Taeniothrips cardamoni, Taeniothrips inconsequens, Thrips* spp. e.g. *T. imagines, T. hawaiiensis, T. oryzae, T. palmi, T. parvispinus, T. tabaci;*
insects from the order of Hemiptera e.g., *Acizziajamatonica, Acrosternumspp.* e.g. *A. hilare;* Acyrthosipon spp. e.g. *A. onobrychis, A. pisum; Adelges laricis, Adelges tsugae, Adelphocoris* spp., e.g. *A. rapidus, A. superbus; Aeneolamia* spp., *Agonoscena* spp., *Aulacorthum solani, Aleurocanthus woglumi, Aleurodes* spp., *Aleurodicus disperses, Aleurolobus barodensis, Aleurothrixus* spp., *Amrasca* spp., *Anasa tristis, Antestiopsis* spp., *Anuraphis cardui, Aonidiella* spp., *Aphanostigma piri, Aphidula nasturtii, Aphis* spp. e.g. *A. craccivora, A. fabae, A. forbesi, A. gossypii, A. grossulariae, A. maidiradicis, A. pomi, A. sambuci, A. schneideri, A. spiraecola; Arboridia apicalis, Arilus critatus, Aspidiella* spp., *Aspidiotus* spp., *Atanus* spp., *Aulacaspis yasumatsui, Aulacorthum solani, Bactericera cockerelli (Paratrioza cockerelli), Bemisia* spp. e.g. *B. argentifolii, B. tabaci (Aleurodes tabaci); Blissus* spp. e.g. *B. leucopterus; Brachycaudus* spp. e.g. *B. cardui, B. helichrysi, B. persicae, B. prunicola; Brachycolus* spp., *Brachycorynella asparagi, Brevicoryne brassicae, Cacopsylla* spp. e.g. *C. fulguralis, C. pyricola (Psylla piri); Calligypona marginata, Calocoris* spp., *Campylomma livida, Capitophorus horni, Carneocephala fulgida, Cavelerius* spp., *Ceraplastes* spp., *Ceratovacuna lanigera, Ceroplastes ceriferus, Cerosipha gossypii, Chaetosiphon fragaefolii, Chionaspis tegalensis, Chlorita onukii, Chromaphis juglandicola, Chrysomphalus ficus, Cicadulina mbila, Cimexspp.* e.g. *C. hemipterus, C. lectularius; Coccomytilus halli, Coccus* spp. e.g. *C. hesperidum, C. pseudomagnoliarum, Corythucha arcuata, Creontiades dilutus, Cryptomyzus ribis, Chrysomphalus aonidum, Cryptomyzus ribis, Ctenarytaina spatulata, Cyrtopeltis notatus, Dalbulus* spp., *Dasynus piperis, Dialeurodes* spp. e.g. *D. citrifolii; Dalbulus maidis, Diaphorina* spp. e.g. *D. citri; Diaspis* spp. e.g. *D. bromeliae; Dichelops furcatus, Diconocoris hewetti, Doralis* spp., *Dreyfusia nordmannianae, Dreyfusia piceae, Drosicha* spp., *Dysaphis* spp. e.g. *D. plantaginea, D. pyri, D. radicola; Dysaulacorthum pseudosolani, Dysdercus* spp. e.g. *D. cingulatus, D. intermedius; Dysmicoccus* spp., *Edessa* spp., *Geocoris* spp., *Empoasca* spp. e.g. *E. fabae, E. solana; Epidiaspis leperii, Eriosoma* spp*.* e.g. *E. lanigerum, E. pyricola; Erythroneura* spp., *Eurygasterspp.* e.g. *E. integriceps; Euscelis bilobatus, Euschistus* spp. e.g. *E. heros, E. impictiventris, E. servus; Fiorinia theae, Geococcus coffeae, Glycaspis brimblecombei, Halyomorpha* spp. e.g. *H. halys; Heliopeltis* spp., *Homalodisca vitripennis (=H. coagulata), Horcias nobilellus, Hyalopterus pruni, Hyperomyzus lactucae, Icerya* spp*.* e.g. /*. purchase; Idiocerus* spp., *Idioscopus* spp., *Laodelphax striatellus, Lecanium* spp., *Lecanoideus floccissimus, Lepidosaphes* spp. e.g. *L. ulmi; Leptocorisa* spp., *Leptoglossus phyllopus, Lipaphis erysimi, Lygus* spp. e.g. *L. hesperus, L. lineolaris, L. pratensis; Maconellicoccus hirsutus, Marchalina hellenica, Macropes excavatus, Macrosiphum* spp. e.g. *M. rosae, M. avenae, M. euphorbiae; Macrosteles quadrilineatus, Mahanarva fimbriolata, Megacopta cribraria, Megoura viciae, Melanaphis pyrarius, Melanaphis sacchari, Melanocallis (=Tinocallis) caryaefoliae, Metcafiella* spp., *Metopolophium dirhodum, Monellia costalis, Monelliopsis pecanis, Myzocallis coryli, Murgantia* spp., *Myzus* spp. e.g. *M. ascalonicus, M. cerasi, M. nicotianae, M. persicae, M. varians; Nasonovia ribis-nigri, Neotoxoptera formosana, Neomegalotomus spp, Nephotettix* spp*.* e.g. *N. malayanus, N. nigropictus, N. parvus, N. virescens; Nezara* spp. e.g. *N. viridula; Nilaparvata lugens, Nysius huttoni, Oebalus* spp. e.g. *O. pugnax; Oncometopia* spp., *Orthezia praelonga, Oxycaraenus hyalinipennis, Parabemisia myricae, Parlatoria* spp., *Parthenolecanium* spp. e.g. *P. corni, P. persicae; Pemphigus* spp. e.g. *P. bursarius, P. populivenae; Peregrinus maidis, Perkinsiella saccharicida, Phenacoccus* spp. e.g. *P. aceris, P. gossypii; Phloeomyzus passerinii, Phorodon humuli, Phylloxera* spp. e.g. *P. devastatrix, Piesma quadrata, Piezodorus* spp. e.g. *P. guildinii; Pinnaspis aspidistrae, Planococcus* spp. e.g. *P. citri, P. ficus; Prosapia bicincta, Protopulvinaria pyriformis, Psallus seriatus, Pseudacysta persea, Pseudaulacaspis pentagona, Pseudococcus* spp. e.g. *P. comstocki; Psylla* spp. e.g. *P. mali; Pteromalus* spp., *Pulvinaria amygdali, Pyrilla* spp., *Quadraspidiotus* spp., e.g. *Q. perniciosus; Quesada gigas, Rastrococcus* spp., *Reduvius senilis, Rhizoecus americanus, Rhodnius* spp., *Rhopalomyzus ascalonicus, Rhopalosiphum* spp. e.g. *R. pseudobrassicas, R. insertum, R. maidis, R. padi; Sagatodes* spp., *Sahlbergella singularis, Saissetia* spp., *Sappaphis mala, Sappaphis mali, Scaptocoris* spp., *Scaphoides titanus, Schizaphis graminum, Schizoneura lanuginosa, Scotinophora* spp., *Selenaspidus articulatus, Sitobion avenae, Sogata* spp., *Sogatella furcifera, Solubea insularis, Spissistilus festinus (=Stictocephala festina), Stephanitis nashi, Stephanitis pyrioides, Stephanitis takeyai, Tenalaphara malayensis, Tetraleurodes perseae, Therioaphis maculate, Thyanta* spp. e.g. *T. accerra, T. perditor; Tibraca* spp., *Tomaspis* spp., *Toxoptera* spp. e.g. *T. aurantii; Trialeurodes* spp. e.g. *T. abutilonea, T. ricini, T. vaporariorum; Triatoma* spp., *Trioza* spp., *Typhlocyba* spp., *Unaspis* spp. e.g. *U. citri, U. yanonensis; and Viteus vitifolii,*
Insects from the order Hymenoptera e.g. *Acanthomyops interjectus, Athalia rosae, Attaspp. e.g. A. capiguara, A. cephalotes, A. cephalotes, A. laevigata, A. robusta, A. sexdens, A. texana, Bombus* spp., *Brachymyrmexspp., Camponotus* spp. e.g. *C. floridanus, C. pennsylvanicus, C. modoc; Cardiocondyla nuda, Chalibion sp, Crematogasterspp., Dasymutilla occidentalis, Diprion* spp., *Dolichovespula maculata, Dorymyrmex* spp., *Dryocosmus kuriphilus, Formica* spp., *Hoplocampaspp.* e.g. *H. minuta, H. testudinea; Iridomyrmex humilis,* Lasius spp. e.g. *L. niger, Linepithema humile, Liometopum* spp., *Leptocybe invasa, Monomorium* spp. e.g. *M. pharaonis, Monomorium, Nylandria fulva, Pachycondyla chinensis, Paratrechina longicornis, Paravespula* spp., e.g. *P. germanica, P. pennsylvanica, P. vulgaris; Pheidole* spp. e.g. *P. megacephala; Pogonomyrmexspp.* e.g. *P. barbatus, P. californicus, Polistes rubiginosa, Prenolepis impairs, Pseudomyrmex gracilis, Schelipron* spp., *Sirex cyaneus, Solenopsis* spp. e.g. *S. geminata, S.invicta, S. molesta, S. richteri, S. xyloni, Sphecius speciosus, Sphex* spp., *Tapinomaspp.* e.g. *T. melanocephalum, T. sessile; Tetramorium* spp. e.g. *T. caespitum, T. bicarinatum, Vespa* spp. e.g. *V*. *crabro; Vespula* spp. e.g. *V*. *squamosal; Wasmannia auropunctata, Xylocopa* sp;
Insects from the order Orthoptera e.g. *Acheta domesticus, Calliptamus italicus, Chortoicetes terminifera, Ceuthophilus* spp., *Diastrammena asynamora, Dociostaurus maroccanus, Gryllota*/*pa* spp. e.g. *G. africana, G. gryllotalpa; Gryllus* spp., *Hieroglyphus daganensis, Kraussaria angulifera, Locusta* spp. e.g. *L. migratoria, L. pardalina; Melanoplus* spp. e.g. *M. bivittatus, M. femurrubrum, M. mexicanus, M. sanguinipes, M. spretus; Nomadacris septemfasciata, Oedaleus senegalensis, Scapteriscus* spp., *Schistocerca* spp. e.g. *S. americana, S. gregaria, Stemopelmatus* spp., *Tachycines asynamorus,* and *Zonozerus variegatus;*
Pests from the Class **Arachnida** e.g. **Acari**,e.g. of the families Argasidae, Ixodidae and Sarcoptidae, e.g. *Amblyomma* spp. (e.g. *A. americanum, A. variegatum, A. maculatum*)*,* Argas spp. e.g. *A. persicu*)*, Boophilus* spp. e.g. *B. annulatus, B. decoloratus, B. microplus, Dermacentor* spp. e.g. *D.silvarum, D. andersoni, D. variabilis, Hyalomma* spp. e.g. *H. truncatum, Ixodes* spp. e.g. *I. ricinus, I. rubicundus, I. scapularis, I. holocyclus, I. pacificus, Rhipicephalus sanguineus, Ornithodorus* spp. e.g. *O. moubata, O. hermsi, O. turicata, Ornithonyssus bacoti, Otobius megnini, Dermanyssus gallinae, Psoroptes* spp. e.g. *P. ovis, Rhipicephalus* spp. e.g. *R. sanguineus, R. appendiculatus, Rhipicephalus evertsi, Rhizoglyphus* spp., *Sarcoptes* spp. e.g.*S*. *Scabiei,* and Family **Eriophyidae** including *Aceriaspp.* e.g. *A. sheldoni, A. anthocoptes, Acallitus* spp., *Aculops* spp. e.g. *A. lycopersici, A. pelekassi*; *Aculus* spp. e.g. *A. schlechtendali; Colomerus vitis, Epitrimerus pyri, Phyllocoptruta oleivora; Eriophytes ribis* and *Eriophyes* spp. e.g. *Eriophyes sheldoni*; Family **Tarsonemidae** including *Hemitarsonemus* spp., *Phytonemus pallidus and Polyphagotarsonemus latus, Stenotarsonemus* spp. *Steneotarsonemus spinki*; Family **Tenuipalpidae** including Brevipalpus spp. e.g. *B. phoenicis*; Family **Tetranychidae** including *Eotetranychus* spp., *Eutetranychus* spp., *Oligonychus* spp., *Petrobia latens*, *Tetranychus* spp. e.g. *T. cinnabarinus, T. evansi, T. kanzawai, T, pacificus, T. phaseulus, T. telarius* and *T. urticae*; *Bryobia praetiosa*; *Panonychus* spp. e.g. *P. ulmi*, *P. citri*; *Metatetranychus* spp. and *Oligonychus* spp. e.g. *O. pratensis, O. perseae, Vasates lycopersici*; *Raoiella indica,* **Fami/yCarpoglyphidae** including *Carpoglyphus* spp.*; Penthaleidae* spp. e.g. *Halotydeus destructor*; Family **Demodicidae** with species e.g. *Demodex* spp.; Family **Trombicidea** including *Trombicula* spp.; Family **Macronyssidae** including *Ornothonyssus* spp.; Family **Pyemotidae** including *Pyemotes tritici*; *Tyrophagus putrescentiae*; Family **Acaridae** including *Acarus siro*; Family **Araneida** including *Latrodectus mactans*, *Tegenaria agrestis, Chiracanthium sp, Lycosa sp Achaearanea tepidariorum* and *Loxosceles reclusa*;
Pests from the Phylum **Nematoda,** e.g. plant parasitic nematodes e.g. root-knot nematodes, *Meloidogyne* spp. e.g. *M. hapla, M. incognita, M. javanica;* cyst-forming nematodes, *Globodera* spp. e.g. *G. rostochiensis; Heterodera* spp. e.g. *H. avenae, H. glycines, H. schachtii, H. trifolii;* Seed gall nematodes, *Anguina* spp.; Stem and foliar nematodes, *Aphelenchoides* spp. e.g. *A. besseyi;* Sting nematodes, *Belonolaimus* spp. e.g. *B. longicaudatus;* Pine nematodes, *Bursaphelenchus* spp. e.g. *B. lignicolus, B. xylophilus;* Ring nematodes, *Criconemaspp., Criconemella* spp. e.g. *C. xenoplax* and *C. ornata;* and, *Criconemoides* spp. e.g. *Criconemoides informis; Mesocriconema* spp.*;* Stem and bulb nematodes, *Ditylenchus* spp. e.g. *D. destructor, D. dipsaci;* Awl nematodes, *Dolichodorus* spp.*;* Spiral nematodes, *Heliocotylenchus multicinctus;* Sheath and sheathoid nematodes, *Hemicycliophora* spp. and *Hemicriconemoides* spp.*; Hirshmanniella* spp.*;* Lance nematodes, *Hoploaimus* spp.*;* False rootknot nematodes, *Nacobbus* spp.*;* Needle nematodes, *Longidorus* spp. e.g. *L. elongatus;* Lesion nematodes, *Pratylenchus* spp. e.g. *P. brachyurus, P. neglectus, P. penetrans, P. curvitatus, P. goodeyi;* Burrowing nematodes, *Radopholus* spp. e.g. *R. similis; Rhadopholus* spp.*; Rhodopholus* spp.*;* Reniform nematodes, *Rotylenchus* spp. e.g. *R. robustus, R. reniformis; Scutellonema* spp.*;* Stubby-root nematode, *Trichodorus* spp. e.g. *T. obtusus, T. primitivus; Paratrichodorus* spp. e.g. *P. minor;* Stunt nematodes, *Tylenchorhynchus* spp. e.g. *T. claytoni*, *T. dubius;* Citrus nematodes, *Tylenchulus* spp. e.g. *T. semipenetrans;* Dagger nematodes, *Xiphinema* spp.*;* and other plant parasitic nematode species;
Insects from the order **Blattodea** e.g. *Macrotermes* spp. e.g. *M. natalensis; Cornitermes cumulans, Procornitermes* spp.*, Globitermes sulfureus, Neocapritermes* spp. e.g. *N. opacus, N. parvus; Odontotermes spp., Nasutitermes* spp. e.g. *N. corniger*; *Coptotermes* spp. e.g. *C. formosanus, C. gestroi, C. acinaciformis; Reticulitermes* spp. e.g. *R. hesperus, R. tibialis, R. speratus, R. flavipes, R. grassei, R. lucifugus, R. virginicus; Heterotermes* spp. e.g. *H. aureus, H. Iongiceps, H. tenuis; Cryptotermes* spp. e.g. *C. brevis, C. cavifrons; Incisitermes* spp. e.g. *I. minor, I. snyderi*; *Marginitermes hubbardi*, *Kalotermes flavicollis, Neotermes* spp. e.g. *N. castaneus, Zootermopsis* spp. *e.g. Z. angusticollis, Z. nevadensis, Mastotermes* spp. e.g. *M. darwiniensis; Blatta* spp. e.g. *B. orientalis, B. lateralis; Blattella* spp. e.g. *B. asahinae, B. germanica; Rhyparobia maderae, Panchlora nivea, Periplaneta* spp. e.g. *P. americana, P. australasiae, P. brunnea, P. fuliginosa, P. japonica; Supella longipalpa,* **Parcoblatta pennsylvanica, Eurycotis floridana,** *Pycnoscelus surinamensis,*
Insects from the order **Siphonoptera** e.g. *Cediopsylla simples*, *Ceratophyllus* spp., *Ctenocephalides* spp. e.g. *C. felis*, *C. canis, Xenopsylla cheopis*, *Pulex irritans*, *Trichodectes canis*, *Tunga penetrans*, and *Nosopsyllus fasciatus,*
Insects from the order **Thysanura** e.g. *Lepisma saccharina*, *Ctenolepisma urbana*, and *Thermobia domestica,*
Pests from the class **Chilopoda** e.g. *Geophilus* spp., Scutigera spp. e.g. *Scutigera coleoptrata*;
Pests from the class **Diplopoda** e.g. *Blaniulus guttulatus*, *Julus* spp., *Narceus* spp.,
Pests from the class **Symphyla** e.g. *Scutigerella immaculata,*
Insects from the order **Dermaptera,** e.g. *Forficula auricularia,*
Insects from the order **Collembola,** e.g. *Onychiurus* spp., e.g. *Onychiurus armatus,*
Pests from the order **Isopoda** e.g., *Armadillidium vulgare, Oniscus asellus, Porcellio scaber,*
Insects from the order **Phthiraptera,** e.g. *Damalinia* spp., Pediculus spp. e.g. *Pediculus humanus capitis, Pediculus humanus corporis, Pediculus humanus humanus; Pthirus pubis,* Haematopinus spp. e.g. *Haematopinus eurysternus*, *Haematopinus suis*; Linognathus spp. e.g. *Linognathus vituli; Bovicola bovis, Menopon gallinae, Menacanthus stramineus* and *Solenopotes capillatus, Trichodectes* spp.*,*
Further pest species which may be controlled by compounds I include: from the Phylum **Mollusca,** class **Bivalvia**, e.g., *Dreissenaspp.*; class **Gastropoda,** e.g., *Arion spp., Biomphalaria* spp., *Bulinus* spp., *Deroceras* spp., *Galba* spp., *Lymnaea* spp., *Oncomelania* spp., *Pomacea canaliclata, Succinea* spp.*;* from the class of the **helminths,** e.g., *Ancylostoma duodenale, Ancylostoma ceylanicum, Acylostoma braziliensis, Ancylostoma* spp., *Ascaris lubricoides, Ascaris spp., Brugia malayi, Brugia timori, Bunostomum* spp., *Chabertia* spp., *Clonorchis* spp., *Cooperia* spp., *Dicrocoelium* spp., *Dictyocaulus filaria, Diphyllobothrium latum, Dracunculus medinensis, Echinococcus granulosus, Echinococcus multilocularis, Enterobius vermicularis, Faciola* spp.*,* Haemonchus spp. e.g. *Haemonchus contortus; Heterakis* spp.*, Hymenolepis nana, Hyostrongulus* spp.*, Loa Loa, Nematodirus* spp.*, Oesophagostomum* spp.*, Opisthorchis* spp.*, Onchocerca volvulus, Ostertagia* spp.*, Paragonimus* spp.*, Schistosomen* spp.*, Strongyloides fuelleborni, Strongyloides stercora lis, Stronyloides* spp.*, Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.*

In one embodiment, device D is used according to the invention for efficiently combating insects from the sub-order of **Auchenorrhyncha,** e.g. *Amrasca biguttula, Empoasca spp., Nephotettix virescens, Sogatella furcifera, Mahanarva spp., Laodetphax striatellus, Nilaparvata lugens, Diaphorina citri;*
Lepidoptera, e.g. *Helicoverpa spp., Heliothis virescens, Lobesia botrana, Ostrinia nubilalis, Plutella xylostella, Pseudoplusia includens, Scirpophaga incertulas, Spodoptera spp., Trichoplusia ni, Tuta absoluta, Cnaphalocrocis medialis, Cydia pomonella, Chilo suppressalis, Anticarsia gemmatalis, Agrotis ipsilon, Chrysodeixis includens;*
True bugs, e.g. *Lygus spp.,* Stink bugs such as *Euschistus spp., Halyomorpha halys, Nezara viridula, Piezodorus guildinii, Dichelops furcatus;*
Thrips, e.g. *Frankliniella spp., Thrips spp., Dichromothrips corbettii;*
Aphids, e.g. *Acyrthosiphon pisum, Aphis spp., Myzus persicae, Rhopalosiphum spp., Schizaphis graminum, Megoura viciae;*
Whiteflies, e.g. *Trialeurodes vaporariorum, Bemisia spp.;*
Coleoptera, e.g. *Phyllotreta spp., Melanotus spp., Meligethes aeneus, Leptinotarsa decimlineata, Ceutorhynchus spp., Diabrotica spp., Anthonomus grandis, Atomaria linearia, Agriotes spp., Epilachna spp.;*
Flies, e.g. *Delia spp., Ceratitis capitate, Bactrocera spp., Liriomyza spp.;*
Coccoidea, e.g. *Aonidiella aurantia, Ferrisia virgate;*
Anthropods of class Arachnida (Mites), e.g. *Penthaleus major, Tetranychus spp.;*
Nematodes, e.g. *Heterodera glycines, Meloidogyne sp., Pratylenchus spp., Caenorhabditis elegans.*

In one embodiment, device D is used according to the invention to control one or more type of insects listed in the following table:

**Table 1: Insects than can be controlled according to the invention**

| **Genus** | **Common Name** | **Family** | **Order** |
|---|---|---|---|
| Acrolepiopsis assectella | Leek moth | Acrolepiidae | Lepidoptera |
| Adoxophyes honmai | Smaller tea tortrix | Tortricidae | Lepidoptera |
| Adoxophyes orana | Summerfruit tortrix | Tortricidae | Lepidoptera |
| Adoxophyes orana fasciata | | Tortricidae | Lepidoptera |
| Adoxophyes reticulana | Apple peel tortricid | Tortricidae | Lepidoptera |
| Adoxophyes sp | | Tortricidae | Lepidoptera |
| Agrotis segetum | Turnip moth | Noctuidae | Lepidoptera |
| Amyelois transitella | Navel orangeworm | Pyralidae | Lepidoptera |
| Anarsia lineatella | Peach twig borer | Gelechiidae | Lepidoptera |
| Anthonomus grandis | Cotton boll weevil | Curculionidae | Coleoptera |
| Aonidiella aurantii | California red scale | Diaspididae | Homoptera |
| Aphis gossypii | Melon aphid | Aphididae | Homoptera |
| Archips argyrospila | Fruittree leafroller | Tortricidae | Lepidoptera |
| Archips breviplicanus | Asiatic leafroller | Tortricidae | Lepidoptera |
| Archips fuscocupreanus | Apple tortrix | Tortricidae | Lepidoptera |
| Archips podana | Fruittree tortrix | Tortricidae | Lepidoptera |
| Archips rosana | Rose tortrix moth | Tortricidae | Lepidoptera |
| Argyrotaenia citrana | Orange tortrix | Tortricidae | Lepidoptera |
| Argyrotaenia velutinana | Redbanded leafroller | Tortricidae | Lepidoptera |
| Ascotis selenaria cretacea | Japanese giant looper | Geometridae | Lepidoptera |
| Busseola fusca | Maize stalk borer | Noctuidae | Lepidoptera |
| Cadra cautella | Almond moth | Pyralidae | Lepidoptera |
| Campylomma verbasci | Mullein bug | Miridae | Heteroptera |
| Carposina sasakii | Peach fruit moth | Carposinidae | Lepidoptera |
| Chilo suppressalis | Asiatic rice borer | Crambidae | Lepidoptera |
| Choristoneura fumiferana | Eastern spruce budworm | Tortricidae | Lepidoptera |
| Choristoneura rosaceana | Obliquebanded leafroller | Tortricidae | Lepidoptera |
| Choristoneura rosaceana | Redbanded leafroller | Tortricidae | Lepidoptera |
| Conophthorus coniperda | White pine cone beetle beetle | Scolytidae | Coleoptera |
| Costelytra zealandica | Grass grub beetle | Scarabaeidae | Coleoptera |
| Cryptoblabes gnidiella | Honeydew moth | Pyralidae | Lepidoptera |
| Cryptophlebia leucotreta | False codling moth | Tortricidae | Lepidoptera |
| Ctenopseustis herana | | Tortricidae | Lepidoptera |
| Ctenopseustis obliquana | Brownheaded leafroller | Tortricidae | Lepidoptera |
| Cydia fagiglandana | | Tortricidae | Lepidoptera |
| Cydia nigricana | Pea moth | Tortricidae | Lepidoptera |
| Cydia pomonella | Codling moth | Tortricidae | Lepidoptera |
| Cydia splendana | Chestnut tortrix | Tortricidae | Lepidoptera |
| Cydia strobilella | Spruce cone moth | Tortricidae | Lepidoptera |
| Cydia trasias | Chinese tortrix | Tortricidae | Lepidoptera |
| Cylas formicarius | Sweetpotato weevil | Curculionidae | Coleoptera |
| Cylas puncticollis | African sweet potato weevil | Curculionidae | Coleoptera |
| Dasychira plagiata | Pine tussock moth | Lymantriidae | Lepidoptera |
| Dermacentor variabilis | American dog tick | Ixodidae | Acarina |
| Diabrotica barberi | Northern corn rootworm | Chrysomelidae | Coleoptera |
| Diabrotica undecimpunctata howardi | Western corn rootworm | Chrysomelidae | Coleoptera |
| Diabrotica virgifera virgifera | Western corn rootworm | Chrysomelidae | Coleoptera |
| Dioryctria amatella | Southern pine coneworm | Pyralidae | Lepidoptera |
| Dioryctria disclusa | Webbing coneworm | Pyralidae | Lepidoptera |
| Dioryctria merkeli | | Pyralidae | Lepidoptera |
| Diparopsis castanea | Red bollworm | Noctuidae | Lepidoptera |
| Dysaphis plantaginea | Rose apple aphid | Aphididae | Homoptera |
| Earias insulana | Spiny bollworm | Noctuidae | Lepidoptera |
| Earias vittella | Spotted bollworm | Noctuidae | Lepidoptera |
| Ectomyelois ceratoniae | Carob moth | Pyralidae | Lepidoptera |
| Elasmopalpus lignosellus | Lesser cornstalk borer | Pyralidae | Lepidoptera |
| Enarmonia formosana | Cherrybark tortrix moth | Tortricidae | Lepidoptera |
| Endopiza viteana | Grape berry moth | Tortricidae | Lepidoptera |
| Eoreuma loftini | Mexican rice borer | Crambidae | Lepidoptera |
| Ephestia kuehniella | Mediterranean flour moth | Pyralidae | Lepidoptera |
| Epichoristodes acerbella | South African carnation tortrix | Tortricidae | Lepidoptera |
| Epiphyas postvittana | Lightbrown apple moth | Tortricidae | Lepidoptera |
| Episimus argutanus | | Tortricidae | Lepidoptera |
| Eucosma notanthes | Carambola fruit borer | Tortricidae | Lepidoptera |
| Eucosma sonomana | Western pine shootborer | Tortricidae | Lepidoptera |
| Eupoecilia ambiguella | European grape berry moth | Tortricidae | Lepidoptera |
| Euproctis pseudoconspersa | Tea tussock moth | Lymantriidae | Lepidoptera |
| Eurygaster integriceps | Sunn pest | Scutelleridae | Heteroptera |
| Euxoa messoria | Darksided cutworm | Noctuidae | Lepidoptera |
| Euxoa ochrogaster | Redbacked cutworm | Noctuidae | Lepidoptera |
| Euzophera pinguis | Olive pyralid moth | Pyralidae | Lepidoptera |
| Exomala orientalis | Oriental beetle grub | Scarabaeidae | Coleoptera |
| Grapholita funebrana | Plum fruit moth | Tortricidae | Lepidoptera |
| Grapholita molesta | Oriental fruit moth | Tortricidae | Lepidoptera |
| Grapholita prunivora | Lesser appleworm | Tortricidae | Lepidoptera |
| Helicoverpa armigera | Cotton bollworm | Noctuidae | Lepidoptera |
| Heliothis maritime adaucta | Flax budworm | Noctuidae | Lepidoptera |
| Heliothis virescens | Tobacco budworm | Noctuidae | Lepidoptera |
| Heliothis zea | Corn earworm | Noctuidae | Lepidoptera |
| Homona magnanima | Oriental tea tortrix moth | Tortricidae | Lepidoptera |
| Ichneumonoptera chrysophanes | Clearwing borer | Sesiidae | Lepidoptera |
| Keiferia lycopersicella | Tomato pinworm | Gelechiidae | Lepidoptera |
| Lobesia botrana | European grapevine moth | Tortricidae | Lepidoptera |
| Lymantria dispar | Gypsy moth | Lymantriidae | Lepidoptera |
| Lymantria monacha | Nun moth | Lymantriidae | Lepidoptera |
| Lymantria obfuscata | Indian gypsy moth | Lymantriidae | Lepidoptera |
| Malacosoma disstria | Forest tent caterpillar | Lasiocampidae | Lepidoptera |
| Mamestra brassicae | Cabbage moth | Noctuidae | Lepidoptera |
| Neodiprion sertifer | European pine sawfly | Diprionidae | Hymenoptera |
| Nezara viridula | Southern green stink-bug | Pentatomidae | Heteroptera |
| Orgyia antiqua | Rusty tussock moth | Lymantriidae | Lepidoptera |
| Orgyia leucostigma | Whitemarked tussock moth | Lymantriidae | Lepidoptera |
| Orgyia pseudotsugata | Douglas-fir tussock moth | Lymantriidae | Lepidoptera |
| Ostrinia furnacalis | Asian corn borer | Crambidae | Lepidoptera |
| Ostrinia nubilalis | European corn borer | Crambidae | Lepidoptera |
| Palpita unionalis | Jasmine moth | Crambidae | Lepidoptera |
| Pammene rhediella | Fruitlet mining tortrix | Tortricidae | Lepidoptera |
| Pandemis heparana | Dark oblique-barred twist | Tortricidae | Lepidoptera |
| Pandemis limitata | Threelined leafroller | Tortricidae | Lepidoptera |
| Pandemis pyrusana | Apple pandemis | Tortricidae | Lepidoptera |
| Pectinophora gossypiella | Pink bollworm | Gelechiidae | Lepidoptera |
| Pectinophora scutigera | Pink-spotted bollworm | Gelechiidae | Lepidoptera |
| Phthorimaea operculella | Potato tuberworm | Gelechiidae | Lepidoptera |
| Phyllocnistis citrella | Citrus leaf miner | Gracillariidae | Lepidoptera |
| Phyllonorycter ringoniella | Apple leafminer | Gracillariidae | Lepidoptera |
| Planococcus ficus | Vine mealybug | Pseudococcidae | Homoptera |
| Planotortrix octo | | Tortricidae | Lepidoptera |
| Platynota flavedana | Variegated leafroller | Tortricidae | Lepidoptera |
| Platynota idaeusalis | Tufted apple budmoth | Tortricidae | Lepidoptera |
| Platynota stultana | Omnivorous leafroller | Tortricidae | Lepidoptera |
| Platyptilia carduidactyla | Artichoke plume moth | Pterophoridae | Lepidoptera |
| Plodia interpunctella | Indian meal moth | Pyralidae | Lepidoptera |
| Plutella xylostella | Diamondback moth | Plutellidae | Lepidoptera |
| Prays oleae | Olive moth | Plutellidae | Lepidoptera |
| Pseudoplusia includens | Soybean looper | Noctuidae | Lepidoptera |
| Quadraspidiotus perniciosus | San Jose scale | Diaspididae | Homoptera |
| Rhopobota naevana | Blackheaded fireworm | Tortricidae | Lepidoptera |
| Rhyacionia buoliana | European pine shoot moth | Tortricidae | Lepidoptera |
| Rhyacionia frustrana | Nantucket pine tip moth | Tortricidae | Lepidoptera |
| Rhyacionia rigidana | Pitch pine tip moth | Tortricidae | Lepidoptera |
| Rhyacionia zozana | Ponderosa pine tip moth | Tortricidae | Lepidoptera |
| Scirpophaga incertulas | Yellow stem borer | Crambidae | Lepidoptera |
| Sesamia nonagrioides | Corn stalk borer | Noctuidae | Lepidoptera |
| Sitotroga cerealella | Angoumois grain moth | Gelechiidae | Lepidoptera |
| Sparganothis sulfureana | Blueberry leafroller | Tortricidae | Lepidoptera |
| Sparganothis sulfureana | Leaf-rolling tortrix | Tortricidae | Lepidoptera |
| Spilonota ocellana | Eye-spotted budmoth | Tortricidae | Lepidoptera |
| Spodoptera exigua | Beet armyworm | Noctuidae | Lepidoptera |
| Spodoptera frugiperda | Fall armyworm | Noctuidae | Lepidoptera |
| Spodoptera littoralis | Egyptian cotton leafworm | Noctuidae | Lepidoptera |
| Spodoptera litura | Tobacco cutworm | Noctuidae | Lepidoptera |
| Synanthedon exitiosa | Peachtree borer | Sesiidae | Lepidoptera |
| Synanthedon myopaeformis | Apple clearwing | Sesiidae | Lepidoptera |
| Synanthedon pictipes | Lesser peachtree borer | Sesiidae | Lepidoptera |
| Synanthedon scitula | Dogwood borer | Sesiidae | Lepidoptera |
| Synanthedon tipuliformis | Currant clearwing moth | Sesiidae | Lepidoptera |
| Tecia solanivora | Guatemalan potato tuber moth | Gelechiidae | Lepidoptera |
| Tetranychus urticae | Twospotted spider mite | Tetranychidae | Acarina |
| Thaumetopoea pityocampa | Pine processionary moth | Thaumetopoeidae | Lepidoptera |
| Thaumetopoea wilkinsoni | Cyprus processionary caterpillar | Thaumetopoeidae | Lepidoptera |
| Thyridopteryx ephemeraeformis | Bagworm moth | Psychidae | Lepidoptera |
| Trichoplusia ni | Cabbage looper | Noctuidae | Lepidoptera |
| Trichoplusia oxygramma | | Noctuidae | Lepidoptera |
| Trigonotylus caelestialium | Rice leaf bug | Miridae | Heteroptera |
| Tuta absoluta | Tomato leafminer | Gelechiidae | Lepidoptera |
| Vitacea polistiformis | Grape rootborer | Sesiidae | Lepidoptera |
| Zeiraphera diniana | Larch budmoth | Tortricidae | Lepidoptera |
| Zeuzera pyrina | Leopard moth | Cossidae | Lepidoptera |

In one embodiment, device D is used according to the invention to control one or more type of insects from the order of Lepidoptera, Acarina, Coleoptera, Heteroptera, Homoptera, Diptera or hemiptera.

Preferably, device D is used according to the invention to control one or more type of insects from the order Lepidoptera.

The term "agricultural application" shall include crop protection, non-crop and forestry applications including pest, weed and disease control, plant growth regulation, plant health improvement, This includes inter alia applications in agricultural food production, plant breeding, nursery applications.
Crop agricultural uses include agricultural uses indoor and outdoor, e.g. in the field and in greenhouse or nursery applications.
Non-crop agricultural uses includes uses for the consumer market in home and outdoor applications, for the park and open spaces maintenance market, to the extent they rely on the dispensing of repellants or semiochemical substances.

The term home and garden shall include inter alia the treatment of plants, including ornamental plants like trees or flowers, golf courses. It also includes repelling insects to the extent it relies on the dispensing of repellants or semiochemical substances.
In one embodiment, device D is used according to the invention to protect agricultural crops.

In one embodiment, device D is used according to the invention to protect at least one of the following crops: fruits (e.g. pomes, stone fruits, or soft fruits, e.g. apples, pears, plums, peaches, quince, nectarines, dates, drupes, almonds, cherries, papayas, strawberries, raspberries, jujube, litchi, jackfruit, honeydew, currant, carambola, eggfruit, blackberries or gooseberries); blackheaded fruit; cereals(e.g. barley, wheat, corn, field corn, rice, oats, sorgum); olives, coconut, cocoa beans, castor oil plants, oil palms, ground nuts, cucurbits(e.g. squashes, pumpkins, cucumber or melons); citrus fruit (e.g. oranges, citrus, lemons, grapefruits or mandarins); vegetables (e.g. eggplant, spinach, lettuce (e.g. iceberg lettuce), turnips, allium vegetables (e.g. leek, onion); chicory, brassicas / cole crops(e.g. cabbage), asparagus, cabbages, carrots, onions, garlic, leeks, tomatoes, tuber crops (e.g. potatoes), fruiting vegetables (e.g. pepper, eggplant, tomatoes, cucurbits or sweet peppers); lauraceous plants (e.g. avocados, cinnamon, or camphor); beans; tobacco; nuts (e.g. walnuts, macadamia); pistachios; coffee; tea; bananas; vines or woody wines(e.g. grapes); oilseed crops (e.g. Canola, rapeseed, oilseed rape, raps, groundnuts, soybeans, sunflower);beet; sugarbeets; saccharum (e.g. sugar cane); fiber crops (e.g. cotton, flax); flowers (e.g. ornamental flowers); hop; sweet leaf (Stevia); natural rubber plants or ornamental and forestry plants, shrubs, broad-leaved trees or evergreens, eucalyptus; turf; lawn; trees; grass.

According to the invention device D can used to protect during the growing of such crops or post harvest, e.g. during storage of the harvested crops.

In one embodiment, device D is used according to the invention for protecting wooden materials e.g. trees, board fences, sleepers, frames, artistic artifacts, etc. and buildings, but also construction materials, furniture, leathers, fibers, vinyl articles, electric wires and cables etc. from ants, termites and/or wood or textile destroying beetles, and for controlling ants and termites from doing harm to crops or human beings (e.g. when the pests invade into houses and public facilities or nest in yards, orchards or parks).

In one embodiment, device D is used according to the invention for controlling the following pests on the following crops:

**Table 2: Preferred Crop/Pest combinations that can be treated according to the invention**

| **Crop** | **Target Pest** | | |
|---|---|---|---|
| **Specific crop** | **Segment / Order** | **Scientific name** | **Common name** |
| Apple | Lepidoptera | *Cydia pomonella* | Codling moth |
| Apple | Lepidoptera | *Grapholita lobarzewskii* | Appleseed moth |
| Apple | Lepidoptera | *Adoxophyes orana* | Summer fruit tortrix |
| Apple | Sucking & Piercing | *Eriosoma lanigerum* | Woolly apple aphid |
| Apple | Sucking & Piercing | *Dysaphis plantaginea* | Rosy apple aphid |
| Apple | Mites / Acari | *Panonychus ulmi* | European red mite |
| Apple | Coleoptera | *Phlyctinus callosus* | Snoubeetle |
| Banana | Coleoptera | *Cosmopolites sordidus* | Banana weevil |
| Banana | Nematodes | *Radopholus similis* | Burrowing nematode |
| Banana | Nematodes | *Meloidogyne s pp* | Root knot nematodes |
| Berries | Diptera | *Drosophila suzukii* | Spotted-wing drosophila |
| Cabbages | Lepidoptera | *Plutella xylostella* | Diamond back moth |
| Cabbages | Lepidoptera | *Pieris brassicae* | Cabbage white moth |
| Cabbages | Sucking & Piercing | *Brevicoryne brassicae* | Cabbage aphid |
| Cabbages | Lepidoptera | *Delia radicum* | Cabbage root fly |
| Cabbages | Sucking & Piercing | *Trips tabaci* | Onion thrips |
| Cabbages | Slugs | *Slugs* | Slugs |
| Carrots | Diptera | *Psila rosae* | Carrot fly |
| Carrots | Nematodes | *Meloidogyne sp.* | Root knot nematode |
| Carrots | Nematodes | *P. penetrans sp.* | Lesion nematode |
| Carrots | Sucking & Piercing | *Pemphigus* | Wooly aphid |
| Cereals | Sucking & Piercing | *Rhopalosiphum padi* | Apple grain aphid |
| Cereals | Sucking & Piercing | *Metopolophium dirhodum* | Rose grain aphid |
| Cereals | Sucking & Piercing | *Sitobion avenae* | Grain aphid |
| Cereals | Diptera | *Sitodiplosis mosellana* | Orange wheat blossom midge |
| Cereals | Diptera | *Contarinia tritici* | Yellow -lemon blossom midge |
| Cereals | Diptera | *Oscinella frit* | Frit fly |
| Cereals | Diptera | *Delia coarctata* | Wheat bulb fly |
| Cereals | Diptera | *Agromyza spp* | Leafminers flies |
| Cereals | Diptera | *Geomyza tripunctata* | Géomyse |
| Cereals | Diptera | *Chlorops pumilionis* | Gout fly |
| Cereals | Coleoptera | *Oulema melanopus* | Cereal red leaf beetle |
| Cereals | Coleoptera | *Oulema lichenis* / *gallaeciana* | Cereal blue leaf beetle |
| Cereals | Sucking & Piercing | *Psammotettix alienus* | leafhoppers |
| Cereals | Myriapoda | *Scutigerella immaculata* | Garden symphylan |
| Cereals | Diptera | *Tipula paludosa & oleacera* | Crane Fly |
| Cereals | Lepidoptera | *Cnephasia Pumicana* | Cereals moths |
| Cereals | Coleoptera | *Zabrus tenebrioides* | Zabres |
| Cereals | Diptera | Cephus pygmaëus | Cephes des chaumes |
| Cereals | Coleoptera | *Calamobius filum* | Aiguillonier |
| Cereals | Nematodes | *Pratylenchus sp.* | Nématodes |
| Cereals | Nematodes | *Heterodera avenae* | Nématodes |
| Cereals | Slugs | *Deroceras reticulatum* | Grey slug |
| Cereals | Slugs | *Arion hortensis* | Black Slug |
| Cherry | Diptera | *Rhagoletis cerasi* | Cherry fruit fly |
| Cherry | Diptera | *Drosophila suzukii* | Spotted-wing drosophila |
| Cherry | Sucking & Piercing | *Myzus cerasi* | Cherry aphid |
| Citrus | Diptera | *Ceratitis capitata* | Mediterranean fruit fly |
| Citrus | Scales | *Aonidiella aurantii* | California red scale |
| Citrus | Scales | *Pseudococcus citri* | Mealy bug |
| Citrus | Mites / Acari | *Panonychus citri* | Citrus red mite |
| Citrus | Sucking & Piercing | *Dialeurodes citri* | Whitefly |
| Citrus | Mites / Acari | *Eutetranichus banski* | |
| Citrus | Mites / Acari | *Eutetranichus orientalis* | |
| Citrus | Lepidoptera | *Phyllocnistis citrella* | Citrus leaf borer |
| Citrus | Sucking & Piercing | *Diaphorina citri* | Asian citrus psyllid |
| Citrus | Sucking & Piercing | *Trioza erytreae* | Citrus psyllid |
| Cocoa | Sucking & Piercing | *Sahlbergella singularis* | Cocoa capsid |
| Cocoa | Sucking & Piercing | *Distantiella theobroma* | Cocoa capsid |
| Corn | Sucking & Piercing | *Rhopalosiphum padi* | Apple grain aphid |
| Corn | Sucking & Piercing | *Metopolophium dirhodum* | Rose grain aphid |
| Corn | Sucking & Piercing | *Sitobion avenae* | Grain aphid |
| Corn | Lepidoptera | *Ostrinia nubilalis* | European corn borer |
| Corn | Lepidoptera | *Sesamia nonagrioides* | Sesamia species (Sesamie) |
| Corn | Coleoptera | *Diabrotica virgifera* | Western corn root worm |
| Corn | Coleoptera | *Agriotes sp.* | Wireworms |
| Corn | Sucking & Piercing | *Zygidinia scutellaris* | Common leafhoppers (Cicadelle commune) |
| Corn | Sucking & Piercing | *Laodelphax striatella* | Brown leafhopper (Cicadelle brune) |
| Corn | Myriapoda | *Scutigerella immaculata* | Garden symphylan |
| Corn | Diptera | *Delia platura* | Shootfly |
| Corn | Diptera | *Geomyza tripunctata* | Géomyse |
| Corn | Diptera | *Oscinella frit* | Frit fly (oscinie) |
| Corn | Coleoptera | *Agrotis segetum* | Cutworm |
| Corn | Coleoptera | *Agrotis ipsilon* | Cutworm |
| Corn | Coleoptera | *Mythimna unipunctata* | Cutworm 5noctuelles défoliatrices |
| Corn | Lepidoptera | *Autographa gamma* | Moths pest (Noctuelles défoliatrices) |
| Corn | Lepidoptera | *Spodoptera exigua* | Moths pest (noctuelles défoliatrices) |
| Corn | Lepidoptera | *Spodoptera frugiperda* | Fall armyworm |
| Corn | Nematodes | *Pratylenchus sp.* | Nématodes |
| Corn | Nematodes | *Heterodera avenae* | Nématodes |
| Corn | Nematodes | *Ditylenchus dipsaci* | Nématodes |
| Corn | Nematodes | *Meloidogyne incognita* | Root knot nematode |
| Corn | Nematodes | *Pratylenchus penetrans* | Lesion nematode |
| Corn | Slugs | *Deroceras reticulatum* | Grey slug |
| Corn | Slugs | *Arion hortensis* | Black Slug |
| Corn | Mites / Acari | *Tetranichus urticae* | Two-spotted spider-mite |
| Cotton | Lepidoptera | *Helicoverpa armigera* | Cotton bollworm (Heliothis) |
| Cotton | Lepidoptera | *Pectinophora gossypiella* | Pink bollworm |
| Cotton | Mites / Acari | *Tetranychus urticae* | Two-spotted spider-mite |
| Cotton | Sucking & Piercing | *Bemisia tabaci* | White fly |
| Cotton | Sucking & Piercing | *Aphis gossypii* | Cotton aphid |
| Cotton | Sucking & Piercing | *Jacobiella spp., Amrasca spp., Empoasca spp.* | Cotton hoppers, Jas-sid s |
| Cotton | Sucking & Piercing | *Dysdercus spp.* | Cotton stainers |
| Cotton | Lepidoptera | *Anomis flava* | Cotton looper |
| Cotton | Lepidoptera | *Earias sp* | Cotton worms |
| Cotton | Lepidoptera | *Thaumatotibia leucotreta* | False coldling moth |
| Cotton | Lepidoptera | *Diparopsis spp* | Cotton bollworm |
| Cotton | Lepidoptera | *Spodoptera littoralis* | Cotton leafworm |
| Cotton | Lepidoptera | *Syllepte derogata* | Cotton leaf roller |
| Cotton | Nematodes | *Meloidogyne incognita* | Root knot nematode |
| Cotton | Nematodes | *Pratylenchus penetrans* | Lesion nematode |
| Cucurbits | Sucking & Piercing | *Trialeurodes vaporarium* | Greenhouse white fly |
| Cucurbits | Sucking & Piercing | *Bemisia tabaci* | Tobacco white fly |
| Cucurbits | Sucking & Piercing | *Aphis gossypii* | Cotton aphid |
| Cucurbits | Sucking & Piercing | *Myzus persicae* | Green peach aphid |
| Cucurbits | Sucking & Piercing | *Frankliniella occidentalis* | Western flower thrips |
| Cucurbits | Sucking & Piercing | *Nezara viridula* | Green stink bug |
| Cucurbits | Mites / Acari | *Tetranychus urticae* | Two-spotted spider-mite |
| Cucurbits | Nematodes | *Several species* | Greehouse root-knot nematode |
| Cucurbits | Lepidoptera | *Spodoptera exigua* | Beet armyworm |
| Cucurbits | Lepidoptera | *Spodoptera littoralis* | African cotton leafworm |
| Cucurbits | Lepidoptera | *Helicoverpa armigera* | Cotton bollworm (Heliothis) |
| Date Palm | Lepidoptera | *Batrachedra amydraula* | Lesser date moth |
| Grapes | Lepidoptera | *Eupoecilia ambiguella* | Grape berry moth |
| Grapes | Lepidoptera | *Lobesia botrana* | Vine moth |
| Grapes | Sucking & Piercing | *Scaphoideus titanus* | Golden flavescence cicadella |
| Grapes | Sucking & Piercing | *Empoasca vitis* | Green leafhopper |
| Grapes | Scales | Planococcus sp | Mealy bugs |
| Grapes | Sucking & Piercing | *Frankliniella occidentalis* | Western flower thrips |
| Grapes | Diptera | *Drosophila suzukii* | Spotted-wing drosophila |
| Groundnuts | Lepidoptera | *Helicoverpa armigera* | African bollworm |
| Groundnuts | Lepidoptera | *Spodoptera spp.* | Armyworms |
| Groundnuts | Lepidoptera | *Leucania loreyi* | False armyworm |
| Groundnuts | Nematodes | *Ditylenchus destructor* | Groundnut pod nematode |
| Leafy veg. | Sucking & Piercing | *Nasonovia ribisnigri* | Lettuce aphid |
| Hops | Sucking & Piercing | *Phorodon humuli* | Damson hop aphid |
| Legumes | Sucking & Piercing | *Aphis fabae* | Black bean aphid |
| Legumes | Sucking & Piercing | *Acyrtosiphum onobrychis* | Pea aphid |
| Macadamia | Sucking & Piercing | *Bathycoelia natalicola; Coreidoe spp.; Pentatomidae spp.; Pseudotheraptus wayi* | Stinkbugs complex |
| Olive | Diptera | *Bactrocera oleae* | Olive fly |
| Olive | Lepidoptera | *Prays oleae* | Olive moth |
| Onion | Sucking & Piercing | *Trips tabaci* | Onion thrips |
| Onion | Diptera | *Delia antiqua* | Onion root fly |
| Onion | Nematodes | *P. penetrans sp.* | Lesion nematode |
| OSR | Coleoptera | *Ceutorhynchus napi* | Cabbage stem weevil |
| OSR | Coleoptera | *Ceutorhynchus quadridens* | Small stem weevil |
| OSR | Coleoptera | *Meligethes aeneus* | Pollen beetle |
| OSR | Coleoptera | *Phyllotreta sp.* | Cabbage flea beetle |
| OSR | Coleoptera | *Psylliodes chrysocephala* | Cabbage stem flea beetle |
| OSR | Diptera | *Delia radicum* | Cabbage root fly |
| OSR | Sucking & Piercing | *Myzus persicae* | Peach aphid |
| OSR | Sucking & Piercing | *Brevicoryne brassicae* | Mealy cabbage aphid |
| Peach | Lepidoptera | *Grapholita molesta* | Oriental peach moth |
| Peach | Lepidoptera | *Anarsia lineatella* | Peach twig borer |
| Peach | Sucking & Piercing | *Myzus persicae* | Peach aphid |
| Peach | Diptera | *Ceratitis capitata* | Mediterranean fruit fly |
| Peach | Diptera | *Drosophila suzukii* | Spotted-wing drosophila |
| Peach | Mites / Acari | *Panonychus ulmi* | Fruit tree red spider mite |
| Peach | Nematodes | *Criconema spp.* | Ring nematodes |
| Peach | Nematodes | *Pratylenchus spp.* | Lesion nematodes |
| Peach | Nematodes | *Paratrichodorus spp.* | Stubby root nematodes |
| Pear | Sucking & Piercing | *Cacopsylla piri* | Pear psylla |
| Pear | Lepidoptera | *Cydia pomonella* | Codling moth |
| Pear | Lepidoptera | *Grapholita lobarzewskii* | small codling moth |
| Pear | Lepidoptera | *Adoxophyes orana* | Summer fruit tortrix |
| Pepper, Eggplant | Sucking & Piercing | *Aphis gossypii* | Cotton aphid |
| Pepper, Eggplant | Sucking & Piercing | *Myzus persicae* | Green peach aphid |
| Pepper, Eggplant | Sucking & Piercing | *Trialeurodes vaporarium* | Greenhouse white fly |
| Pepper, Eggplant | Sucking & Piercing | *Bemisia tabaci* | Tobacco white fly |
| Pepper, Eggplant | Sucking & Piercing | *Nezara viridula* | Green stink bug |
| Pepper, Eggplant | Lepidoptera | *Chrysodeixis chalcites* | Twin-spot moth |
| Pepper, Eggplant | Mites / Acari | *Tetranychus urticae* | Two-spotted spider-mite |
| Pepper, Eggplant | Nematodes | *Meloidogyne incognita* | Greehouse root-knot nematode |
| Pineapples | Nematodes | *Meloidogyne s pp*. | Root knot nematodes |
| Pineapples | Nematodes | *Pratylenchus spp.* | Lesion nematodes |
| Potatoes | Coleoptera | *Leptinotarsa decemlineata* | Colorado potato beetle |
| Potatoes | Sucking & Piercing | *Macrosiphum euphorbiae* | Potato aphid |
| Potatoes | Sucking & Piercing | *Myzus persicae* | Green peach aphid |
| Potatoes | Coleoptera | *Agriotes sp.* | Wireworms |
| Potatoes | Nematodes | *Globodera sp.* | Potato cyst nematode |
| Potatoes | Nematodes | *Meloidogyne sp.* | Root knot nematode |
| Potatoes | Nematodes | *P. penetrans sp.* | Lesion nematode |
| Potatoes | Slugs | *Slugs* | Slugs |
| Potatoes | Diptera | *Tipula oleracea* | Leather jackets |
| Potatoes | Coleoptera | *Melolontha melolontha* | cockchafer |
| Potatoes | Sucking & Piercing | | Stink Bugs |
| Potatoes | Lepidoptera | *Phthorimaea operculella* | Potato tuber moth |
| Potatoes | Coleoptera | *Athous spp.* | Wireworms |
| Potatoes | Coleoptera | *Sciobius horni* | Potato Snout Beetle |
| Prune | Lepidoptera | *Grapholita funebrana* | Red plum moth |
| Rice | Lepidoptera | *Chilo supresalis* | Rice borer |
| Soybeans | Lepidoptera | *Helicoverpa armigera* | African bollworm |
| Soybeans | Lepidoptera | *Spodoptera spp.* | Armyworms |
| Soybeans | Lepidoptera | *Leucania loreyi* | False armyworm |
| Soybeans | Lepidoptera | *Vanessa cardui* | Painted lady |
| Soybeans | Lepidoptera | *Thysanoplusia orichalcea* | Semi-loopers |
| Strawberry | Sucking & Piercing | *Chaetosiphon fragaefolii* | Strawberry aphid |
| Strawberries | Sucking & Piercing | *Trips tabaci* | Onion thrips |
| Strawberries | Sucking & Piercing | *Frankliniella occidentalis* | Western flower thrips |
| Strawberries | Diptera | *Drosophila suzukii* | Spotted-wing drosophila |
| Strawberries | Sucking & Piercing | *Trialeurodes vaporarium* | Greenhouse white fly |
| Strawberries | Mites / Acari | *Tetranychus urticae* | Two-spotted spider-mite |
| Sugarbeets | Coleoptera | *Atomaria linearis* | Atomaria |
| Sugarbeets | Sucking & Piercing | *Aphis fabae* | Black bean aphid |
| Sugarbeets | Sucking & Piercing | *Myzus persicae* | Green peach aphid |
| Sugarbeets | Coleoptera | *Agriotes sp.* | Wireworms |
| Sugarbeets | Nematodes | *Heterodera spp* | Sugar beet cyst ne-mathode |
| Sugarbeets | Diptera | *Pegomya hyoscyamis* | Mangold fly |
| Sugarcane | Lepidoptera | *Eldana saccharina* | Sugarcane stalk borer |
| Sugarcane | Sucking & Piercing | *Sipha flava* | Yellow sugarcane aphid |
| Sugarcane | Sucking & Piercing | *Fulmekiola serrata* | Thrips |
| Sugarcane | Nematodes | *Criconema spp.* | Ring nematode |
| Sugarcane | Nematodes | *Meloidogyne spp.* | Root-knot nematode |
| Sugarcane | Nematodes | *Pratylenchus spp.* | Lesion nematode |
| Sugarcane | Nematodes | *Rotylenchus spp.* | Spiral nematode |
| Sunflower | Coleoptera | *Agriotes sp.* | Wireworms |
| Sunflower | Lepidoptera | *Helicoverpa armigera* | African bollworm |
| Sunflower | Lepidoptera | *Spodoptera spp.* | Armyworms |
| Sunflower | Lepidoptera | *Leucania loreyi* | False armyworm |
| Tobacco | Nematodes | *Meloidogyne s pp* | Root knot nematodes |
| Tomato (fresh) | Lepidoptera | *Helicoverpa armigera* | Cotton bollworm (Heliothis) |
| Tomato (fresh) | Lepidoptera | *Spodoptera exigua* | Beet armyworm |
| Tomato (fresh) | Lepidoptera | *Spodoptera littoralis* | African cotton leafworm |
| Tomato (fresh) | Lepidoptera | *Tuta absoluta* | Tomato leafminer |
| Tomato (fresh) | Lepidoptera | *Chrysodeixis (Plusia) chalcites* | Worm borer |
| Tomato (fresh) | Sucking & Piercing | *Trialeurodes vaporarium* | Greenhouse white fly |
| Tomato (fresh) | Sucking & Piercing | *Bemisia tabaci* | Tobacco white fly |
| Tomato (fresh) | Mites / Acari | *Tetranychus urticae* | Two-spotted spidermite |
| Tomato (fresh) | Nematodes | *Meloidogyne incognita* | Greehouse root-knot nematode |
| Tomato (fresh) | Sucking & Piercing | *Nezara viridula* | Green stink bug |
| Tomato (fresh) | Lepidoptera | *Chrysodeixis chalcites* | Twin-spot moth |
| Tomato fresh | Mites / Acari | *Aculops lycopersici* | Vasates/rust mite |
| Tomato (fresh) | Sucking & Piercing | *Frankliniella occidentalis* | Western flower thrips |
| Tomato (processi ng) | Lepidoptera | *Heliothis armigera* | Bollworm |
| Tomato (processi ng) | Lepidoptera | *Spodoptera exigua* | Beet armyworm |
| Tomato (processi ng) | Lepidoptera | *Spodoptera littoralis* | African cotton leafworm |
| Tomato (processi ng) | Mites / Acari | *Tetranychus urticae* | Two-spotted spidermite |
| Tomato (processi ng) | Lepidoptera | *Autographa gamma* | Plusia moth / Silver Y |
| Tomato (processi ng) | Lepidoptera | *Tuta absoluta* | Tomato leafminer |
| Walnut | Diptera | *Rhagoletis completa* | Walnut stain fly |

In one embodiment, device D is used according to the invention for controlling the following pests on the following crops using the active ingredient as specified in the following table:

| CAS # and Name | CAS # | Target Ins | Order | Crop Name |
|---|---|---|---|---|
| Bicyclo[3.1.1 ]hept-3-en-2-one, 4,6,6-trimethyl-, (1S)- | 1196-01-6 | Mountain pine beetle *Dendroctonus ponderosae* | coleoptera | Trees |
| Bicyclo[3.1.1 ]hept-3-en-2-one, 4,6,6-trimethyl-, (1S)- | 1196-01-6 | Western pine beetle *Dendroctonus brevicomis* | coleoptera | Trees |
| Bicyclo[3.1.1 ]hept-3-en-2-one, 4,6,6-trimethyl-, (1S)- | 1196-01-6 | Southern pine beetle *Dendroctonus frontalis* | coleoptera | Trees |
| Bicyclo[3.1.1 ]hept-3-en-2-one, 4,6,6-trimethyl-, (1S)- | 1196-01-6 | Red turpentine beetle *Dendroctonus valens* | coleoptera | Trees |
| Bicyclo[3.1.1 ]hept-3-en-2-ol, 4,6,6-trimethyl-, [1S-(1a,2b,5 a)]- | 18881-04-4 | Bark beetle | coleoptera | Trees |
| 2,6-Octadienal, 3,7-dimethyl- | 5392-40-5 | Mosquito | Diptera | |
| MIXTURE/ Acetaldehyde, (3,3-dimethylcyclohexylidene)-, (2Z)- and Acetaldehyde, (3,3-dimethylcyclohexylidene)-, (2E)- | | Boll weevil *Anthonomus grandis* | coleoptera | Cotton |
| 2,7-Octadien-4-ol, 2-methyl-6-methylene- | 14434-41-4 | Pine bark beetle | coleoptera | Trees |
| Ethanol, 2-(3,3-dimethylcyclohexylidene)-, (2E)- | 30346-27-1 | Boll weevil *Anthonomus grandis* | coleoptera | Cotton |
| Ethanol, 2-(3,3-dimethylcyclohexylidene)-, (2E)- | 30346-27-1 | Pepper weevil *Anthonomus eugenii* | coleoptera | Vegetables, peppers |
| Cyclobutaneethanol, 1-methyl-2-(1-methylethenyl)-, cis- | 30820-22-5 | Boll weevil *Anthonomus grandis* | coleoptera | Cotton |
| Ethanol, 2-(3,3-dimethylcyclohexylidene)-, (2Z)- | 26532-23-0 | Boll weevil *Anthonomus grandis* | coleoptera | Cotton |
| 7-Octen-4-ol, 2-methyl-6-methylene- | 60894-96-4 | Pine bark beetle | coleoptera | Trees |
| 5-Nonanone, 4-methyl- | 35900-26-6 | Coconut weevil *Rhynchophorus vulneratus* | coleoptera | Coconut, nut, trees |
| 5-Nonanone, 4-methyl- | 35900-26-6 | Red palm weevil *Rhynchophorus ferrugineus* | coleoptera | Trees |
| 5-Decen-1-ol, (5E)- | 56578-18-8 | | | |
| 5-Decen-1-ol, (5Z)- | 51652-47-2 | Pistol casebearer *Coleophora anatipennella* | | |
| 5-Decen-1-ol, (5Z)- | 51652-47-2 | Apple & plum casebearer moth *Coleophora coracipennella* | lepidoptera | Fruits |
| 5-Decen-1-ol, (5Z)- | 51652-47-2 | Eastern larch casebearer Col*eophora dahurica* | lepidoptera | Trees |
| 5-Decen-1-ol, (5Z)- | 51652-47-2 | Fruit tree case moth *Coleophora hemerobie lla* | lepidoptera | Fruits |
| 5-Decen-1-ol, (5Z)- | 51652-47-2 | Larch casebearer *Coleophora laricella* | lepidoptera | Trees |
| 5-Nonanol, 4-methyl- | 154170-44-2 | Coconut weevil *Rhynchophorus vulneratus* | coleoptera | Trees |
| 5-Nonanol, 4-methyl- | 154170-44-2 | West Indian sugarcane weevil *Metamasius hemipterus* | coleoptera | Sugarcane |
| 2,4,6-Decatrienoic acid, methyl ester (2E,4E,6Z)- | 51544-64-0 | Brown marmorated stink bug *Halyomorpha halys* | hemiptera | soy, beans, lentils |
| 2,4-Decadienoic acid, methyl ester, (2E,4Z)- | 4493-42-9 | Brown stinkbug *Euschistus servus* | hemiptera | soy, beans, lentils |
| 2,4-Decadienoic acid, methyl ester, (2E,4Z)- | 4493-42-9 | Consperse stinkbug Eu*schistus conspersus* | hemiptera | soy, beans, lentils |
| 2,4-Decadienoic acid, methyl ester, (2E,4Z)- | 4493-42-9 | Dusky stinkbug *Euschistus tristipmus* | hemiptera | soy, beans, lentils |
| 2,4-Decadienoic acid, methyl ester, (2E,4Z)- | 4493-42-9 | Green stinkbug *Acrosternum hilare* | hemiptera | soy, beans, lentils |
| 2,4-Decadienoic acid, methyl ester, (2E,4Z)- | 4493-42-9 | Six-spot burnet *Zygaena filipendulae* | lepidoptera | |
| MIXTURE/ Nonan-3-one, 4-6-dimethyl-7-hydroxy-: (4R,6S,7S)-(.+-.)- ; (4R,6R,7R)-(.+-.)- | [99945-27-4] and [92999-14-9] | Cigarette beetle *Lasioderma serricome* | coleoptera | Tobacco |
| 8,10-Dodecadien-1-01, (8E, 1OE)- | 33956-49-9 | Codling moth *Cydia pomonella* | lepidoptera | Fruits |
| 5-Decen-1-ol, acetate, (5E)- | 38421-90-8 | | | |
| 3-Decen-1-ol, acetate, (3Z)- | 81634-99-3 | European goat moth *Cossus* cossus | lepidoptera | |
| 3-Decen-1-ol, acetate, (3Z)- | 81634-99-3 | Silver hook *Eustrotia uncula* | lepidoptera | |
| 5-Decen-1-ol, acetate, (5Z)- | 67446-07-5 | Pistol casebearer *Coleophora anatipennella* | lepidoptera | |
| 5-Decen-1-ol, acetate, (5Z)- | 67446-07-5 | Apple & plum casebearer moth *Coleophora coracipennella* | lepidoptera | Fruits |
| 5-Decen-1-ol, acetate, (5Z)- | 67446-07-5 | European goat moth *Cossus* cossus | lepidoptera | |
| 5-Decen-1-ol, acetate, (5Z)- | 67446-07-5 | Gorse soft shoot moth *Agonopterix ulicetella* | lepidoptera | |
| 5-Decen-1-ol, acetate, (5Z)- | 67446-07-5 | Shark *Cucullia umbratica* | lepidoptera | |
| 5-Decen-1-ol, acetate, (5Z)- | 67446-07-5 | Spotted sulphur *Emmelia trabealis* | lepidoptera | |
| 5-Decen-1-ol, acetate, (5Z)- | 67446-07-5 | Treble lines *Charanyca trigrammica* | lepidoptera | |
| 5-Decen-1-ol, acetate, (5Z)- | 67446-07-5 | Turnip moth *Agrotis segetum* | lepidoptera | Vegitables, turnips |
| 7-Decen-1-ol, acetate, (7Z)- | 13857 -03-9 | Groundnut leafminer *Aproaerema modicella* | lepidoptera | trees, nuts |
| 7-Decen-1-ol, acetate, (7Z)- | 13857 -03-9 | Burnished brass *Diachrysia chrysitis* | lepidoptera | |
| 7-Decen-1-ol, acetate, (7Z)- | 13857 -03-9 | Common cutworm *Agrotis fucosa* | lepidoptera | |
| 7-Decen-1-ol, acetate, (7Z)- | 13857 -03-9 | Cherrybark tortrix moth *Enarmonia formosana* | lepidoptera | Fruits |
| 8-Dodecen-1-ol, (8Z)- | 40642-40-8 | Carambola fruit borer *Eucosma notanthes* | lepidoptera | Fruits |
| 8-Dodecen-1-ol, (8Z)- | 40642-40-8 | Lingonberry fruitworm *Grapholita libertina* | lepidoptera | Fruits |
| 8-Dodecen-1-ol, (8Z)- | 40642-40-8 | Litchi fruit moth *Cryptophlebia ombrodelta* | lepidoptera | Fruits |
| 8-Dodecen-1-ol, (8Z)- | 40642-40-8 | Macadamia borer *Cryptophlebia batrachopa* | lepidoptera | Nuts |
| 8-Dodecen-1-ol, (8Z)- | 40642-40-8 | Oriental fruit moth *Grapholita molesta* | lepidoptera | Fruits |
| 8-Dodecen-1-ol, (8Z)- | 40642-40-8 | Spruce cone moth *Cydia strobilella* | lepidoptera | trees |
| 9-Dodecen-1-ol, (9Z)- | 35148-18-6 | Coconut nettle caterpillar *Setora nitens* | lepidoptera | Coconut, nut, trees |
| 9-Dodecen-1-ol, (9Z)- | 35148-18-6 | Avocado leafroller *Homona sparpotis* | lepidoptera | Vegitables, avocado |
| 9-Dodecen-1-ol, (9Z)- | 35148-18-6 | Black army cutworm *Actebia fennica* | lepidoptera | |
| 9-Dodecen-1-ol, (9Z)- | 35148-18-6 | Douglas fir cone moth *Barbara colfaxiana* | lepidoptera | trees |
| 9-Dodecen-1-ol, (9Z)- | 35148-18-6 | Southwestern pine tip moth *Rhyacionia neomexicana* | lepidoptera | trees |
| 8,10-Dodecadien-1-ol, acetate, (8E,10E)- | 53880-51-6 | Codling moth *Cydia pomonella* | lepidoptera | Fruits |
| 8,10-Dodecadien-1-ol, acetate, (8E,10E)- | 53880-51-6 | Chinese tortrix *Cydia trasias* | lepidoptera | Fruits |
| 8,10-Dodecadien-1-ol, acetate, (8E,10E)- | 53880-51-6 | Chestnut tortrix *Cydia splendana* | lepidoptera | trees, nuts |
| 8,10-Dodecadien-1-ol, acetate, (8E,10E)- | 53880-51-6 | Gorse pod moth *Cydia succedana* | lepidoptera | |
| 8,10-Dodecadien-1-ol, acetate, (8E,10E)- | 53880-51-6 | Hickory shuckworm *Cydia caryana* | lepidoptera | Trees |
| 8,10-Dodecadien-1-ol, acetate, (8E,10E)- | 53880-51-6 | Pea moth *Cydia nigricana* | lepidoptera | Vegitables, pea |
| 8,10-Dodecadien-1-ol, acetate, (8E,10E)- | 53880-51-6 | Red pine shoot borer *Rhyacionia busckana* | lepidoptera | |
| 8,10-Dodecadien-1-ol, acetate, (8E,10E)- | 53880-51-6 | Filbertworm *Melissopus latiferreanus* | lepidoptera | |
| 7,9-Dodecadien-1-ol, acetate, (7E,9Z)- | 54364-62-4 | European grapevine moth *Lobesia botrana* | lepidoptera | Fruits |
| 7,9-Dodecadien-1-ol, acetate, (7E,9Z)- | 54364-62-4 | Soybean podborer *Leguminivora glycinivorella* | lepidoptera | soy, beans, lentils |
| MIXTURE/11-Tetradecenal, (11 E)- and 11-Tetradecenal, (11Z)- | [35746-21-5] and [35237-64-0] | Spruce budworm *Choristoneura orae* | lepidoptera | trees |
| 11-Tetradecenal, (11Z)- | 35237-64-0 | Cotton bollworm *Helicoverpa armigera* | lepidoptera | Cotton |
| 11-Tetradecenal, (11Z)- | 35237-64-0 | Eastern spruce budworm *Choristoneura fumiferana* | lepidoptera | trees |
| 11-Tetradecenal, (11Z)- | 35237-64-0 | Orange tortrix *Argyrotaenia citrana* | lepidoptera | Fruits |
| 11-Tetradecenal, (11Z)- | 35237-64-0 | South American tortricid moth *Argyrotaenia sphaleropa* | lepidoptera | Fruits |
| 11-Tetradecenal, (11Z)- | 35237-64-0 | Western spruce budworm *Choristoneura occidentalis* | lepidoptera | trees |
| 9-Tetradecenal, (9Z)- | 53939-27-8 | Cotton bollworm *Helicoverpa armigera* | lepidoptera | Cotton |
| 9-Tetradecenal, (9Z)- | 53939-27-8 | American plum borer *Euzophera semifuneralis* | lepidoptera | Fruits |
| 9-Tetradecenal, (9Z)- | 53939-27-8 | Bordered straw *Heliothis peltigera* | lepidoptera | |
| 9-Tetradecenal, (9Z)- | 53939-27-8 | Carob moth *Ectomyelois ceratoniae* | lepidoptera | vegitables |
| 9-Tetradecenal, (9Z)- | 53939-27-8 | Four-spotted *Tyta luctuosa* | lepidoptera | |
| 9-Tetradecenal, (9Z)- | 53939-27-8 | Iris borer *Macronoctua onusta* | lepidoptera | ornamental flowers |
| 9-Tetradecenal, (9Z)- | 53939-27-8 | Tobacco budworm *Heliothis virescens* | lepidoptera | Tobacco |
| 9,12- Tetradecadien-1-ol, (9Z,12E)- | 51937-00-9 | Indian meal moth *Plodia interpunctella* | lepidoptera | |
| 9,12-Tetradecadien-1-ol, (9Z,12E)- | 51937-00-9 | Beet armyworm *Spodoptera exigua* | lepidoptera | Vegitables, beets |
| 9,12-Tetradecadien-1-ol, (9Z,12E)- | 51937-00-9 | Almond moth *Cadra cautella* | lepidoptera | Nuts, trees |
| 9,12-Tetradecadien-1-ol, (9Z,12E)- | 51937-00-9 | American plum borer *Euzophera semifuneralis* | lepidoptera | Fruits |
| 9,12-Tetradecadien-1-ol, (9Z,12E)- | 51937-00-9 | Driedfruit moth *Vitula edmandsii serratilineella* | lepidoptera | Fruits |
| 9,12-Tetradecadien-1-ol, (9Z,12E)- | 51937-00-9 | Tobacco moth *Ephestia elutella* | lepidoptera | Tobacco |
| 9,12-Tetradecadien-1-ol, (9Z,12E)- | 51937-00-9 | Sunflower moth *Homoeosoma electellum* | lepidoptera | Sunflowers |
| 7-Tetradecen-2-one, (7Z)- | 146955-45-5 | Oriental beetle *Blitopertha orientalis* | coleoptera | |
| 11-Dodecen-1-ol, acetate | 35153-10-7 | Red bollworm *Diparopsis castanea* | lepidoptera | |
| 11-Dodecen-1-ol, acetate | 35153-10-7 | Western bean cutworm *Loxagrotis albicosta* | lepidoptera | Beans |
| 11-Dodecen-1-ol, acetate | 35153-10-7 | Cabbage looper *Trichoplusia ni* | lepidoptera | Vegitables |
| 11-Dodecen-1-ol, acetate | 35153-10-7 | Dewick's plusia *MacDunnoughia confusa* | lepidoptera | |
| 11-Dodecen-1-ol, acetate | 35153-10-7 | European fir budworm *Choristoneura murinana* | lepidoptera | Trees |
| 11-Dodecen-1-ol, acetate | 35153-10-7 | European grapevine moth *Lo besia botrana* | lepidoptera | Fruits |
| 7-Dodecen-1-ol, acetate, (7E)- | 16695-41-3 | European pine moth *Dendrolimus pini* | lepidoptera | trees |
| 7-Dodecen-1-ol, acetate, (7E)- | 16695-41-3 | False codling moth *Cryptophlebia leucotreta* | lepidoptera | Fruits |
| 7-Dodecen-1-ol, acetate, (7E)- | 16695-41-3 | Black army cutworm *Actebia fennica* | lepidoptera | Fruits |
| 7-Dodecen-1-ol, acetate, (7E)- | 16695-41-3 | European grapevine moth *Lobesia botrana* | lepidoptera | Fruits |
| 7-Dodecen-1-ol, acetate, (7E)- | 16695-41-3 | Jujube leafroller *Ancylis sativa* | lepidoptera | Fruits; jujube |
| 8-Dodecen-1-ol, acetate, (8E)- | 38363-29-0 | Litchi leafroller *Statherotis discana* | lepidoptera | Fruits; litchi |
| 8-Dodecen-1-ol, acetate, (8E)- | 38363-29-0 | Citrus fruit borer *Ecdytolopha aurantiana* | lepidoptera | Fruits; citrus |
| 8-Dodecen-1-ol, acetate, (8E)- | 38363-29-0 | False codling moth *Cryptophlebia leucotreta* | lepidoptera | Fruits; false |
| 8-Dodecen-1-ol, acetate, (8E)- | 38363-29-0 | Macadamia borer *Cryptophlebia batrachopa* | lepidoptera | Nuts; macadamia |
| 8-Dodecen-1-ol, acetate, (8E)- | 38363-29-0 | Oriental fruit moth *Grapholita molesta* | lepidoptera | Fruits; oriental |
| 8-Dodecen-1-ol, acetate, (8E)- | 38363-29-0 | Spruce cone moth *Cydia strobilella* | lepidoptera | Trees; spruce |
| 9-Dodecen-1-ol, acetate, (9E)- | 35148-19-7 | Western pine shootborer Eu*cosma sonomana* | lepidoptera | Trees; spruce |
| MIXTURE/ 8-Dodecen-1-ol, 1-acetate, (8E)- and 8-Dodecen-1-ol, 1-acetate, (8Z)- | [38363-29-0] and [28079-04-1] | False codling moth *Cryptophlebia leucotreta* | lepidoptera | Fruits |
| 5-Dodecen-1-ol, acetate, (5Z)- | 16676-96-3 | European goat moth *Cossus* cossus | lepidoptera | |
| 5-Dodecen-1-ol, acetate, (5Z)- | 16676-96-3 | Cabbage looper *Trichoplusia ni* | lepidoptera | vegitables; cabbage |
| 5-Dodecen-1-ol, acetate, (5Z)- | 16676-96-3 | Dotted clay *Xestia baja* | lepidoptera | |
| 5-Dodecen-1-ol, acetate, (5Z)- | 16676-96-3 | Gold spot *Plusia festucae* | lepidoptera | |
| 5-Dodecen-1-ol, acetate, (5Z)- | 16676-96-3 | Redbacked cutworm *Euxoa ochrogaster* | lepidoptera | |
| 5-Dodecen-1-ol, acetate, (5Z)- | 16676-96-3 | Six-spot burnet *Zygaena filipendulae* | lepidoptera | |
| 5-Dodecen-1-ol, acetate, (5Z)- | 16676-96-3 | Western bean cutworm *Loxagrotis albicosta* | lepidoptera | Beans |
| 7-Dodecen-1-ol, acetate, (7Z)- | 14959-86-5 | Asian elephant *Elephas maximus* | lepidoptera | |
| 7-Dodecen-1-ol, acetate, (7Z)- | 14959-86-5 | Fall armyworm *Spodoptera frugiperda* | lepidoptera | Corn |
| 7-Dodecen-1-ol, acetate, (7Z)- | 14959-86-5 | Golden wing moth *Thysanoplusia orichalcea* | lepidoptera | |
| 7-Dodecen-1-ol, acetate, (7Z)- | 14959-86-5 | Turnip moth *Agrotis segetum* | lepidoptera | vegitables; turnip |
| 7-Dodecen-1-ol, acetate, (7Z)- | 14959-86-5 | Western bean cutworm *Loxagrotis albicosta* | lepidoptera | Beans |
| 7-Dodecen-1-ol, acetate, (7Z)- | 14959-86-5 | Western yellowstriped armyworm *Spodoptera praefica* | lepidoptera | Corn |
| 8-Dodecen-1-ol, acetate, (8Z)- | 28079-04-1 | Carambola fruit borer *Eucosma notanthes* | lepidoptera | Fruits; carambola |
| 8-Dodecen-1-ol, acetate, (8Z)- | 28079-04-1 | False codling moth *Cryptophlebia leucotreta* | lepidoptera | Fruits |
| 8-Dodecen-1-ol, acetate, (8Z)- | 28079-04-1 | Macadamia borer *Cryptophlebia batrachopa* | lepidoptera | Nuts; macadamia |
| 8-Dodecen-1-ol, acetate, (8Z)- | 28079-04-1 | Oriental fruit moth *Grapholita molesta* | lepidoptera | Fruits; oriental |
| 8-Dodecen-1-ol, acetate, (8Z)- | 28079-04-1 | Plum fruit moth *Grapholita funebrana* | lepidoptera | Fruits; plum |
| 8-Dodecen-1-ol, acetate, (8Z)- | 28079-04-1 | Small fruit tortrix *Grapholita lobarzewskii* | lepidoptera | Fruits |
| 9-Dodecen-1-ol, acetate, (9Z)- | 16974-11-1 | Grape berry moth *Endopiza viteana* | lepidoptera | Fruits; grape |
| 9-Dodecen-1-ol, acetate, (9Z)- | 16974-11-1 | Western pine shootborer Eu*cosma sonomana* | lepidoptera | Trees |
| 11-Tetradecen-1-ol, (11 E)- | 35153-18-5 | Spruce budworm *Choristoneura orae* | lepidoptera | Trees |
| 11-Tetradecen-1-ol, (11 E)- | 35153-18-5 | Jack pine budworm *Choristoneura pinus* | lepidoptera | Trees |
| 11-Tetradecen-1-ol, (11 E)- | 35153-18-5 | Omnivorous leafroller *Platynota stultana* | lepidoptera | |
| 11-Tetradecen-1-ol, (11 E)- | 35153-18-5 | Spotted fireworm *Choristoneura parallela* | lepidoptera | |
| 11-Tetradecen-1-ol, (11 E)- | 35153-18-5 | Tufted apple budmoth *Platynota idaeusalis* | lepidoptera | Fruits; apple |
| 11-Tetradecen-1-ol, (11 E)- | 35153-18-5 | Variegated leafroller *Platynota flavedana* | lepidoptera | Fruits |
| 11-Tetradecen-1-ol, (11 E)- | 35153-18-5 | Spruce budworm *Choristoneura orae* | lepidoptera | Trees |
| 11-Tetradecen-1-ol, (11 E)- | 35153-18-5 | Jack pine budworm *Choristoneura pinus* | lepidoptera | Trees |
| 11-Tetradecen-1-ol, (11 E)- | 35153-18-5 | Omnivorous leafroller *Platynota stultana* | lepidoptera | |
| 11-Tetradecen-1-ol, (11 E)- | 35153-18-5 | Spotted fireworm *Choristoneura parallela* | lepidoptera | |
| 11-Tetradecen-1-ol, (11 E)- | 35153-18-5 | Tufted apple budmoth *Platynota idaeusalis* | lepidoptera | Fruits; tufted |
| 11-Tetradecen-1-ol, (11 E)- | 35153-18-5 | Variegated leafroller *Platynota flavedana* | lepidoptera | Fruits; variegated |
| 11-Tetradecen-1-ol, (11Z)- | 34010-15-6 | Apple ermine moth *Yponomeuta malinellus* | lepidoptera | Fruits; apple |
| 11-Tetradecen-1-ol, (11Z)- | 34010-15-6 | Bird-cherry ermine *Yponomeuta evonymellus* | lepidoptera | Fruits; bird |
| 11-Tetradecen-1-ol, (11Z)- | 34010-15-6 | Blackheaded fireworm *Rhopobota naevana* | lepidoptera | Fruits; blackheaded |
| 11-Tetradecen-1-ol, (11Z)- | 34010-15-6 | Jack pine budworm *Choristoneura pinus* | lepidoptera | Fruits; jack |
| 11-Tetradecen-1-ol, (11Z)- | 34010-15-6 | Rose tortrix moth *Archips rosana* | lepidoptera | Fruits; rose |
| 11-Tetradecen-1-ol, (11Z)- | 34010-15-6 | Summerfruit tortrix *Adoxophyes orana* | lepidoptera | Fruits; summerfruit |
| 9-Tetradecen-1-ol, (9Z)- | 35153-15-2 | African white stemborer Ma*liarpha separatella* | lepidoptera | Fruits; african |
| 9-Tetradecen-1-ol, (9Z)- | 35153-15-2 | Beet armyworm *Spodoptera exigua* | lepidoptera | Fruits; beet |
| 9-Tetradecen-1-ol, (9Z)- | 35153-15-2 | Red pine shoot moth *Dioryctria resinosella* | lepidoptera | Fruits; red |
| 9-Tetradecen-1-ol, (9Z)- | 35153-15-2 | Sugarbeet crown borer *Hulstia undulatella* | lepidoptera | Fruits; sugarbeet |
| 9-Tetradecen-1-ol, (9Z)- | 35153-15-2 | Summerfruit tortrix *Adoxophyes orana* | lepidoptera | Fruits; summerfruit |
| 1,6,10-Dodecatriene, 7,11-dimethyl-3-methylene-, (6E)- | 18794-84-8 | Aphid alarm pheromone | hemiptera | Fruits; aphid |
| MIXTURE/ 4-Tridecen-1-ol, acetate, (4E)- and 4-Tridecen-1-ol, acetate, (4Z)- | [72269-48-8] and [65954-19-0] | Tomato pinworm *Keiferia lycopersicella* | lepidoptera | Fruits; tomato |
| 4-Tridecen-1-ol, acetate, (4Z)- | 65954-19-0 | Tomato pinworm *Keiferia lycopersicella* | lepidoptera | Fruits; tomato |
| 11,13-Hexadecadienal, (11Z,13Z)- | 71317-73-2 | Navel orangeworm *Amyelois transitella* | lepidoptera | Fruits; orange |
| 9,11-Tetradecadien-1-ol, acetate, (9E,11E)- | 54664-98-1 | Lightbrown apple moth *Epiphyas postvittana* | lepidoptera | Fruits; apple |
| 9,12-Tetradecadien-1-ol, acetate, (9Z,12E)- | 30507-70-1 | Indian meal moth *Plodia interpunctella* | lepidoptera | corn |
| 9,12-Tetradecadien-1-ol, acetate, (9Z,12E)- | 30507-70-1 | Beet armyworm *Spodoptera exigua* | lepidoptera | vegitables, beets |
| 9,11-Tetradecadien-1-ol, acetate, (9Z,11E)- | 50767-79-8 | Southern armyworm *Spodoptera eridania* | lepidoptera | corn |
| 9,11-Tetradecadien-1-ol, acetate, (9Z,11E)- | 50767-79-8 | Egyptian cotton leafworm *Spodoptera littoralis* | lepidoptera | Cotton |
| 11-Hexadecenal, (11Z)- | 53939-28-9 | Diamondback moth *Plutella xylostella* | lepidoptera | Fruits; vegitable |
| 9-Hexadecenal, (9Z)- | 56219-04-6 | Southwestern corn borer *Diatraea grandiosella* | lepidoptera | corn |
| 9-Hexadecenal, (9Z)- | 56219-04-6 | Bluegrass webworm *Parapediasia teterrella* | lepidoptera | |
| 11-Tetradecen-1-ol, acetate, (11Z)- | 20711-10-8 | Oblique banded leaf roller *Choristoneura rosaceana* | lepidoptera | |
| 11-Tetradecen-1-ol, acetate, (11Z)- | 20711-10-8 | Pandemis leafroller *Pandemia pyrusana* | lepidoptera | |
| 11-Tetradecen-1-ol, acetate, (11E)- | 33189-72-9 | Lightbrown apple moth *Epiphyas postvittana* | lepidoptera | Fruits; apple |
| 11-Tetradecen-1-ol, acetate, (11E)- | 33189-72-9 | European corn borer *Ostrinia nubilalis* | lepidoptera | corn |
| 11-Tetradecen-1-ol, acetate, (11E)- | 33189-72-9 | Lightbrown apple moth *Epiphyas postvittana* | lepidoptera | Fruits; apple |
| 9-Tetradecen-1-ol, acetate, (9E)- | 23192-82-7 | Beet armyworm *Spodoptera exigua* | lepidoptera | Vegitables, beets |
| 9-Tetradecen-1-ol, acetate, (9E)- | 23192-82-7 | European corn borer *Ostrinia nubilalis* | lepidoptera | Corn |
| 9-Tetradecen-1-ol, acetate, (9E)- | 23192-82-7 | Fall armyworm *Spodoptera frugiperda* | lepidoptera | Corn |
| 9-Tetradecen-1-ol, acetate, (9E)- | 23192-82-7 | Summerfruit tortrix *Adoxophyes orana* | lepidoptera | Fruits |
| 9-Tetradecen-1-ol, acetate, (9E)- | 23192-82-7 | Blister coneworm *Dioryctria clarioralis* | lepidoptera | |
| 7-Tetradecen-1-ol, acetate, (7Z)- | 16974-10-0 | Sandthorn carpenterworm *Holcocerus hippophaecolus* | lepidoptera | |
| 7-Tetradecen-1-ol, acetate, (7Z)- | 16974-10-0 | Cabbage looper *Trichoplusia ni* | lepidoptera | vegitables, cabbage |
| 7-Tetradecen-1-ol, acetate, (7Z)- | 16974-10-0 | Greenheaded leafroller *Planotortrix excessana* | lepidoptera | |
| 7-Tetradecen-1-ol, acetate, (7Z)- | 16974-10-0 | Gold spot *Plusia festucae* | lepidoptera | |
| 8-Tetradecen-1-ol, acetate, (8Z)- | 35835-80-4 | Aspen leafroller *Pseudexentera oregonana* | lepidoptera | Trees |
| 8-Tetradecen-1-ol, acetate, (8Z)- | 35835-80-4 | Brownheaded leafroller *Ctenopseustis obliquana* | lepidoptera | |
| 8-Tetradecen-1-ol, acetate, (8Z)- | 35835-80-4 | Eye-spotted budmoth *Spilonota ocellana* | lepidoptera | |
| 8-Tetradecen-1-ol, acetate, (8Z)- | 35835-80-4 | Larch shoot *Spilonota laricana* | lepidoptera | Trees |
| 8-Tetradecen-1-ol, acetate, (8Z)- | 35835-80-4 | Oak olethreutid leafroller *Pseudexentera spoliana* | lepidoptera | trees |
| 9-Tetradecen-1-ol, acetate, (9Z)- | 16725-53-4 | Bristly cutworm *Lacinipolia renigera* | lepidoptera | |
| 9-Tetradecen-1-ol, acetate, (9Z)- | 16725-53-4 | Cabbage leafroller *Clepsis spectrana* | lepidoptera | vegitables; cabbage |
| 9-Tetradecen-1-ol, acetate, (9Z)- | 16725-53-4 | Maize stalk borer *Busseola fusca* | lepidoptera | corn; maize |
| 9-Tetradecen-1-ol, acetate, (9Z)- | 16725-53-4 | Potato stemborer *Hydraecia micacea* | lepidoptera | vegitables; potato |
| 9-Tetradecen-1-ol, acetate, (9Z)- | 16725-53-4 | Red pine shoot moth *Dioryctria resinosella* | lepidoptera | Trees |
| 9-Tetradecen-1-ol, acetate, (9Z)- | 16725-53-4 | Summerfruit tortrix *Adoxophyes orana* | lepidoptera | Fruits |
| 11-Hexadecen-1-ol, (11 E)- | 61301-56-2 | Tomato fruit borer *Neoleucinodes elegantalis* | lepidoptera | Fruits; tomato |
| 11-Hexadecen-1-ol, (11 E)- | 61301-56-2 | Eggplant borer *Leucinodes orbonalis* | lepidoptera | Fruits; eggplant |
| 11-Hexadecen-1-ol, (11 E)- | 61301-56-2 | Eggfruit caterpillar *Sceliodes cordalis* | lepidoptera | Fruits; eggfruit |
| 11-Hexadecen-1-ol, (11 E)- | 61301-56-2 | Melonworm *Diaphania hyalinata* | lepidoptera | Fruits; melonworm |
| 11-Hexadecen-1-ol, (11 E)- | 61301-56-2 | Pickleworm *Diaphania nitidalis* | lepidoptera | |
| 11-Hexadecen-1-ol, (11 E)- | 61301-56-2 | Pink sugarcane borer *Sesamia grisescens* | lepidoptera | Sugarcane |
| 11-Hexadecen-1-ol, (11Z)- | 56683-54-6 | Diamondback moth *Plutella xylostella* | lepidoptera | Fruits, vegitables |
| 11-Hexadecen-1-ol, (11Z)- | 56683-54-6 | Australian bollworm He*licoverpa punctigera* | lepidoptera | |
| 11-Hexadecen-1-ol, (11Z)- | 56683-54-6 | Bordered straw *Heliothis peltigera* | lepidoptera | |
| 11-Hexadecen-1-ol, (11Z)- | 56683-54-6 | Corn stalk borer *Sesamia nonagrioides* | lepidoptera | Fruits; corn |
| 11-Hexadecen-1-ol, (11Z)- | 56683-54-6 | Driedfruit moth *Vitula edmandsii serratilineella* | lepidoptera | |
| 11-Hexadecen-1-ol, (11Z)- | 56683-54-6 | Flax budworm *Heliothis maritime adaucta* | lepidoptera | flax |
| 8-Hexadecenal, 14-methyl-, (8Z)- | 60609-53-2 | Khapra beetle *Trogoderma granarium* | coleoptera | |
| 8-Hexadecenal, 14-methyl-, (8Z)- | 60609-53-2 | Larger cabinet beetle *Trogoderma inclusum* | coleoptera | Stored grains |
| 8-Hexadecenal, 14-methyl-, (8Z)- | 60609-53-2 | Warehouse beetle *Trogoderma variabile* | coleoptera | Stored grains |
| 6-acetoxy-5-Hexadecanolide | 81792-36-1 | Mosquito | Diptera | |
| 58594-45-9/ 13-Octadecenal, (13Z)- | 58594-45-9/ 13-Octadecenal, (13Z)- | Southwestern corn borer *Diatraea grandiosella* | lepidoptera | corn |
| 58594-45-9/ 13-Octadecenal, (13Z)- | 58594-45-9/ 13-Octadecenal, (13Z)- | Asiatic rice borer *Chilo suppressalis* | lepidoptera | Rice |
| 58594-45-9/ 13-Octadecenal, (13Z)- | 58594-45-9/ 13-Octadecenal, (13Z)- | European sunflower moth Ho*moeosoma nebulellum* | lepidoptera | Sunflowers |
| 58594-45-9/ 13-Octadecenal, (13Z)- | 58594-45-9/ 13-Octadecenal, (13Z)- | Honeydew moth *Cryptoblabes gnidiella* | lepidoptera | Fruits; honeydew |
| 58594-45-9/ 13-Octadecenal, (13Z)- | 58594-45-9/ 13-Octadecenal, (13Z)- | Mexican rice borer *Eoreuma loftini* | lepidoptera | Rice |
| 34010-21-4/ 11-Hexadecen-1-ol, acetate, (11Z)- | 34010-21-4/ 11-Hexadecen-1-ol, acetate, (11Z)- | Diamondback moth *Plutella xylostella* | lepidoptera | Fruits |
| 56218-72-5/ 11-Hexadecen-1-ol, acetate, (11E)- | 56218-72-5/ 11-Hexadecen-1-ol, acetate, (11 E)- | Tomato fruit borer *Neoleucinodes elegantalis* | lepidoptera | Fruits; tomato |
| 56218-72-5/ 11-Hexadecen-1-ol, acetate, (11E)- | 56218-72-5/ 11-Hexadecen-1-ol, acetate, (11 E)- | European corn borer *Ostrinia nubilalis* | lepidoptera | Corn |
| 56218-72-5/ 11-Hexadecen-1-ol, acetate, (11E)- | 56218-72-5/ 11-Hexadecen-1-ol, acetate, (11 E)- | Eggplant borer *Leucinodes orbonalis* | lepidoptera | Fruits, Vegitables; eggplant |
| 56218-72-5/ 11-Hexadecen-1-ol, acetate, (11E)- | 56218-72-5/ 11-Hexadecen-1-ol, acetate, (11 E)- | Eggfruit caterpillar *Sceliodes cordalis* | lepidoptera | Fruits, Vegitables; eggplant |
| 56218-72-5/ 11-Hexadecen-1-ol, acetate, (11E)- | 56218-72-5/ 11-Hexadecen-1-ol, acetate, (11 E)- | Melonworm *Diaphania hyalinata* | lepidoptera | Fruits; melon |
| 56218-72-5/ 11-Hexadecen-1-ol, acetate, (11E)- | 56218-72-5/ 11-Hexadecen-1-ol, acetate, (11 E)- | Sweet potato leaffolder *Brachmia macroscopa* | lepidoptera | Vegitable; sweet potatoe |
| MIXTURE/ 2,13-Octadecadien-1-ol, acetate, (2E,13Z)- [86252-65-5] and 3,13-Octadecadien-1-ol, acetate, (3E,13Z)-[53120-26-6] | MIXTURE/ 2,13-Octadecadien-1-ol, acetate, (2E,13Z)-[86252-65-5] and 3,13-Octadecadien-1-ol, acetate, (3E,13Z)-[53120-26-6] | Currant clearwing moth *Synanthedon tipuliformis* | lepidoptera | Fruits; currant |
| 63408-44-6/ 7-Eicosen-11-one, (7Z)- | 63408-44-6/ 7-Eicosen-11-one, (7Z)- | Peach fruit moth *Carposina sasakii* | lepidoptera | Fruits; peach |
| 60037-58-3/ 13-Octadecen-1-ol, acetate, (13Z)- | 60037 -58-3/ 13-Octadecen-1-ol, acetate, (13Z)- | Spotted sugarcane borer *Chilo sacchariphagus* | lepidoptera | Sugarcane |
| 60037-58-3/ 13-Octadecen-1-ol, acetate, (13Z)- | 60037 -58-3/ 13-Octadecen-1-ol, acetate, (13Z)- | Mexican rice borer *Eoreuma loftini* | lepidoptera | Rice |
| 60037-58-3/ 13-Octadecen-1-ol, acetate, (13Z)- | 60037 -58-3/ 13-Octadecen-1-ol, acetate, (13Z)- | Rice leaffolder moth *Cnaphalocrocis medinalis* | lepidoptera | Rice |
| 60037-58-3/ 13-Octadecen-1-ol, acetate, (13Z)- | 60037 -58-3/ 13-Octadecen-1-ol, acetate, (13Z)- | Currant clearwing moth *Synanthedon tipuliformis* | lepidoptera | Fruits; currant |
| 54844-65-4/ 6-Heneicosen-11-one, (6Z)- | 54844-65-4/ 6-Heneicosen-11-one, (6Z)- | Douglas fir tussock moth *Orgyia pseudotsugata* | lepidoptera | Trees |
| 27519-02-4/ 9-Tricosene, (9Z)- | 27519-02-4/ 9-Tricosene, (9Z)- | House fly *Musca domestica* | Diptera | |
| 27519-02-4/ 9-Tricosene, (9Z)- | 27519-02-4/ 9-Tricosene, (9Z)- | House fly *Musca domestica* | Diptera | |
| 1193-18-6/2-Cyclohexen-1-one, 3-methyl- | 1193-18-6/ 2-Cyclohexen-1-one, 3-methyl- | Douglas fir beetle *Dendroctonus pseudotsugae* | coleoptera | Trees |
| 1193-18-6/ 2-Cyclohexen-1-one, 3-methyl- | 1193-18-6/ 2-Cyclohexen-1-one, 3-methyl- | Mountain pine beetle *Dendroctonus ponderosae* | coleoptera | trees |
| 3391-86-4/ 1-Octen-3-ol | 3391-86-4/ 1-Octen-3-ol | Mosquito | Diptera | |
| 3687-48-7/ 1-Octen-3-ol, (3R)- | 3687-48-7 / 1-Octen-3-ol, (3R)- | Mosquito | Diptera | |
| MIXTURE/ mixture of: 8-Dodecen-1-ol, acetate, (8Z)-; 8-Dodecen-1-ol, acetate, (8E)-; 8-Dodecen-1-ol, (8Z)- | MIXTURE/ mixture of: 8-Dodecen-1-ol, acetate, (8Z)-; 8-Dodecen-1-ol, acetate, (8E)-; 8-Dodecen-1-ol, (8Z)- | Oriental fruit moth *Grapholita molesta* | lepidoptera | Fruits |
| MIXTURE/ 5-Decen-1-ol, acetate, (5E)- [38421-90-8] and 5-Decen-1-ol, (5E)- [56578-18-8] | MIXTURE/ 5-Decen-1-ol, acetate, (5E)-[38421-90-8] and 5-Decen-1-ol, (5E)-[56578-18-8] | Peach twig borer *Anarsia lineatella* | lepidoptera | Fruits; peach |
| MIXTURE/ 11-Tetradecen-1-ol, acetate, (11E)-[33189-72-9] and 9,11-Tetradecadien-1-ol, acetate, (9E,11E)- [54664-98-1] | MIXTURE/ 11-Tetradecen-1-ol, acetate, (11E)-[33189-72-9] and 9,11-Tetradecadien-1-ol, acetate, (9E,11E)-[54664-98-1] | Lightbrown apple moth *Epiphyas postvittana* | lepidoptera | Fruits; apple |
| MIXTURE/ / cis-2-Isopropenyl-1-methylcyclobutaneethanol, (Z)-2-(3,3-Dimethyl)-cyclohexylideneethanol, (Z)-(3,3-Dimethyl)-cyclohexylideneacetaldehyde, (E)-(3,3-Dimethyl)-cyclohexylideneacetaldehyde | MIXTURE/ Mix of: [30820-22-5],[26532-23-0],[26532-24-1],[26532-25-2] (GRAND-LURE I,II,III and IV) | Boll weevil *Anthonomus grandis* | coleoptera | Cotton |

In one embodiment, device D is used according to the invention for controlling the following pests on the following crops using the active ingredient as specified in the following table (Pheromones 1 to 4 can be used as alternatives to each other or in combination):

**Table 3: Preferred Crop/pest/active ingredient combinations ((Pheromones 1 to 4 can be used as alternatives to each other or in combination)**

| Scientific name | Common name | Crop group | Specific crops | Pheromone 1 | Pheromone 2 | Pheromone 3 | Pheromone 4 |
|---|---|---|---|---|---|---|---|
| *Acrolepia assectella* | Leek moth | Allium | Leek, onion | (Z)-11-Hexadecenal | (Z)-11-Hexadecenyl acetate | | |
| *Adoxophyes orana* | Summer fruit tortrix | Pome fruit / Pome | Apple, pear, quince | (Z)-11-Tetradecen-1-ol | (Z)-9-Tetradecen-1-ol | (E)-9-Tetradecenyl acetate | (Z)-9-Tetradecenyl acetate |
| *Anarsia lineatella* | Peach twig borer | Stone fruit / Drupe | Peach, nectarine, cherries, plums | (E)-5-Decenyl acetate | (E)-5-Decen-1-ol | | |
| *Anomis flava* | Cotton looper | Fiber crops | Cotton | | | | |
| *Autographa gamma* | Moths pest (Noctuelles défoliatrices) | Cereals | Corn/Maize | (Z)-7-Dodecenyl acetate | (Z)-7-Dodecen-1-ol | | |
| *Autographa gamma* | Plusia moth / Silver Y | Fruiting vegetables | Tomato (processing) | (Z)-7-Dodecenyl acetate | (Z)-7-Dodecen-1-ol | | |
| *Batrachedra amydraula* | Lesser date moth | Stone fruit / Drupe | Date Palm | (Z,Z)-4,7-Decadienyl acetate | (Z)-4-Decenyl acetate | (Z)-5-Decen-1-ol | |
| *Chilo suppressalis* | Rice borer | Cereals | Rice | (Z)-13-Octadecenal | | | |
| *Chrysodeixis chalcites* | Twin-spot moth / Tomato looper | Fruiting vegetables | Pepper, eggplant, tomato | Unkown | Unkown | | |
| *Cnephasia pumicana* | Cereal moths | Cereals | Barley, wheat, maize, rice, oats, sorgum | (E)-9-Dodecenyl acetate | (Z)-9-Dodecenyl acetate | | |
| *Crytoblabes gnidielle* | Honeydew moth | Vine / Woody vine | Grapes | (Z)-13-Octadecenal | (Z)-11-Hexadecenal | | |
| *Crytoblabes gnidielle* | Honeydew moth | Pome fruit / Pome | Apple, pear, quince | (Z)-13-Octadecenal | (Z)-11-Hexadecenal | | |
| *Crytoblabes gnidielle* | Honeydew moth | Citrus | Citrus | (Z)-13-Octadecenal | (Z)-11-Hexadecenal | | |
| *Cydia pomonella* | Codling moth | Pome fruit / Pome | Apple, pear, quince | (E, E)-8,10-Dodecadien-1-ol | | | |
| *Grapholita funebrana* | Red plum moth | Stone fruit / Drupe | Plums | (Z)-8-Dodecenyl acetate | (E)-10-Dodecenyl acetate | | |
| *Delia radicum* | Cabbage root fly | Brassicas / Cole crops | Cabbages | Unkown | | | |
| *Diparopsis castanea* | Red bollworm | Fiber crops | Cotton | (E)-9,11-Dodecadienyl acetate | (Z)-9,11-Dodecadienyl acetate | 11-Dodecenyl acetate | |
| *Earias insulana* | Egyptian bollworm | Fiber crops | Cotton | (E,E)-10,12-Hexadecadienal | | | |
| *Eldana saccharina* | Sugarcane stalk borer | Saccharum | Sugarcane | (Z)-9-Octadecen-1-ol | | | |
| *Eupoecilia ambiguella* | Grape berry moth | Vine / Woody vine | Grapes | (Z)-9-Dodecenyl acetate | | | |
| *Grapholita lobarzewskii* | Appleseed moth / Small codling moth | Pome fruit / Pome | Apple, pear, quince | (E)-8-Dodecenyl | (Z)-8-Dodecenyl | | |
| *Grapholita molesta* | Oriental peach moth | Stone fruit / Drupe | Peach, nectarine, cherries, plums | (E)-8-Dodecenyl acetate | (Z)-8-Dodecenyl acetate | (Z)-8-Dodecen-l-ol | |
| *Grapholita molesta* | Oriental peach moth | Pome fruit / Pome | Apple, pear, quince | (E)-8-Dodecenyl acetate | (Z)-8-Dodecenyl acetate | (Z)-8-Dodecen-l-ol | |
| *Helicoverpa armigera* | Cotton bollworm (Heliothis) | Fiber crops | Cotton | (Z)-11-Tetradecenal | (Z)-9-T etradecenal | | |
| *Helicoverpa armigera* | Cotton bollworm (Heliothis) | Fruiting vegetables | Cucurbits, Tomato | (Z)-11-Tetradecenal | (Z)-9-Tetradecenal | | |
| *Helicoverpa armigera* | African bollworm | Oilseed crops | Groundnuts, soybeans, sunflower | (Z)-11-Tetradecenal | (Z)-9-Tetradecenal | | |
| *Leucania loreyi* | False armyworm | Oilseed crops | Groundnuts, soybeans, sunflower | Unkown | | | |
| *Lobesia botrana* | Vine moth | Vine / Woody vine | Grapes | (E,Z)-7,9-Dodecadienyl acetate | 11-Dodecenyl acetate | (E)-7-Dodecenyl acetate | |
| *Ostrinia nubilalis* | European Corn/Maize borer | Cereals | Corn/Maize | (E)-11-Tetradecenyl acetate | (E)-9-Tetradecenyl acetate | (E)-11-Hexadecenyl acetate | |
| *Pectinophora gossypiella* | Pink bollworm | Fiber crops | Cotton | (Z,Z)-7,11-Hexadecadienyl acetate | | | |
| *Phthorimaea operculella* | Potato tuber moth | Tuber crops | Potatoes | (E,Z)-4,7-Tridecadienyl acetate | (E,Z,Z)-4,7,10-Tridecatrienyl acetate | | |
| *Phyllocnistis citrella* | Citrus leaf borer | Citrus | Citrus | (Z,Z,E)-7,11,13-Hexadecatrienal | (Z,Z)-7,11-Hexadecadienal | | |
| *Pieris brassicae* | Cabbage white moth | Brassicas / Cole crops | Cabbages | Unkown | | | |
| *Plutella xylostella* | Diamond back moth | Brassicas / Cole crops | Cabbages | (Z)-11-Hexadecenal | (Z)-11-Hexadecen-1-ol | (Z)-11-Hexadecenyl acetate | |
| *Plutella xylostella* | Diamond back moth | Oilseed crops | Canola, rapeseed, oilseed rape, raps | (Z)-11-Hexadecenal | (Z)-11-Hexadecen-1-ol | (Z)-11-Hexadecenyl acetate | |
| *Prays oleae* | Olive moth | Stone fruit / Drupe | Olive | (Z)-7-Tetradecenal | | | |
| *Sesamia nonagrioides* | Sesamia species (Sesamie) | Cereals | Corn/Maize | (Z)-7-Tetradecenal | | | |
| *Sitotroga cerealella* | Angoumois grain moth | Cereals | Barley, wheat, maize, rice, oats, sorgum | (Z,E)-7,11-Hexadecadienyl acetate | (Z,E)-7,11-Hexadecadienal | | |
| *Spodoptera exigua* | Moths pest (noctuelles défoliatrices) | Cereals | Corn/Maize | (Z,E)-9,12-Tetradecadien-1-ol | (Z)-9-Tetradecen-1-ol | (Z,E)-9,12-Tetradecadienyl acetate | (E)-9-Tetradecenylacetate |
| *Spodoptera exigua* | Beet armyworm | Fruiting vegetables | Cucurbits | (Z,E)-9,12-Tetradecadien-1-ol | (Z)-9-Tetradecen-1-ol | (Z,E)-9,12-Tetradecadienyl acetate | (E)-9-Tetradecenyl acetate |
| *Spodoptera exigua* | Beet armyworm | Fruiting vegetables | Tomato | (Z,E)-9,12-Tetradecadien-1-ol | (Z)-9-Tetradecen-1-ol | (Z,E)-9,12-Tetradecadienyl acetate | (E)-9-Tetradecenyl acetate |
| *Spodoptera frugiperda* | Fall armyworm | Cereals | Corn/Maize | (Z)-7-Dodecenyl acetate | (E)-9-Tetradecenyl acetate | | |
| *Spodoptera littoralis* | Cotton leafworm | Fiber crops | Cotton | (Z,E)-9,11-Tetradecadienyl acetate | | | |
| *Spodoptera littoralis* | African cotton leafworm | Fruiting vegetables | Cucurbits | (Z,E)-9,11-Tetradecadienyl acetate | | | |
| *Spodoptera littoralis* | African cotton leafworm | Fruiting vegetables | Tomato | (Z,E)-9,11-Tetradecadienyl acetate | | | |
| *Syllepte derogata* | Cotton leaf roller | Fiber crops | Cotton | (E,Z)-10,12-Hexadecadienal | (E,E)-10,12-Hexadecadienal | | |
| *Thaumatotibia leucotreta* | False coldling moth | Fiber crops | Cotton | (E)-7-Dodecenyl acetate | (E)-8-Dodecenyl acetate | (Z)-8-Dodecenyl acetate | |
| *Thysanoplusia orichalcea* | Semi-loopers | Legumes | Soybeans | (Z)-7-Dodecenyl acetate | | | |
| *Tuta absoluta* | Tomato leafminer | Fruiting vegetables | Tomato, eggplant | (E,Z,Z)-3,8,11-Tetradecatrienyl acetate | (E,Z)-3,8-Tetradecadienyl acetate | | |
| *Vanessa cardui* | Painted lady | Legumes | Soybeans | Unkown | | | |
| *Tetranychus urticae* | Twospotted spider mite | Fiber crops | Cotton | (E,Z)-3,7,11-Trimethyl-2,6,10-dodecatrien-1-ol | (Z)-3,7,11-Trimethyl-1,6,10-dodecatrien-3-ol | (E)-3,7-Dimethyl-2,6-octadien-1-ol | 3,7-Dimethyl-6-octen-1-ol |
| *Tetranychus urticae* | Twospotted spider mite | Fruiting vegetables | Cucurbits, tomato, pepper, eggplant | (E,Z)-3,7,11-Trimethyl-2,6,10-dodecatrien-1-ol | (Z)-3,7,11-Trimethyl-1,6,10-dodecatrien-3-ol | (E)-3,7-Dimethyl-2,6-octadien-1-ol | 3,7-Dimethyl-6-octen-1-ol |
| *Tetranychus urticae* | Twospotted spider mite | Berries | Strawberries | (E,Z)-3,7,11-Trimethyl-2,6,10-dodecatrien-1-ol | (Z)-3,7,11-Trimethyl-1,6,10-dodecatrien-3-ol | (E)-3,7-Dimethyl-2,6-octadien-1-ol | 3,7-Dimethyl-6-octen-1-ol |
| *Tetranychus urticae* | Twospotted spider mite | Cereals | Corn/Maize | (E,Z)-3,7,11-Trimethyl-2,6,10-dodecatrien-1-ol | (Z)-3,7,11-Trimethyl-1,6,10-dodecatrien-3-ol | (E)-3,7-Dimethyl-2,6-octadien-1-ol | 3,7-Dimethyl-6-octen-1-ol |
| *Anthonomus grandis* | Cotton boll weevil | Fiber crops | Cotton | Ethanol, 2-(3,3-dimethylcyclohexylidene)-, (2E)- | Cyclobutaneethanol, 1-methyl-2-(1-methylethenyl)-, cis- | Ethanol, 2-(3,3-dimethylcyclohexylidene)-, (2Z)- | |
| *Diabrotica barberi* | Northern corn rootworm | Cereals | Corn/Maize | cis-2-lsopropenyl-1-methylcyclobutaneethanol | | | |
| *Diabrotica undecimpunctata howardi* | Spotted cucumber beatle | Fruiting vegetables | Cucurbits | 10-Methyltridecan-2-one | | | |
| *Diabrotica virgifera* | Western corn rootworm | Cereals | Corn/Maize | 8-Methyldecan-2-yl propionate | | | |
| *Campylomma verbasci* | Mullein bug | Pomme fruit / Pome | Apple, pear | Butyl butyrate | (E)-2-Butenyl butyrate | | |
| *Eurygaster integriceps* | Sunn pest | Cereals | Barley, wheat, maize, rice, oats, sorgum | (Z, E)-4,4-( 1,5-Dimethyl-4-heptenylidene)-1-methylcyclohexene | Ethyl 2-propenoate | 4-Hydroxy-3-methoxybenzaldehyde | |
| *Nezara viridula* | Southern green stinkbug | Fruiting vegetables | Cucurbits, tomato, pepper, eggplant | (E)-2-Decenal | 1-Methyl-4-(1,5-dimethyl-(Z)-1,4-hexadienyl)-cyclohexene | (1S,2R,4S)-4-(l,5-Dimethyl-(Z)-1,4-hexadienyl)-1,2-epoxy-1-methylcyclohexane | (1R,2S,4S)-4-(1,5-Dimethyl-(Z)-1,4-hexadienyl)-1,2-epoxy-1-methylcyclohexane |
| *Trigonotylus caelestialium* | Rice leaf bug | Cereals | Rice | Hexyl hexanoate | (E)-2-Hexenyl hexanoate | Octyl butyrate | |
| *Aonidiella aurantii* | California red scale | Citrus | Citrus | 3-Methyl-6-isopropenyl-9-decenyl acetate | (Z)-3-Methyl-6-isopropenyl-3,9-decadienyl acetate | | |
| *Aphis gossypii* | Melon aphid | Fruiting vegetables | Cucurbits, tomato, pepper, eggplant | (E)-7,11-Dimethyl-3-methylene-1,6,10-dodecatriene | | | |
| *Aphis gossypii* | Melon aphid | Fiber crops | Cotton | (E)-7,11-Dimethyl-3-methylene-1,6,10-dodecatriene | | | |
| *Dysaphis plantaginea* | Rose apple aphid | Pomme fruit / Pome | Apple, pear, quince | (1S,2R,3S)-2-(1-Formylvinyl)-5-methylcyclopentanecarbaldehyde | (1R,4aS,7S,7aR)-Hexahydro-4,7-dimethylcyclopenta[c]pyran-1-ol | (4aS,7S,7aR)-Tetrahydro-4,7-dimethylcyclopenta[c]pyranone | 2-Phenylacetonitrile |
| *Planococcus ficus* | Vine mealybug | Vine / Woody vine | Grapes | (S)-5-Methyl-2-(prop-1-en-2-yl)-hex-4-enyl 3-methyl-2-butenoate | (S)-5-Methyl-2-(prop-1-en-2-yl)-hex-4-enyl 3-methylbutanoate | (S)-5-Methyl-2-(prop-1-en-2-yl)-hex-4-en-1-ol | |
| *Quadraspidiotus perniciosus* | San Jose scale | Pomme fruit / Pome | Apple, pear, quince | (Z)-3,7-Dimethyl-2,7-octadienyl propionate | (E)-3,7-Dimethyl-2,7-octadienyl propionate | 3-Methylene-7-methyl-7-octenyl propionate | |
| *Quadraspidiotus perniciosus* | San Jose scale | Stone fruit / Drupe | Peach, nectarine, cherries, plums | (Z)-3,7-Dimethyl-2,7-octadienyl propionate | (E)-3,7-Dimethyl-2,7-octadienyl propionate | 3-Methylene-7-methyl-7-octenyl propionate | |

For forestry applications, device D is in one embodiment used for controlling one or more of the following insects:
Agrilus planipennis, Anoplophora glabripennis, Cinara cupressivora, Cinara pinivora, Dendroctonus frontalis, Dendroctonus ponderosae, Dendrolimus sibiricus, Dendroctonus valens, Gonipterus scutellatus, Heteropsylla cubana, Hypsipyla grandella, Hypsipyla robusta, Ips sexdentatus, Ips subelongatus, Ips typographus, Leptocybe invasa, Lymantria dispar, Lymantria monacha, Orthotomicus erosus, Phoracantha recurva, Phoracantha semipunctata, Sirex noctilio, Thaumetopoea pityocampa, Thaumetopoea processionea.

Typically, in agricultural applications, especially crop protection applications, device D is used such that 1 to 20 devices are placed per hectare. In one embodiment, 2 to 15 devices D are placed per hectare. In one embodiment, 3 to 10 devices D are placed per hectare.

Depending on the target crop, the target insect, the nature of the field it is used in, device D can be placed on the ground or in a height above ground level of up to 5 meters, preferably on ground level or in a height above ground level of up to 2 meters.

Device D is used to disperse the active ingredient in such amounts to achieve the desired effect. For example, semiochemicals like pheromones are dispensed in amounts that are sufficiently high to disrupt the mating of the target insects.

Typically device D is used in agricultural applications such that it dispenses such semiochemicals such as pheromones in an amount of 0.1 to 65 mg/hour when the device operates.

It is one advantage of the use of device D in agricultural applications that the duration and the timing of the operation of device D can be adjusted to various parameters, for example the daylight, the season of the year, the temperature, the humidity or other environmental or weather parameters.
For example it is advantageous for some applications if device D only dispenses pheromones during the hours of the day when the target insects are active (e.g. during day). In some cases it is advantageous of pheromones are only dispensed when it is not raining.

In one embodiment, device D comprises one or more sensors to determine the time, the date, the temperature, the humidity, the atmospheric pressure or other environmental parameters so that the operation of device can be automatically linked to such external parameters. In one embodiment, such external parameters will be processed by an integrated circuit or a computer that can control the operation of device D accordingly using a predefined schedule.

In one embodiment, device D comprises a communication module for providing wired or wireless communication with a data server, in order to control the operation of device D.

In one embodiment, device D comprises a communication module for providing wired or wireless communication with the purpose of communicating to a data server, computer or mobile device like mobile phone information about the operating state of device D, possible failures or errors during operation or the filling status of the container containing the active ingredient.

In the context of an expensive substance, for example when the substance comprises a pheromone, which is in liquid form at ambient temperature, it is necessary to avoid wasting said substance. Thus, in this case, the desire is to convey an amount of liquid that is sufficiently small for the flow to take place without formation of drops, but nevertheless sufficiently large for the evaporation zone to remain permanently wetted in spite of the airflow sent through the aeration system. This physical phenomenon is governed in the cold state by Jurin's law and in the hot state by Darcy's law.

Darcy's law is formulated as Q = KA(ΔH)/L, where Q is the volumetric flow rate, K is the hydraulic conductivity, A is the area of the section studied, ΔH is the difference in the piezometric heads upstream and downstream of the sample, and L is the length of the sample. The hydraulic conductivity is calculated with the formula K = kρg/µ, where k is the intrinsic permeability of the porous medium, ρ is the density of the fluid, g is the acceleration due to gravity, and µ is the viscosity of the fluid.

Jurin's law corresponds to the formula h = (2γcos(θ))/(rρg), where h is the height of the liquid, γ is the surface tension of the liquid, θ is the angle of contact between the liquid and the wall of the micro-pipes, ρ is the density of the liquid, r is the radius of the micro-pipes, and g is the gravitational constant.

Conditions are desired in which, in the cold state, K is too low for there to be flow, meaning the existence of a situation referred to as "capillary", and in which, in the hot state, there is sufficient flow for there to be surface spreading and for the liquid to adhere to the surface. The layer of liquid adhering to the surface changes ΔH and there is a fixed flow rate because K has reached a maximum value.

The two most important parameters are thus the viscosity of the fluid and the temperature.

In one exemplary embodiment, cosθ is positive, meaning that the substance wets the distributor member, made for example of ceramic, the density of the liquid is between 0.6 and 1 g/cm³, and the radius of the micro-pipes is between 5 nm and 1 µm.

In the cold state, the surface area of evaporable liquid is thus very low: sum of the micro-pipes, liquid contracted and cold (therefore dependence on the volatility of the liquid). For pheromones, there is zero evaporation in the cold state.

The drop in the dynamic viscosity of the substance with the heat supplied by the heating member allows the fluid to flow within the distributor member under Darcy's law and then to spread over the surface of said distributor member. Without heat input, the flow is fixed since the sum of adhesions within the distributor member obeys Jurin's law. In other words, flow is allowed through the distributor member in the hot state but stopped at ambient temperature by the force of adhesion between the fluid and the surface of the distributor member.

During flow, more energy is required to form a drop that will detach than is required to keep the solution within the distributor member and the storage container. This stems from two conditions:
1. the dynamic viscosity of the substance must not be too low in the temperature range that can be achieved with the aid of the heating member, and
2. the liquid leaving the reservoir must be in equilibrium with atmospheric pressure; this can be implemented in several ways. For example, the liquid-free part in the storage container is under negative pressure. Alternatively, a pressure management system for the liquid-free part of the container ensures this equilibrium.

Herein, the term "micro-pipe" will be used for a pipe having a cross-sectional area of between 10⁻⁴ and 10⁶ µm².

According to one embodiment, the distributor member has a porous body comprising pores, said pores constituting at least a part of the micro-pipes of the distributor member.

According to one embodiment, the pores have an average diameter of between 0.01 and 10 µm.

According to one embodiment, the porous body has a cylindrical shape.

According to one embodiment, the supply of active ingredient is received in a recess.

According to one embodiment, the recess is a blind recess and is provided parallel to the axis of the porous body.

According to one embodiment, the porous body comprises a protuberance that is arranged on an upper part of said porous body and extends along a longitudinal axis of the porous body and that is configured to receive the active ingredient.

According to one embodiment, the distributor member has a peripheral membrane that is arranged around the porous body and is pierced with holes that constitute micro-pipes.

According to one embodiment, the porous body has a porosity in an inner part of the porous body that is less than a porosity in an outer part of the porous body surrounding the inner part. This makes it possible to control the flow rate in the porous body with the low porosity and to increase exchanges with the air with the high surface porosity.

According to one embodiment, the porous body has a wooden, textile, ceramic, metal (e.g. sintered stainless steel) or polymer wick.
In one embodiment, the porous body has a wick made of ceramic.
In one embodiment, the porous body has a ceramic wick made of silica.
In the context of this application, the term ceramic shall comprise silica.

According to one embodiment, the heating member is positioned directly on a surface of the porous body.

According to one embodiment, the porous body has at least one recess accommodating at least a part of the heating member.

According to one embodiment, the distributor member comprises a hollow needle configured to pierce a membrane seal of the storage container and/or to move a membrane forming a flap valve of the storage container and to convey the active ingredient contained in the storage container to the evaporation surface.

According to one embodiment, the needle is disposed at one of the ends of the porous body. Such a needle can also be employed in combination with a "self-healing" perforable stopper accommodated in the inlet of the storage container, that is to say a mass of elastic material that elastically closes up the perforation made by the needle, such that there is no flow after the latter has been withdrawn.

According to one embodiment, a path from the storage container to an outlet of the micro-pipes in the evaporation zone constitutes a micro-pipe only along a fraction of a length of the path.

In one embodiment, the pores (the micropipes) have a number average diameter from 0.01 and 10 µm.

According to one embodiment, the micro-pipes have a cross section of between 10⁻⁴ µm² and 10⁶ µm², preferably between 0.1 µm² and 10³ µm².

In one embodiment, the micro-channels have a number average cross section of between 10⁻⁴ µm² and 10⁶ µm², preferably between 0.1 µm² and 10³ µm².

According to one embodiment, the ratio of the internal cross section of the pipe of the aeration system to an external cross-sectional area of the evaporation zone is between 1.2 and 625.

According to one embodiment, the device also has a fastening member that is orientable in terms of direction and/or inclination with respect to the pipe of the aeration system, in order to orient the pipe with respect to the ground when the fastening member is fastened to a support.

According to one embodiment, the aeration system has at least one fan installed in a part of the pipe.

According to one embodiment, the aeration system has at least one fan installed in the part of the pipe that is at the opposite end from its mouth into the open air.

According to one embodiment, the aeration system has openings made in an end wall of the pipe and adjustable shutters equipping said openings so as to make it possible to adjust a flow cross section of the openings.

According to one embodiment, the device comprises a regulator member for regulating an airflow in the pipe, said regulator member being configured to control the fan and/or the shutters in order to regulate an airflow in the pipe.

According to one embodiment, the airflow in the aeration system of the unit according to the invention is associated with a regulator member that is able to control the turbulence of the flow of air in the evaporation zone; the regulator member can be controlled by at least one temperature sensor that detects the temperature of the flow of air and/or that of the porous body, or by at least one speed sensor that detects the speed of the flow of air.

According to one embodiment, the regulator member is configured to output a signal acting on the speed of rotation of the fan generating the airflow in the aeration system and/or a signal acting on the adjustable shutters.

According to one embodiment, the airflow in the aeration system is between 0.2 and 60 m³/h.

According to one embodiment, the pipe is equipped with a sensor for the speed and the temperature of the flow of air.

In one embodiment, the nozzle is equipped with a sensor for the speed and the temperature of the flow of air; the turbulence of the air, where the active ingredient is dispersed, is controlled by virtue of at least one temperature sensor that detects the temperature of the flow of air and/or that of the porous body.

According to one embodiment, the turbulence of the air, where the active ingredient is dispersed, is controlled by virtue of at least one temperature sensor measuring the temperature of the distributor member and/or the temperature of the flow of air.

According to one embodiment, the device also comprises a control device configured to control the heating member depending on a setpoint temperature in the distributor member.

According to one embodiment, the heating member comprises at least one circuit board and at least one electrical resistor supplied with electrical power by the circuit board. The electrical resistor can be disposed on said circuit board, or away therefrom.

According to one embodiment, the control device is arranged on the circuit board.

According to one embodiment, the distributor member is equipped with a temperature sensor, for example at a free end.

According to one embodiment, the setpoint temperature is defined depending on the active ingredient.

According to one embodiment, the control device is connected to a detector configured to detect a tag on the storage container that indicates the active ingredient contained in the container, and the control device determines, depending on said tag, at least one operating parameter of the device selected from the setpoint temperature, an airflow, and time indications defining an on/off cycle. Such time indications include for example cycle start dates, cycle end dates, cycle durations, inter-cycle duration, etc.

According to one embodiment, the control device has a memory in which a table of values associating active ingredients with setpoint temperatures is stored.

According to one embodiment, the device also has a communication module for providing wired or wireless communication with a data server, in order to modify the table of values.

According to one embodiment, the invention also provides a unit for dispersing in the air, as a vapor, a active ingredient in liquid form at ambient temperature, having:
- an abovementioned device, and
- at least one storage container that contains the active ingredient and is connected to the distributor member.

According to one embodiment, the active ingredient has a viscosity that is variable depending on the temperature, said viscosity being such that the active ingredient cannot flow through the micro-pipes in the distributor member at an ambient temperature below a first temperature, and the heating member is configured to heat the distributor member to a second temperature higher than the first temperature such that the active ingredient flows through the micro-pipes in the distributor member under capillary action.

According to one embodiment, the active ingredient at the second temperature spreads as a liquid over a surface of the distributor member situated in the aeration system.

According to one embodiment, the heating member is configured to regulate a flow rate of the active ingredient through the distributor member by modifying a viscosity of the active ingredient without vaporizing the active ingredient.

According to one embodiment, the second temperature is chosen such that the active ingredient flows at a flow rate that is sufficiently low to avoid the formation of drops that detach from the distributor member and sufficiently high for the evaporation zone to remain permanently wetted in spite of the airflow sent through the aeration system.

According to one embodiment, the storage container has a drain orifice that is connected to the distributor member and oriented downward when the unit is in a use position.

When not in use in the unit, that is to say before the container is connected to the distributor member or after it has been disconnected from the distributor member, such a storage container can be provided with a stopper arranged at the drain orifice.

According to one embodiment, the storage container does not have any other opening than the drain orifice, said storage container containing, besides the liquid active ingredient, a gas phase that takes up at least 20% of the volume of the storage container.

According to one embodiment, the storage container has an outer reservoir and an inner reservoir accommodated in the outer reservoir, the inner reservoir being linked to the distributor member through the drain orifice and having a vent connected to the atmosphere at an opposite end from the drain orifice, a communication orifice between the outer reservoir and the inner reservoir being arranged close to the drain orifice, the outer reservoir having no other opening than the communication orifice.

According to one embodiment, the storage container is mounted in a removable manner in the device and configured to be able to be removed from the device without loss of active ingredient.

According to one embodiment, the storage container is mounted in the device by screwing or snap-fastening.

According to one embodiment, the distributor member has a first surface that faces the storage container and is provided with a seal providing a sealed connection between the distributor member and the storage container, and a second surface arranged in the aeration system.

According to one embodiment, the storage container comprises a seal arranged around the drain orifice, so as to provide a sealed connection between the storage container and the distributor member.

According to one embodiment, the storage container comprises a cellular retention member arranged in the container adjacent to the drain orifice so as to limit flow of the active ingredient.

According to one embodiment, the heating member and the storage container are disposed on either side of the distributor member.

According to one embodiment, the cellular retention member comprises a material chosen from a felt, for example a wool felt, and a melamine foam.

According to one embodiment, a link between a storage container and its associated distributor member is ensured by means of a feed line equipped with a shutoff solenoid valve at the outlet of the container.

According to one embodiment, a distribution regulator means is inserted between the active ingredient storage container and the distributor member.

According to one embodiment, the distribution regulator means is an adjustable-opening valve.

According to one embodiment, the valve has only two adjustment positions, namely open or closed.

According to one embodiment, the flow-rate regulator means is an electrically powered pump.

According to one embodiment, the active ingredient has a boiling point of between 30°C and 400°C at atmospheric pressure.

According to one embodiment, the active ingredient has a viscosity greater than 1 cPa.s at 25°C, for example greater than 8 cPa.s at 25°C, and less than 1 cPa.s at 60°C.

According to one embodiment, the active ingredient is a liquid comprising at least one compound taken from the group formed by semiochemical substances, and phytosanitary and agricultural agents.

According to one embodiment, the active ingredient is a liquid containing at least one semiochemical substance, at least one pheromone, an allomone or a kairomone, of natural or synthetic origin.

According to one embodiment, the active ingredient is a liquid containing at least one sexual or non-sexual pheromone, an allomone, a synomone or a kairomone intended to bring about a positive or negative response relative to the target species, the result of which in terms of behavior can be sexual confusion, confusion of another kind, sexual attraction, attraction of another kind, repulsion of any kind, among arthropods, including arachnids, or including hexapods, in particular insects, including harmful insects.

According to one embodiment, the active ingredient is a liquid containing at least one pheromone or a sexual pheromone, an allomone, a synomone or a kairomone intended to bring about a positive or negative response relative to the target species.

According to one embodiment, the active ingredient comprises a solvent chosen from isopropyl myristate, dipropylene glycol, dipropylene glycol monomethyl ether, esters like acetic acid esters and an isoparaffinic hydrocarbon, for example an isoparaffin L or P or N or V.

According to one embodiment, the unit has a plurality of storage containers that each contain an active ingredient in liquid form or a plurality of active ingredients in liquid form that are miscible with one another.

According to one embodiment, all or part of the set of storage containers is carried externally by the pipe of the aeration system.

According to one embodiment, all or part of the set of storage containers can be carried externally by the pipe of the aeration system or the extension nozzle thereof.

According to one embodiment, each storage container is associated with a porous body of the distributor member, all of the porous bodies being fitted inside the pipe of the aeration system and being disposed with the porous bodies offset in a longitudinal direction of the pipe.

According to one embodiment, all of the porous bodies are fitted inside the pipe or the nozzle of the aeration system and can be disposed with the porous bodies offset appropriately so as to avoid any obstruction that impedes the passage of the flow of air.

The invention also provides a method for using the device or the unit, wherein the axis of the pipe of the aeration system is oriented in terms of direction and/or inclination so as to reach an area intended to be treated.

In order to make the present invention easier to understand, embodiments shown in the appended drawings will now be described by way of purely illustrative and nonlimiting examples.

In the drawing:
- Figure 1 shows a perspective view, with a cutaway, of a first embodiment of the unit according to the invention;
- Figure 2 shows a perspective view, similar to figure 1, of a unit according to an embodiment variant capable of dispersing a plurality of liquids in the same pulsed flow of air;
- Figure 3 shows a perspective exterior view of a unit according to a second embodiment;
- Figure 4 shows a cross section through the unit in figure 3 on the section plane II-II positioned in figure 5;
- Figure 5 shows a cross-sectional view on a horizontal plane positioned on its line III-III in figure 4;
- Figure 6 is a simple detail diagram of the assembly of the perforator member secured to the porous body;
- Figure 7 shows the flow of the active ingredient through the unit in figure 4;
- Figure 8 shows the flow of the air through the unit in figure 4;
- Figure 9 shows a porous body with the heating members according to another embodiment;
- Figure 10 shows a perspective exterior view of a unit according to a third embodiment;
- Figure 11 shows a cutaway view of the unit in figure 10;
- Figure 12 shows a storage container, a sealing zone of which is realized by a seal;
- Figure 13 shows a storage container, a sealing zone of which is realized by a sponge;
- Figure 14 shows a storage container, according to one embodiment, that is entirely closed;
- Figure 15 shows a storage container according to one embodiment with two reservoirs;
- Figure 16 is an enlarged detail view, which shows the insertion of the storage container into the unit before the opening of a flap valve of the storage container by the needle of the distributor member;
- Figure 17 is a view similar to figure 16, which shows the insertion of the storage container after the opening of the flap valve.

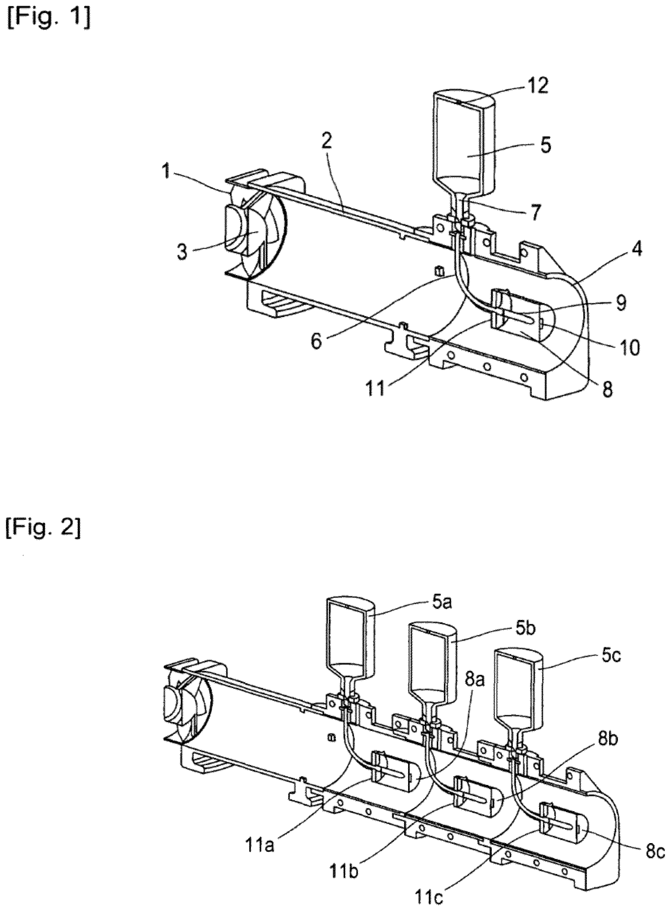

According to a first embodiment illustrated in figure 1, the unit is made up of a ventilation system comprising an electric fan 1, the output of which takes place on the axis of a cylindrical pipe 2, the flow of air pulsed by the electric fan 1 passing through a gate 3. The constituent elements of this gate can be profiled to act on the flow of air inside the pipe 2. Fitted in the continuation of the pipe 2 is a nozzle 4 with the same diameter as the pipe 2, to which it is connected. The nozzle 4 leads into the open air on the opposite side from its region connected to the pipe 2.

Externally, the nozzle 4 carries a storage container 5, which is intended to receive the active ingredient intended to be diffused in the flow of air pulsed by the electric fan 1. The storage container 5 has an outlet made in its wall, which rests on the nozzle 4; this outlet supplies a feed line 6 having an inside diameter of about 800 µm; the feed line has a length of about 3 cm; the inlet of the feed line 6 is equipped with a solenoid valve 7, which makes it possible to stop the system, in particular in the event of an emergency. The feed line 6 connects the storage container 5 to a cylindrical porous body 8 made of ceramic, which has a cylindrical axial blind recess 9, in which the end of the feed line 6 is engaged in a sealed manner. Placed on the end face of the porous body 8 where the feed line 6 has not been introduced is a thermometer chip 10, which is able to measure and transmit the temperature of the porous body 8. This cylinder 8 carries, on its opposite face to the one where the thermometer chip 10 is located, a heating member 11. The porous body 8 is made of alumina and has pores with a diameter of 100 nm and a uniform porosity of 40%.

Fitted on the surface of the storage container 5 is an electronic tag 12, which makes it possible to identify the semiochemical placed in the container 5. This electronic tag takes the form of a label comprising an RFID ("radiofrequency identification") chip. Provided in the top part of the container 5 is a liquid-tight opening that makes it possible to keep the interior of the container at atmospheric pressure. The porous body 8 is chosen depending on the active ingredient to be diffused. It is possible for the porous body 8 and the feed line 6 to be able to be formed in a single piece and/or to be integral.

The information relating to the inherent characteristics of the active ingredient, to the characteristics chosen for the porous body 8 and/or to the temperature of the porous body 8, is information that is sent to an electronic controller (not shown), which ensures, automatically, those adjustments that are useful for modifying to the desired value the ratio of the airflows, that is to say the ratio between the airflow without the electric fan and the airflow generated by the fan, and the temperature of the porous body 8 quantifying the evaporated flow of the pheromone liquid in the gaseous flow produced by the unit according to one of the variants of the control method described.

The active ingredient is drawn into the feed line 6 by a capillary pumping force generated by the fact that the active ingredient moves in micro-pipes, the walls of which are wetted by the active ingredient on account of its surface tension. Of course, the materials used are sufficiently neutral so as not to deteriorate the mixture in the long term and so that the surface tensions are not changed. The capillary force is brought about by the nature of the surface, which is made up of channels or pores that are sufficiently narrow to generate capillary traction; the liquid wets the materials of the feed line 6 and of the porous body 8. The liquid is thus level with the end of the pores of the porous body, the set of pores making up the evaporation surface thus situated at the periphery of the porous body 8.

It is necessary for the traction and capillary retention force to allow the liquid to be level with the end of the pores of the evaporation surface; however, this has to be effected without allowing uncontrolled spreading over the evaporation surface via the forces brought about by the gravitational fields (attraction of the Earth and hydrostatic pressure of the column of liquid that may be present) or by the static attractive forces generated by the interactions between the liquid and the rest of the surface of the wick. This capillary traction only exists by renewal of this final volume block (the section/cylinder of liquid at the end of the pore). The renewal of this volume is effected by evaporation and is governed by the equilibrium of the concentrations of the liquid and gas molecules at the liquid and gas interface in accordance with a value that is inherent to each liquid and dependent mainly on the temperature (at atmospheric pressure), namely the saturation vapor pressure. Increasing the temperature of the liquid to be evaporated causes an increase in the saturation vapor pressure, and thus a shift in the equilibrium of the concentrations of liquid and gas molecules at the interface toward gas molecules: there is evaporation until there is a new equilibrium. If the gas phase is moving, the equilibrium is never achieved, and evaporation continues until the liquid phase is exhausted. The more the gas phase moves (and tends to evacuate the gas-phase molecules more quickly), the faster the evaporation.

It has been found that, in a system of the type described above, the evaporation kinetics are multiplied by a factor of between 1 and 10 when passing from a fan speed of 0 to 24 m/s; moreover, if the liquid is changed from 20°C to 70°C, the evaporation kinetics are increased by being multiplied by a factor of between 20 and 100.

The parameters of the described system can be adjusted by acting on the fan 1 (action on the airflow) and/or by acting on the heating member, in this case an electric heater 11, also known as a resistor, placed on the evaporation surface. The measurement that can be taken by means of the thermometer 10 makes it possible to adjust the intensity or the activation time of the electric heater in order to obtain the desired temperature of the desired evaporation surface. It is also possible to provide at the free end of the nozzle 4 disruptors for the flow of air blown or convectors for modifying the area over which the active ingredient is dispersed.

Figure 2 shows an embodiment variant of the unit, in which said unit is equipped with three separate storage containers 5a, 5b, 5c, which are respectively associated with distributor members made up of porous bodies 8a, 8b, 8c, quite similar to the porous body 8 described above for the variant in figure 1. Associated with each porous body is an electric heater 11a, 11b, 11c, which is placed on the outer surface of the porous body. The porous bodies 8a, 8b, 8c are offset with respect to one another in the air blowing path, which is defined by the nozzle 4, such that the fact that the number of porous bodies has been increased avoids the formation of an obstruction that impedes the passage of the air. In figure 2, the porous bodies 8a, 8b, 8c are placed in series, but in an embodiment variant that is not shown, the porous bodies can be disposed in parallel.

The user of the unit, whether it be a unit of the type in figure 1 or of the type in figure 2, will thus vary operation by acting on the temperature of the porous body or bodies 8, 8a, 8b, 8c, by acting on the resistors associated with the porous bodies and by acting on the fan speed (electric power supply to the fan 1). All of these functions can be easily combined on a controller (not shown) and so the operation of the unit according to the invention can be rendered entirely automatic, the electronic tag 12 making it possible to distinguish the liquids to be diffused. The controller may have a connection antenna, which makes it possible to transfer information from the controller to the user or vice versa. Alternatively, operation can be remote-controlled by the user via a smartphone, for example.

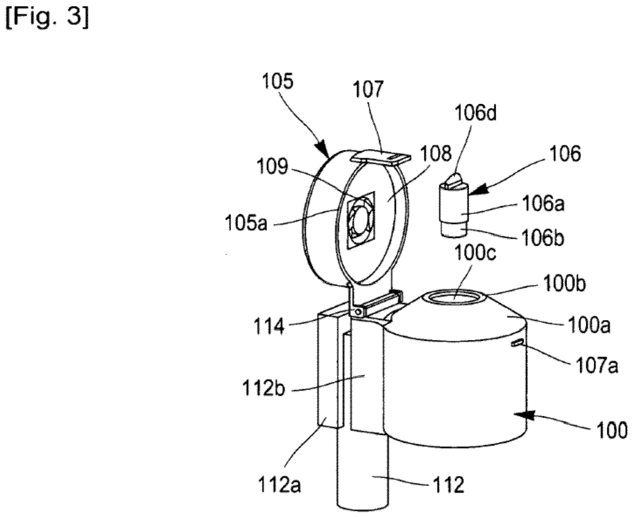

According to a second embodiment, illustrated in figure 3, the unit has a cylindrical casing of vertical axis that is denoted 100 as a whole; said casing is supported, around 1.50 m away from the ground, by a stand 112, to the top of which it is mechanically coupled by two clamping jaws 112a, 112b; the jaw 112b is secured to the casing 100. The upper part of the casing 100 has the shape of a cone frustum 100a, the upper edge 100b of which delimits a circular opening 100c on the opposite side from the ground. The frustoconical wall 100a is able to be covered by a cover denoted 105 as a whole; the cover 105 is hinged to the jaw 112b by means of a pin 114; the pin 114 is perpendicular to the axis of the stand 112.

When it is open, as shown in figure 3, the cover 105 completely opens up the orifice 100c and makes it possible to introduce, into the casing 100, a cylindrical storage container denoted 106 as a whole. The container 106 contains the liquid active ingredient intended to be diffused as a vapor in the ambient air. The container 106 has two parts: the upper part 106a is made of strong plastics material, while the lower part 106b has a wall that is easy to perforate. The container 106 is provided, in its upper part, with a gripping tab 106d.

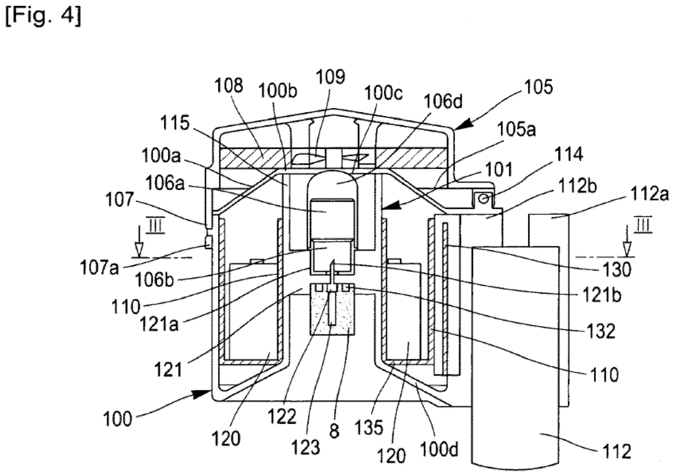

With reference to figure 4, when the cover 105 is in the closed position, the position of the cover with respect to the casing 100 is maintained by means of a closing element 107 secured to the cover 105. The closing element 107 cooperates with an appropriate snap-fastener 107a of the casing 100. An element of the cover 105 butts against the part 106a of the container 106 in order to press the bottom of the part 106b against the bottom of a housing 121, which will be described below. When the cover 105 is in the closed position, its lower edge 105a is located in line with the cone frustum 100a, which forms the top part of the casing 100; but it leaves a free space between the bottom of the cover 105 and the cone frustum 100a. Placed in the bottom of the cover 105 is a filter 108 in the form of a circular flat flange, with the same axis as the cover 105; when the cover 105 is closed, the axis of the flange filter 108 becomes that of the casing 100. Fitted in the central recess made in the flange filter 108 is a fan component 109, which is supplied with electric power by a conductor (not shown) carried by the wall of the cover 105. The air is sucked in by the fan 109 through the space provided between the cover 105 and the cone frustum 100a; it then passes through the flange filter 108 and passes in line with the circular opening 100c. The casing 100 has on its inside a structure 101 that connects the cone frustum 100a of its upper part to a frustoconical flare 100d, which forms the lower base of the casing 100. Provided between the part of smallest cross section of the flare 100d and the part of smallest cross section of the edge 100b of the orifice 100c is a cylindrical wall 115, inside which, approximately half-way up, there is disposed a cross brace 121 provided to support, in its central part, the container 106. The central part of the cross brace 121 has a housing 121a that is open in the direction of the cover 105; positioned in this housing is the part 106b of the storage container 106. The bottom of the housing 121a has a raised perforator member 121b, formed by a needle 133, the end of which is beveled: this needle is able to perforate the bottom of the part 106b of the storage container 106 when the latter is positioned by an operator in its intended position 121a. The needle 121b defines a capillary passage 134 in the direction of a cylindrical porous body 8 formed from sintered alumina. The porous body 8 has pores with a diameter of 100 nm and a uniform porosity of 40%. The needle 121b is pressed into a guide hole 122, in a sealed manner retained by bonding, and feeds a blind pipe 123 made along the longitudinal axis of the porous body 8.

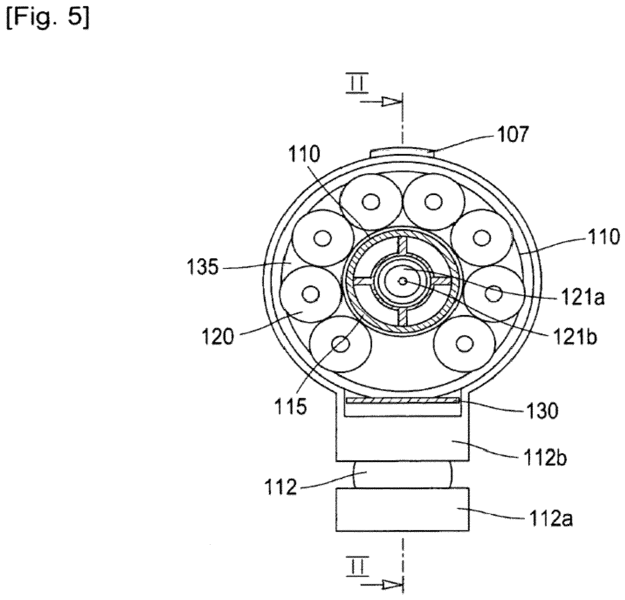

Located around the central part of the structure, which has just been described and which is denoted generally by the reference 101, is another cylindrical wall 110, coaxial with the cylindrical wall, which delimits the zone of the storage reservoir 106 and extends around the porous body 8. This cylindrical wall 110 is secured to a bottom, which is formed by a flange 135 connecting the two cylindrical walls 110 and 115 together; disposed on this flange 135 are electric batteries 120 distributed regularly about the axis of the casing 100; the assembly (110, 115, 135) forms a barrel, as is clearly visible in figure 5. The batteries 120 supply the energy necessary for the operation of the unit according to the invention.

These batteries are connected to a control board 130, which is accommodated in the part of the jaw 112b positioned tangentially to the battery barrel. The board 130 is electrically connected, on the one hand, to the motor of the fan 109 and, on the other hand, to heating members 132 inserted into the porous body 8, in particular on the face thereof inserted into the radial arms of the cross brace 121.

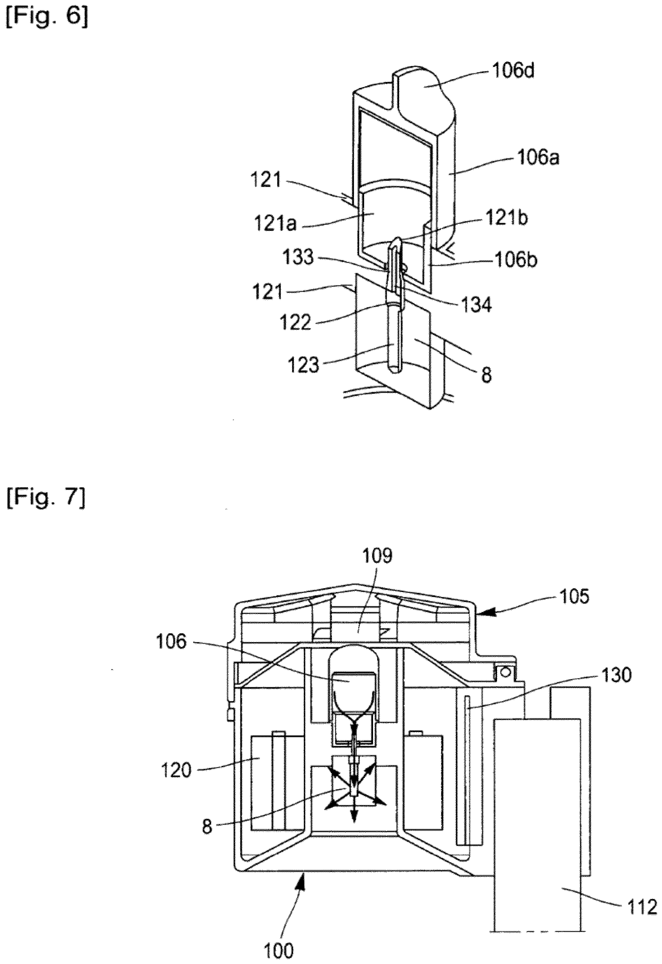

In the unit that has just been described, the active ingredient conveyed by the storage container 106 is distributed, as soon as the cover 105 has effected the perforation of the container 106b with the perforator element 121b, through the porous body 8, the evaporation zone of which is the free surface as indicated by the arrows in figure 7.

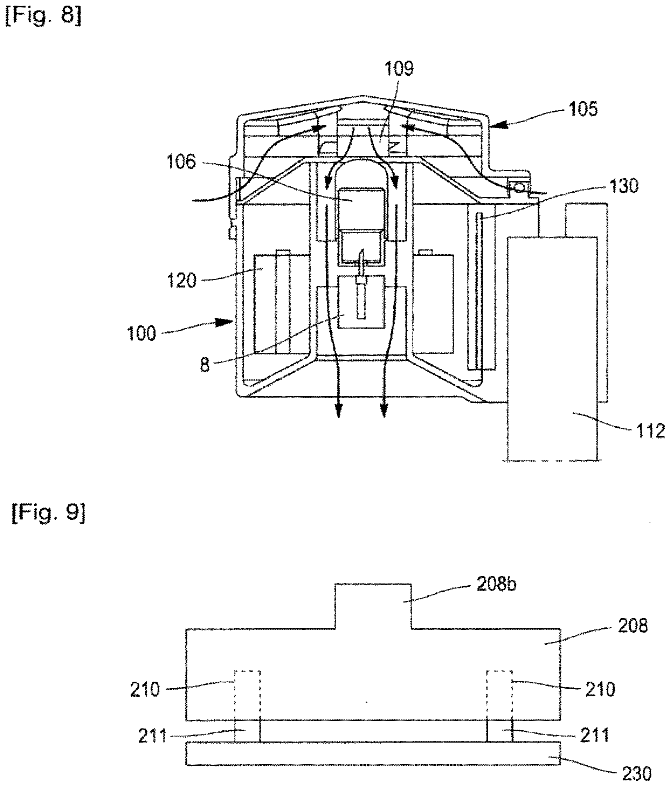

With reference to figure 8, air, which ensures the evaporation, penetrates under the cover 105, into which it is sucked by the fan 109; this air flows around the storage container 106, crosses the cross brace 121 and is evacuated to the outside by passing through the frustoconical flare 100d, after it has been charged with the vapor of the active ingredient in the evaporation zone formed by the free surface of the porous body 8. The flow of the air is indicated by arrows.

The airflow and the temperature of the heating body are regulated by the control board 130.

Preferably, the active ingredient and the porous body 8 have physical properties that allow regulation of the flow rate by temperature control in the porous body 8.

In particular, in a preferred embodiment:
- there is no substantial flow at ambient temperature, that is to say for example in a temperature range of between 0°C and 30°C,
- the flow and the evaporation take place above a setpoint temperature T that can be achieved by the heating members 132.

The control board 130 controls the heating members 132 on the basis of a control program stored in its memory. This program defines for example the distribution start and end times, the setpoint temperatures, the airflows (in the event of forced ventilation), etc.

In an embodiment that is not shown, the solenoid valve of the first and second embodiments can be replaced by a manual valve. It can also be eliminated in each of the embodiments.

An embodiment variant of the porous body is illustrated in figure 9. The porous body 208 has a cylindrical shape surmounted by a protuberance 208b. This protuberance will make it possible to conduct the active ingredient toward the rest of the porous body when the cartridge is mounted in the unit. On the opposite face of the porous body from the one bearing the protuberance, two recesses 210 are provided for each accommodating a heating member 211. The heating members 211 are electrical resistors supplied with power by an electric circuit 230.

In this embodiment variant, the porous body can have either a uniform porosity or a nonuniform porosity. In the latter case, the open porosity is 25% at the core and 45% at the surface. This will then be a porous body in which the open porosity, i.e. the volume of pores per unit volume of the porous body, increases from the core to the evaporation surface. This therefore favors the greatest possible spread over the entire surface of the porous body at the outlet of the pores, and the mechanical integrity of the porous body is preserved with a denser core.

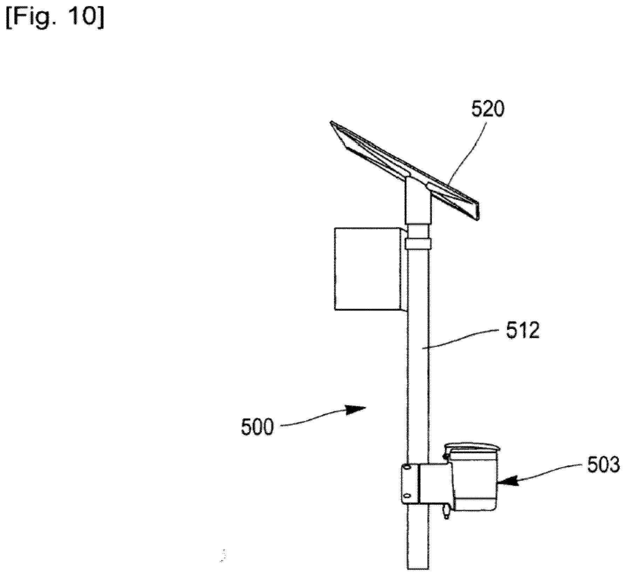

A third embodiment of the unit is illustrated in figure 10. The unit 500 has a casing of vertical axis 503; said casing is supported, about 1.50 m away from the ground, by a stand 512, to the top of which solar panels 520 are fastened for supplying the unit 500 with energy. The casing 503 is mechanically attached to the stand by two clamping jaws 512a, 512b; the jaw 512b is secured to the casing 503. Preferably, a hinge (not shown) is arranged between the jaw 512b and the casing 503 to make it possible to adjust the orientation of the casing 503.

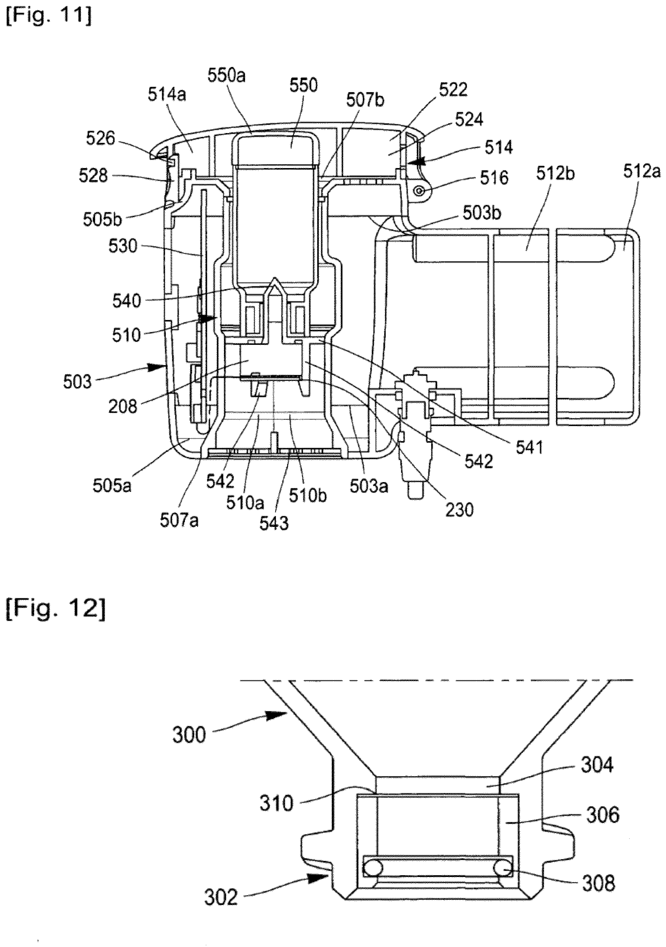

With reference to figure 11, the casing 503 has the shape of a cylinder of square directrix. The upper edge 503b of the casing delimits a square upper opening with rounded corners on the side away from the ground, and the lower edge 503a of the casing delimits a square lower opening with rounded corners on the side facing the ground. The upper opening is covered in a sealed manner by an upper piece 505b and the lower opening is covered in a sealed manner by a lower piece 505a. The upper and lower pieces each have a central opening 507a, 507b, the two central openings having the same central axis.

The upper piece 505b is able to be covered by a cover 514; the cover 514 is hinged by means of a pin 516 perpendicular to the axis of the stand 512.

When it is open, the cover 505 completely opens up the central opening 507b and makes it possible to introduce, into the casing 503, a cylindrical storage container denoted 550 as a whole. The container 507 contains the active ingredient, e.g. the pheromone, intended to be diffused as a vapor in the ambient air.

When the cover 514 is in the closed position, as illustrated in figure 11, the position of the cover with respect to the casing 503 is maintained by means of a closing element 526 secured to the cover 514. The closing element 526 cooperates with an appropriate snap-fastener 528 on the upper piece 505b. An element of the cover 514 butts against the part 550a of the container 550 so that the needle 540 pierces the stopper of the container 550 and in order to keep the container in position in the casing. When the cover 514 is in the closed position, its lower edge 514a is located in line with the lateral walls of the upper piece 507b, which forms the top part of the casing 503. The lower edge 514a has an opening 522 so as to allow air to circulate in the casing 503. In order to prevent dust from entering through the opening 522, a filter 524 is positioned behind the opening.

The casing 503 also comprises a hollow cylinder 510 formed of two identical hollow half-cylinders 510a, 510b. These two half-cylinders, when they are joined together, sandwich the porous body 208, which is surmounted by a needle 540 and rests on the heating member, the electrical circuit 230 of which is shown. The needle is fastened to the porous body by virtue of clips 542 extending longitudinally from a flange 541 at the base of the needle 540. The two half-cylinders, when they are joined together, also sandwich a filter 543 at their base, and two fans (not shown) at the join between the lateral walls of the half-cylinders. The assembly formed by the needle and the porous body is maintained by a groove inside the walls of the cylinder, the groove accommodating the flange 541. The filter is fastened to the cylinder in an identical manner. Finally, the cylinder 510 is held between the upper piece 507b and lower piece 507a in line with the openings of these pieces 507b, 507a, the upper and lower pieces sandwiching the cylinder 510.

The solar panels are connected to a control board 530, which is housed in a housing between the walls of the casing 503, the hollow cylinder 510 and the upper and lower pieces. The board 530 is electrically connected, on the one hand, to the fans and, on the other hand, to the heating member, the electrical circuit 230 of which is shown.

With reference to figure 12, the storage container 300 has an opening 304 in its lower part 302. The opening is equipped with a stopper so as to prevent the active ingredient from flowing when the storage container is not in use. This stopper is made up of a ring 306 supporting an O-ring 308, and a membrane 310 bonded to the ring. The membrane comprises a sheet of aluminum that is leaktight and perforable or movable in the manner of a flap valve.

The storage container may be provided to be removable, in particular because this makes it easier to change the storage container at lower cost. According to an embodiment that is not shown, the stopper then also comprises a flap valve configured to close when the storage container is withdrawn from the unit. In this case, it is impossible to remove the storage container unless the entire porous body is soaked with the active ingredient contained in the porous body.

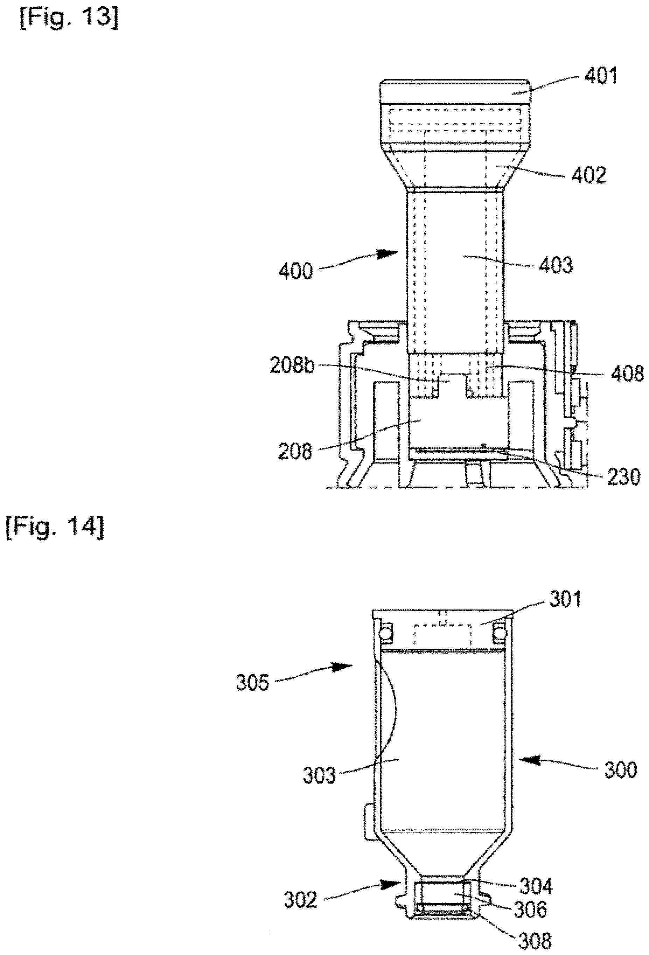

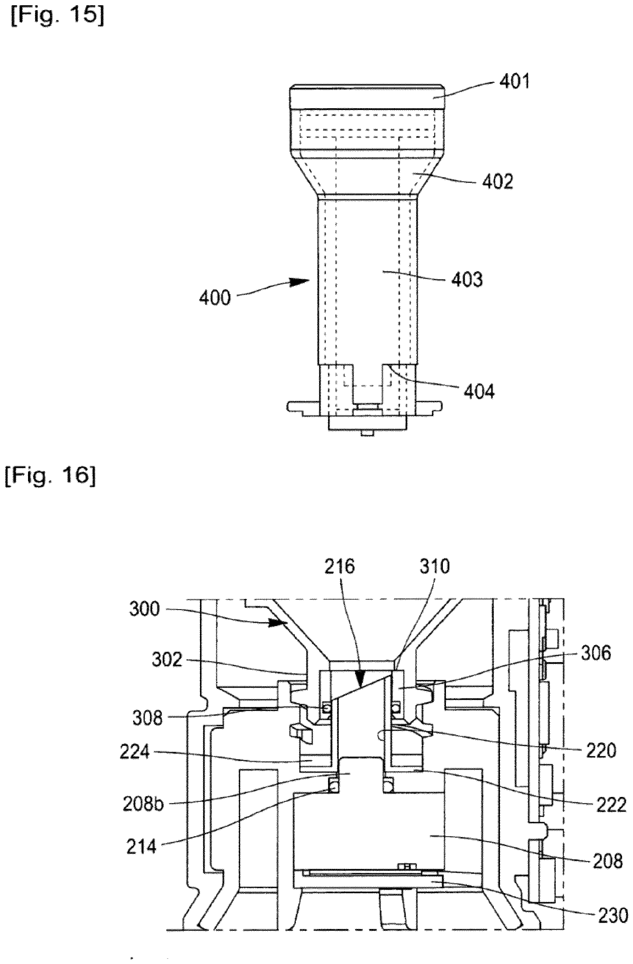

As an alternative to the use of a needle and a flap valve, the storage container may contain a sponge, as illustrated in figures 13 and 15. The protuberance 208b of the porous body comes into contact with another porous body forming a retention member, in this case a sponge 408, that is contained in the storage container and forms one of the free ends thereof. The sponge 408 is then compressed by the porous body 208 to ensure good contact. The transfer from a porous body 208b to the retention member by contact and by capillary traction can take place. The storage container is then removable and the liquid will not flow from the container when contact with the porous body 208b is broken, in the same way as liquid does not flow from the porous body 208 during operation in the cold state (ambient temperature). This sponge 408 is generally made of wool felt or melamine. In conclusion, the sponge is preferably flexible and slightly compressible by the porous body 208 to ensure contact.

Generally, the storage container is held on the unit by pressure, for example by virtue of clips, or by screwing the top of the storage container. In any case, contact between the storage container and the porous body is sealed on account of the presence of a seal.

In order for the adhesion of the active ingredient to the porous body 208 to be sufficient, one of the parameters to be controlled is the pressure inside the storage container. Specifically, if the storage container is open to the open air, the adhesion of the active ingredient will never be sufficient to compensate for the force of gravity acting on the liquid. It is therefore necessary to deal with this force of gravity. Two types of storage containers can be used. The first type of storage container is a reservoir that is completely closed apart from at one of its ends, which is in contact with the porous body. This type of storage container is illustrated in figure 14. The storage container 300 comprises a single reservoir 303 surmounted by a sealed closure 301. The lower part 302 of the storage container comprises a stopper as described in figure 12. Each time a drop flows toward the porous body, the negative pressure increases in the top part 305 of the storage container, that is to say the part in which there is no or no longer any liquid. In order for the flow to take place in full, it is necessary, right from the fitting of the storage container 300 in the unit, to leave a sufficiently large volume without liquid in the reservoir, i.e. approximately a volume of 40% compared with the total volume of the reservoir. Thus, the negative pressure will gradually increase and prevent free flow, but will never be enough to completely prevent flow toward the surface of the porous body.

With reference to figure 15, the storage container 400 comprises an outer reservoir 402 that is completely closed apart from at its end in contact with the inner reservoir 403. The inner reservoir 403 is surmounted by a vent 401 at its upper end, the vent allowing balancing of the pressures between the air outside and the inside of the inner reservoir. The inner reservoir 403 is in contact with the porous body at its lower end. Thus, each time a drop flows toward the porous body, the inner reservoir 403 is balanced by its vent 401, and brings about a drop in level. By way of a vessel communicating via the junction 404 between the two reservoirs, the outer reservoir 402 fills the inner reservoir 403, but then the negative pressure in the outer reservoir 402 increases in the part of the reservoir where there is no or no longer any liquid. In this way, the inner reservoir 403 is balanced with the negative pressure in the outer reservoir 402. The inner reservoir 403 can still depart from this equilibrium, however, by virtue of its vent 401 and the traction realized by the porous body of the distributor member. In order for the flow to be able to take place normally, during the fitting of the storage container 400 in the unit, the outer reservoir 402 is completely filled with the active ingredient.

The above-described retention member can also be employed in the storage container 400. In the storage container 400, the retention member, for example made of sponge or cellular foam, can take up all or part of the inner reservoir 403.

With reference to figure 16, the device for dispersing the active ingredient contained in the storage container 300 comprises the above-described porous body 208, the base of which cooperates with the heating member, the electrical circuit 230 of which is shown. The protuberance 208b of the porous body is surmounted by a hollow needle 220, the protuberance 208b interlocking with the base 222 of the needle. The base 222 extends radially until it covers the upper surface of the porous body. In order to ensure a sealed connection between the protuberance and the needle, an O-ring 214, completely surrounding the protuberance, is positioned between the protuberance and the needle. The upper part 216 of the needle takes the form of a bevel in order to more easily pierce the stopper of the storage container as described in figure 12 and figure 14. The storage container 300 is introduced into the device by way of its lower part 302. The storage container is held in the device by screwing. When the screwing of the lower part 302 of the container starts, the needle penetrates into the ring 306 and then comes into contact laterally with the O-ring 308 supported by the ring such that the connection between the needle and the stopper is sealed. Next, while the screwing continues, the needle moves toward the membrane 310 bonded to the ring.

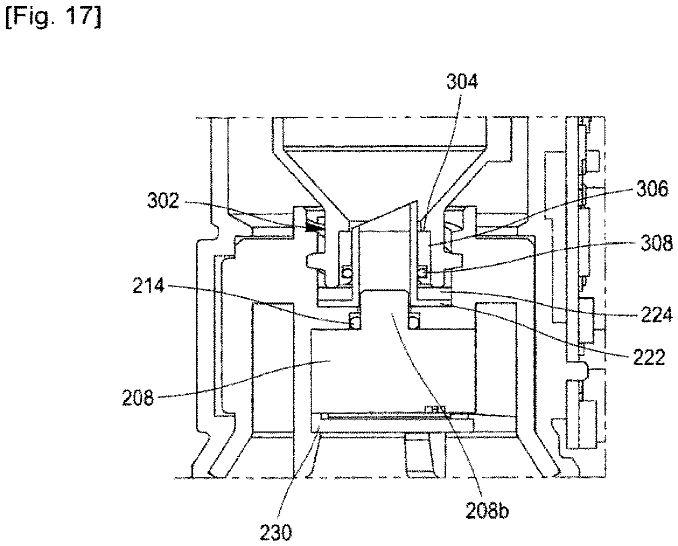

At the end of the screwing, the bevel of the needle reversibly moves the membrane 310 in the manner of a flap valve, as illustrated in figure 17. The lower part 302 of the container comes into contact with a seal 224 positioned in the radial extension of the base 222 of the needle. The active ingredient can then flow through the interior of the needle. The needle guides the active ingredient as far as the protuberance. The active ingredient could also follow the micro-pipes in the porous body 208 in order to reach the evaporation surface.

If it is necessary to change the storage container, for example because it is empty or it is necessary to change the active ingredient, the container is unscrewed. When the needle no longer passes through the membrane, the latter closes again, thereby preventing the active ingredient from flowing.

In a variant of the storage container 300, the above-described cellular retention member is employed instead of the membrane 310. In this case, the distributor member does not have a needle but a porous body, which comes into direct contact with the cellular retention member to exert the capillary traction as described above.

Some of the elements described herein, in particular the control device, the control boards or the electronic controllers, can be realized in different forms, in a unitary or distributed manner, by means of hardware and/or software components. Hardware components that are usable are application-specific integrated circuits (ASIC), field programmable logic arrays (FPGA) or microprocessors. A local clock and/or a network clock can be integrated into these elements in order to provide time references.

Although the invention has been described in connection with a number of particular embodiments, it is clear that it is in no way limited thereto and that it comprises all the technical equivalents of the means described and the combinations thereof where these enter into the scope of the invention.

The use of the verb "have", "comprise" or "include" and the conjugated forms thereof does not preclude the presence of other elements or other steps than those set out in a claim.

In the claims, any reference sign between parentheses should not be interpreted as limiting the claim.

The use and the methods of use according to the invention allow for the efficient use of active ingredients such as semiochemicals like pheromones in agricultural applications. They require the use of only a small number of devices D per area and do not require the application or installation before the season and removal after the season of high numbers of small containers containing active ingredient from the field. They allow for efficient use of active ingredients like pheromones. They are environmentally friendly. They can be adjusted to external parameters like daylight, season, weather, temperature, humidity, pest pressure, type of crop, type of pest et cetera. They dispense a vapor, as opposed to droplets, which is more easily dispersed and travels further to reach more insects.
They can be integrated with other devices and sensors.
They allow for a feedback loop to give a positive indication of dispensing, or a fault indication if the active is not being dispensed.

### Examples

The mating disruption efficacy of different sexual pheromone blends dispersed by the device D according to claim 1 were tested against agricultural lepidopteran pests. Semi-field tests were carried out following the CIRCE methodology (Doye and Koch, 2005, described in: Doye, E. and Koch, U.T. (2005). A reliable field test for the efficiency of mating disruption techniques. IOBC-WPRS Bulletin 28(7): 325-328). In a cage, an unmated moth female attracts a defined number of male moths by emitting the attractant mating pheromone. The females are placed and kept above a sticky plate in a delta-trap so that the males who find the females are trapped. The lower the number of males caught in the female-baited trap, the greater the effectiveness in mating disruption. Results are shown in Table 1.

**Table 1.**

| | | | | Total nr. of males captured in delta traps | | | |
|---|---|---|---|---|---|---|---|
| Crop | Pest | Devices per ha | Pheromone release per dispenser | Untreated area | Treated area using device D | Mating disruption efficacy | |
| Grapes | *Lobesia botrana* | 10 | 6 mg/hour | 184 | 10 | 95% | |
| Grapes | *Lobesia botrana* | 5 | 10 mg/hour | 81 | 1 | 99% | |
| Grapes | *Lobesia botrana* | 3 | 10 mg/hour | 135 | 2 | 99% | |
| Apples | *Cydia pomonella* | 3 | 10 mg/hour | 67 | 2 | 95% | |
| Grapes | *Lobesia botrana* | 3 | *14 mg/hour | 69 | 1 | 99% | |
| | *Eupoecilia ambiguella* | | | 51 | 5 | 90% | |

| | | | | | | | |
|---|---|---|---|---|---|---|---|
| *Release of a mixture of pheromones targeting 2 pests. | | | | | | | |

## Claims

1. Use of a device D in agricultural applications, forestry or home and garden applications, wherein said device D is used for dispensing in the air, as a vapor, an active ingredient that is liquid at ambient temperature,
wherein device D contains:
- an aeration system that contains a pipe (2, 4, 510) opening into the open air and is configured to allow an airflow to pass through the pipe;
- at least one distributor member (8, 208) that is in fluid connection with a storage container and is intended to be supplied with a liquid active ingredient from said storage container, said distributor member containing a porous body (8, 208) that contains micro-channels forming an outlet arranged in said pipe in order to constitute an evaporation zone for the active ingredient therein, wherein the pores present in said porous body are at least a part of the micro-pipes of the distributor member;
- a heating member (11, 211, 132) arranged on or in the distributor member so as to control a flow of the active ingredient through the distributor member.

2. Use according to claim 1, wherein said active ingredient has a boiling point of between 30°C and 400°C at atmospheric pressure.

3. Use according to any of claims 1 to 2, wherein said active ingredient is a repellent or a semiochemical substance (such as a pheromone, an allomone or a kairomone, in each case of natural or synthetic origin).

4. Use according to any of claims 1 to 3, wherein said active ingredient is a pheromone.

5. Use according to any of claims 1 to 4, wherein said active ingredient is selected from
(1S)-4,6,6-trimethyl bicyclo[3.1.1]hept-3-en-2-one;
3,7-dimethyl-bicyclo[3.1.1]hept-3-en-2-ol;
4,6,6-trimethyl-, [1S-(1a,2b,5 a)]-2,6-octadienal;
(3,3-dimethylcyclohexylidene)-acetaldehyde;
mixture of (2Z) (3,3-dimethylcyclohexylidene)-acetaldehyde and (2E) (3,3-dimethylcyclohexylidene)-acetaldehyde;
2-methyl-6-methylene-2,7-octadien-4-ol;
(2E) 2-(3,3-dimethylcyclohexylidene)-ethanol;
cis-1-methyl-2-(1-methylethenyl)-cyclobutaneethanol;
(2Z)- 2-(3,3-dimethylcyclohexylidene)-ethanol;
2-methyl-6-methylene-7-Octen-4-ol;
4-methyl-5-Nonanone;
(5E)-5-Decen-1-ol;
(5Z)- 5-Decen-1-ol;
4-methyl-5-Nonanol;
(2E,4E,6Z)-2,4,6-Decatrienoic acid methyl ester;
(2E,4Z)-2,4-Decadienoic acid methyl ester;
4,6-dimethyl-7-hydroxy-nonan-3-one;
mixture of (4R,6S,7S)-(.+-.)-4,6-dimethyl-7-hydroxy-nonan-3-one and (4R,6R,7R)-(.+-.)-4,6-dimethyl-7-hydroxy-nonan-3-one;
(8E,10E)-8,10-Dodecadien-1-ol;
(5E)- 5-Decen-1-ol, acetate;
(3Z)- 3-Decen-1-ol, acetate;
(5Z)- 5-Decen-1-ol, acetate;
(7Z)- 7-Decen-1-ol, acetate;
(8Z)- 8-Dodecen-1-ol;
(9Z)- 9-Dodecen-1-ol;
(8E,10E)-8,10-Dodecadien-1-ol acetate;
(7E,9Z)-7,9-Dodecadien-1-ol acetate;
11-tetradecenal;
Mixture of (11E)- 11-Tetradecenal, and (11Z)-11-Tetradecenal;
(11Z)- 11-Tetradecenal;
(9Z)- 9-Tetradecenal;
(9Z, 12E)-9, 12-Tetradecadien-1-ol;
(7Z)- 7-Tetradecen-2-one;
11-Dodecen-1-ol acetate;
(7E)-7-Dodecen-1-ol acetate;
(8E)-8-Dodecen-1-ol acetate;
(9E)-9-Dodecen-1-ol acetate;
8-Dodecen-1-ol -1-acetate;
Mixture of (8E)- 8-Dodecen-1-ol -1-acetate and (8Z)-8-Dodecen-1-ol -1-acetate;
(5Z)-5-Dodecen-1-ol acetate;
(7Z)-7-Dodecen-1-ol acetate;
(8Z)- 8-Dodecen-1-ol acetate;
(9Z)-9-Dodecen-1-ol acetate;
(11E)-11-Tetradecen-1-ol;
(11Z)-11-Tetradecen-1-ol;
(6E)-7,11-dimethyl-3-methylene-1,6,10-Dodecatriene;
4-tridecen-1-ol acetate;
Mixture of (4E)- 4-tridecen-1-ol acetate and (4Z)- 4-tridecen-1-ol acetate;
(4Z)-4-Tridecen-1-ol acetate;
(11Z,13Z)-11,13-Hexadecadienal;
(9E,11E)-9,11-Tetradecadien-1-ol acetate;
(9Z,12E)-9,12-Tetradecadien-1-ol acetate;
(9Z,11E)-9,11-Tetradecadien-1-ol acetate;
(11Z)-11-Hexadecenal;
(9Z)-9-H exadecenal;
(11Z)-11-Tetradecen-1-ol acetate;
(11E)-11-Tetradecen-1-ol acetate;
(9E)-9-Tetradecen-1-ol acetate;
(7Z)-7-Tetradecen-1-ol acetate;
(8Z)-8-Tetradecen-1-ol acetate;
(9Z)-9-Tetradecen-1-ol acetate;
(11E)-11-Hexadecen-1-ol;
(11Z)-11-Hexadecen-1-ol;
(8Z)-14-methyl-8-Hexadecenal;
6-acetoxy-5-Hexadecanolide;
(13Z)-13-Octadecenal;
(11Z)-11-Hexadecen-1-ol acetate;
(11E)-11-Hexadecen-1-ol acetate;
2,13-Octadecadien-1-ol acetate;
Mixture of (2E,13Z)- 2,13-Octadecadien-1-ol acetate and (3E,13Z)- 2,13-Octadecadien-1-ol acetate;
(7Z)-7-Eicosen-11-one;
(13Z)-13-Octadecen-1-ol acetate;
(6Z)-6-Heneicosen-11-one;
(9Z)-9-Tricosene;
3-methyl-2-Cyclohexen-1-one;
1-Octen-3-ol;
(3R)-1-Octen-3-ol;
Mixture of 8-Dodecen-1-ol acetate and -(8Z)-Dodecen-1-ol;
Mixture of (8Z)-8-Dodecen-1-ol acetate, (8E)-8-Dodecen-1-ol acetate and (8Z)-8-Dodecen-1-ol;
5-Decen-1-ol acetate;
Mixture of (5E)-5-Decen-1-ol acetate and, and (5E)-5-Decen-1-ol;
Mixture of (11E)- 11-Tetradecen-1-ol acetate, and (9E,11E)- 9,11-Tetradecadien-1-ol acetate;
Mixture of Compounds with the CAS numbers [30820-22-5],[26532-23-0],[26532-24-1] and [26532-25-2];
L-carvone; citral; (E,Z)-7,9-dodecadien-1-yl acetate; ethyl formate; (E,Z)-2,4-ethyl decadienoate (pear ester); (Z,Z,E)-7,11,13-hexadecatrienal; heptyl butyrate; isopropyl myristate; lavanulyl senecioate; cis-jasmone; 2-methyl 1-butanol; methyl eugenol; methyl jasmonate; (E,Z)-2,13-octadecadien-1-ol; (E,Z)-2,13-octadecadien-1-ol acetate; (E,Z)-3,13-octadecadien-1-ol; (R)-1-octen-3-ol; pentatermanone; (E,Z,Z)-3,8,11-tetradecatrienyl acetate; (Z,E)-9,12-tetradecadien-1-yl acetate; (Z)-7-tetradecen-2-one; (Z)-9-tetradecen-1-yl acetate; (Z)-11-tetradecenal; (Z)-11-tetradecen-1-ol; extract of Chenopodium ambrosiodes; Neem oil; Quillay extract or mixtures thereof

6. Use according to any of claims 1 to 5, wherein said active ingredient is selected from
(E,Z)-7,9-Dodecadienyl acetate;
11-Dodecenyl acetate;
(E)-7-Dodecenyl acetate;
(E)-11-Tetradecenyl acetate;
(E)-9-Tetradecenyl acetate;
(E)-11-Hexadecenyl acetate;
(Z,Z)-7,11-Hexadecadienyl acetate;
(E,Z)-4,7-Tridecadienyl acetate;
(E,Z,Z)-4,7,10-Tridecatrienyl acetate;
(Z,Z,E)-7,11,13-Hexadecatrienal;
(Z,Z)-7,11-Hexadecadienal;
(Z)-11-Hexadecenal;
(Z)-11-Hexadecen-1-ol;
(Z)-11-Hexadecenyl acetate;
(Z)-7-Tetradecenal;
(Z,E)-7,11-Hexadecadienyl acetate;
(Z,E)-7,11-Hexadecadienal;
(Z,E)-9,12-Tetradecadien-1-ol;
(Z)-9-Tetradecen-1-ol;
(Z,E)-9,12-Tetradecadienyl acetate;
(E)-9-Tetradecenyl acetate;
(Z)-7-Dodecenyl acetate;
(E)-9-Tetradecenyl acetate;
(Z,E)-9,11-Tetradecadienyl acetate;
(E,Z)-10, 12-Hexadecadienal;
(E,E)-10, 12-Hexadecadienal;
(E)-7-Dodecenyl acetate;
(E)-8-Dodecenyl acetate;
(Z)-8-Dodecenyl acetate;
(Z)-7-Dodecenyl acetate;
(E,Z,Z)-3,8,11-Tetradecatrienyl acetate;
(E,Z)-3,8-Tetradecadienyl acetate;
(E,Z)-3,7,11-Trimethyl-2,6,10-dodecatrien-1-ol; (Z)-3,7,11-Trimethyl-1,6,10-dodecatrien-3-ol;
(E)-3,7-Dimethyl-2,6-octadien-1-ol;
3,7-Dimethyl-6-octen-1-ol;
2-(3,3-dimethylcyclohexylidene)- (2E)- Ethanol;
Cyclobutaneethanol, 1-methyl-2-(1-methylethenyl)-, cis-;
Ethanol, 2-(3,3-dimethylcyclohexylidene)-, (2Z)-;
cis-2-Isopropenyl-1-methylcyclobutaneethanol;
10-Methyltridecan-2-one;
8-Methyldecan-2-yl propionate;
Butyl butyrate;
(E)-2-Butenyl butyrate;
(Z,E)-4,4-(1,5-Dimethyl-4-heptenylidene)-1-methylcyclohexene;
Ethyl 2-propenoate;
4-Hydroxy-3-methoxybenzaldehyde;
(E)-2-Decenal;
1-Methyl-4-(1,5-dimethyl-(Z)-1,4-hexadienyl)-cyclohexene;
(1S,2R,4S)-4-(1 ,5-Dimethyl-(Z)-1 ,4-hexadienyl)-1 ,2-epoxy-1-methylcyclohexane;
(1R,2S,4S)-4-(1,5-Dimethyl-(Z)-1,4-hexadienyl)-1 ,2-epoxy-1-methylcyclohexane;
Hexyl hexanoate;
(E)-2-Hexenyl hexanoate;
Octyl butyrate;
3-Methyl-6-isopropenyl-9-decenyl acetate;
(Z)-3-Methyl-6-isopropenyl-3,9-decadienyl acetate;
(E)-7,11-Dimethyl-3-methylene-1,6,10-dodecatriene;
(1S,2R,3S)-2-(1-Formylvinyl)-5-methylcyclopentanecarbaldehyde;
(1R,4aS,7S,7aR)-Hexahydro-4,7-dimethylcyclopenta[c]pyran-1-ol;
(4aS,7S,7aR)-Tetrahydro-4,7-dimethylcyclopenta[c]pyranone;
2-Phenylacetonitrile;
(S)-5-Methyl-2-(prop-1-en-2-yl)-hex-4-enyl 3-methyl-2-butenoate;
(S)-5-Methyl-2-(prop-1-en-2-yl)-hex-4-enyl 3-methylbutanoate;
(S)-5-Methyl-2-(prop-1-en-2-yl)-hex-4-en-1-ol;
(Z)-3,7-Dimethyl-2,7-octadienyl propionate;
(E)-3,7-Dimethyl-2,7-octadienyl propionate;
3-Methylene-7-methyl-7-octenyl propionate
or mixtures thereof.

7. Use according to any of claims 1 to 6, wherein device D is used for controlling insects.

8. Use according to any of claims 1 to 7, wherein device D is used to disrupt the mating of insects.

9. Use according to any of claims 1 to 8, wherein device D is used to disrupt one or more type of insects from the order of Lepidoptera, Acarina, Coleoptera, Heteroptera, Homoptera, Diptera or hemiptera.

10. Use according to any of claims 1 to 9, wherein device D is used to protect agricultural crops.

11. Use according to any of claims 1 to 10, wherein device D is used to protect at least one of the following crops: fruits (e.g. pomes, stone fruits, or soft fruits, e.g. apples, pears, plums, peaches, quince, nectarines, dates, drupes, almonds, cherries, papayas, strawberries, raspberries, jujube, litchi, jackfruit, honeydew, currant, carambola, eggfruit, blackberries or gooseberries); blackheaded fruit; cereals(e.g. barley, wheat, corn, field corn, rice, oats, sorgum); olives, coconut, cocoa beans, castor oil plants, oil palms, ground nuts, cucurbits(e.g. squashes, pumpkins, cucumber or melons); citrus fruit (e.g. oranges, citrus, lemons, grapefruits or mandarins); vegetables (e.g. eggplant, spinach, lettuce (e.g. iceberg lettuce), turnips, allium vegetables (e.g. leek, onion); chicory, brassicas / cole crops(e.g. cabbage), asparagus, cabbages, carrots, onions, garlic, leeks, tomatoes, tuber crops (e.g. potatoes), fruiting vegetables (e.g. pepper, eggplant, tomatoes, cucurbits or sweet peppers); lauraceous plants (e.g. avocados, cinnamon, or camphor); beans; tobacco; nuts (e.g. walnuts, macadamia); pistachios; coffee; tea; bananas; vines or woody wines(e.g. grapes); oilseed crops (e.g. Canola, rapeseed, oilseed rape, raps, groundnuts, soybeans, sunflower);beet; sugarbeets; saccharum (e.g. sugar cane); fiber crops (e.g. cotton, flax); flowers (e.g. ornamental flowers); hop; sweet leaf (Stevia); natural rubber plants or ornamental and forestry plants, shrubs, broad-leaved trees or evergreens, eucalyptus; turf; lawn; trees; grass.

12. Use according to any of claims 1 to 11, wherein device D is used to protect during the growing of such crops or post harvest, e.g. during storage of the harvested crops.

13. Use according to any of claims 1 to 12, wherein device D is used such that 1 to 20 devices are placed per hectare.

14. Use according to any of claims 1 to 13, wherein device D dispenses such semiochemicals in an amount of 0.1 to 65 mg/hour.

15. Use according to any of claims 1 to 14, wherein the porous body has a wooden, textile, ceramic or polymer wick.

16. Use according to any of claims 1 to 15, wherein the aeration system has at least one fan (1) installed in a part of the pipe (2, 4, 510).

17. Use according to any of claims 1 to 16, wherein the control device is connected to a detector configured to detect a tag on the storage container (5, 300, 400, 550) that indicates the active ingredient contained in the container, and wherein the control device determines, depending on said tag, at least one operating parameter of the device selected from the setpoint temperature, an airflow, and time indications defining an on/off cycle. Such time indications include for example cycle start dates, cycle end dates, cycle durations, inter-cycle duration, etc.

18. Use according to any of claims 1 to 17, wherein device D comprises one or more sensors to determine the time, the date, the temperature, the humidity, the atmospheric pressure or other environmental parameters so that the operation of device D can be automatically controlled in relation to such external parameters.

19. Use according to any of claims 1 to 17, wherein said device D also comprises a communication module for providing wired or wireless communication with a data server, in order to control the operation of device D.

20. Use according to any of claims 1 to 19, wherein the active ingredient has a viscosity that is variable depending on the temperature, said viscosity being such that the active ingredient cannot flow through the micro-pipes in the distributor member at an ambient temperature below a first temperature, and wherein the heating member (11, 132, 211) is configured to heat the distributor member to a second temperature higher than the first temperature such that the active ingredient flows through the micro-pipes in the distributor member under capillary action.

21. Use according to any of claims 1 to 20, wherein the second temperature is chosen such that the active ingredient flows at a flow rate that is sufficiently low to avoid the formation of drops that detach from the distributor member and sufficiently high for the evaporation zone to remain permanently wetted in spite of the airflow sent through the aeration system.
